(19) Europäisches Patentamt
European Patent Office
Office européen des brevets

(11) EP 4 353 082 A1

(12) EUROPEAN PATENT APPLICATION

(43) Date of publication:
**17.04.2024 Bulletin 2024/16**

(21) Application number: **22201612.3**

(22) Date of filing: **14.10.2022**

(51) International Patent Classification (IPC):
***A01N 43/54** (2006.01)* ***A01N 43/56** (2006.01)*
***A01N 43/84** (2006.01)* ***A01P 13/00** (2006.01)*

(52) Cooperative Patent Classification (CPC):
(C-Sets available)
**A01N 43/54; A01P 13/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Bayer Aktiengesellschaft**
**51373 Leverkusen (DE)**

(72) Inventors:
- **FRACKENPOHL, Jens**
**51373 Leverkusen (DE)**
- **HELMKE, Hendrik**
**51373 Leverkusen (DE)**
- **GATZWEILER, Elmar**
**51373 Leverkusen (DE)**

(74) Representative: **BIP Patents**
**c/o Bayer Intellectual Property GmbH**
**Alfred-Nobel-Straße 50**
**40789 Monheim am Rhein (DE)**

# (54) HERBICIDAL COMPOSITIONS

(57) The present invention provides compositions comprising herbicidally active compounds (A) and (B), wherein (A) represents one or more compounds of the general formula (I) or agrochemically acceptable salts thereof

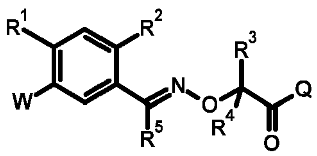

(I)

with residues $R^1$, $R^2$, $R^3$, $R^4$, $R^5$, Q, and W as defined in the description,
and (B) represents flumioxazin (B1) and/or pyraflufen-ethyl (B2).

The application further relates to a method and to the use of the herbicidal composition of the invention for controlling harmful plants or for regulating growth.

EP 4 353 082 A1

(52) Cooperative Patent Classification (CPC): (Cont.)

C-Sets
**A01N 43/54, A01N 43/56, A01N 43/84**

## Description

The invention lies in the technical field of crop protection products that can be used to counter unwanted plant growth on uncultivated land, for preparation of seed or in plant crops, and comprise a combination of at least two herbicides as herbicidally active compounds, wherein the compositions comprise herbicidally active compounds (A) and (B), in which (A) represents one or more compounds of the general formula (I) or agrochemically acceptable salts thereof and (B) represents one or more further herbicidally active compounds structurally distinct from compounds (A), specifically (B) is selected from (B1) flumioxazin (2-(7-fluoro-3-oxo-4-prop-2-ynyl-1,4-benzoxazin-6-yl)-4,5,6,7-tetrahydroisoindole-1,3-dione), and (B2) pyraflufen-ethyl (ethyl {2-chloro-5-[4-chloro-5-(difluoromethoxy)-1-methyl-1H-pyrazol-3-yl] -4-fluorophenoxy} acetate).

Compounds A of general formula (I) belong to the chemical class of substituted phenyl oximes and were already described as herbicidally active compounds and are published in WO2021/139482.

The compounds are effective as herbicides against a broad spectrum of harmful plants when applied by the pre-emergence method or else by the post-emergence method, with the possibility of non-selective use for control of unwanted plant growth or selective use in plant crops.

Compounds B, i.e. flumioxazin and/or pyraflufen-ethyl, belong to the herbicide class of inhibitors of the protoporphyrinogen IX oxidase (PPO inhibitors, WSSA 14/HRAC E). The compounds are effective as herbicides against a broad spectrum of harmful plants when applied by the pre-emergence method or else by the post-emergence method, with the possibility of non-selective use for control of unwanted plant growth or selective use in plant crops.

The efficacy of these herbicides against harmful plants is at a high level, but generally depends on the application rate, the form of the respective preparation, the spectrum of harmful plants, the harmful plants to be controlled in each case, climate and soil conditions, etc. A further criterion is the duration of action or the rate of degradation of the herbicide. Other considerations, as the case may be, are changes in the susceptibility of harmful plants which may occur on prolonged use of the herbicides or in a geographically restricted manner. Compensation for losses in action in the case of individual plants by higher application rates of the herbicides is only possible to a limited degree, for example because this frequently worsens the selectivity of the herbicides or because there is no improvement in action, even in the case of a higher application rate. There is generally a need for methods of achieving herbicidal action with a lower application rate of active ingredients. A lower application rate not only reduces the amount of active ingredient required for the application but generally also reduces the amount of formulation auxiliaries needed. Both reduce economic expenditure and improve the environmental compatibility of the herbicide treatment.

One way of improving the application profile of a herbicide may be to combine the active ingredient with one or more other active ingredients which contribute the desired additional properties. However, in the case of combined application of two or more active ingredients, it is not uncommon for there to be phenomena of physical and biological incompatibility, for example lack of stability in a coformulation, decomposition of an active ingredient and/or antagonism of the active ingredients. What are desired, by contrast, are combinations of active ingredients having a favourable profile of activity, high stability and ideally an unexpectedly synergistically enhanced activity which allows the application rate to be reduced compared to the individual application of the active ingredients to be combined.

It is an object of the present invention to provide alternative or advantageous herbicidal compositions that have a good profile of biological use and have as many as possible of the abovementioned desirable favourable properties.

It has now been found that, surprisingly, this object is achieved by using a composition comprising herbicidally active compounds (A) and (B), wherein (A) represents one or more compounds of the general formula (I) or agrochemically acceptable salts thereof [component (A)] and (B) represents one or both herbicides [component (B)] selected from the group of the active herbicidal compounds (B1) and (B2) as described below. The compositions of the invention interact in a particularly favourable manner, for example when they are used to control unwanted plant growth in crop plants such as wheat (hard and soft wheat), maize, soya, sugarbeet, sugarcane, cotton, rice, beans (for example, bush beans and broad beans), flax, barley, oats, rye, triticale, potato and millet/sorghum, uncultivated land, pastureland and areas of grass/lawn and plantation crops.

The present invention thus provides compositions comprising herbicidally active compounds (A) and (B), wherein

(A) represents one or more substituted phenyl oximes of the general formula (I) or agrochemically acceptable salts thereof [component (A)],

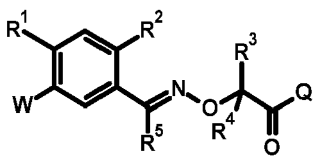

(I)

in which

W represents a group W-1 to W-3

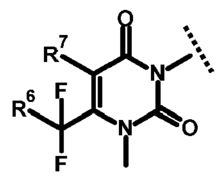
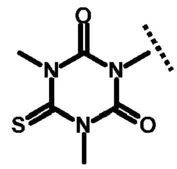
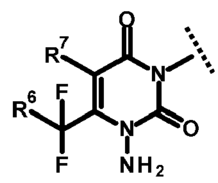

W-1 W-2 W-3

$R^1$ represents hydrogen, fluorine, chlorine, bromine, methoxy, ethoxy, prop-1-yloxy, prop-2-yloxy, but-1-yloxy, but-2-yloxy, 2-methylprop-1-yloxy, 1,1-dimethyleth-1-yloxy,

$R^2$ represents fluorine, chlorine, bromine, cyano, nitro, $C(O)NH_2$, $C(S)NH_2$, trifluoromethyl, difluoromethyl, pentafluoroethyl, ethynyl, propyn-1-yl, 1-butyn-1-yl, pentyn-1-yl, hexyn-1-yl,

$R^3$ and $R^4$ independently of each other represent hydrogen, $(C_1$-$C_8)$-alkyl, $R^{13}O$-$(C_1$-$C_8)$-alkyl, $(C_3$-$C_8)$-cycloalkyl, $(C_2$-$C_8)$-alkenyl, aryl-$(C_1$-$C_8)$-alkyl, heteroaryl-$(C_1$-$C_8)$-alkyl, heterocyclyl-$(C_1$-$C_8)$-alkyl, or

$R^3$ and $R^4$ together with the carbon atom to which they are bonded form a fully saturated or partly saturated 3- to 10-membered carbocyclic ring optionally having further substitution,

$R^5$ represents hydrogen, $(C_1$-$C_8)$-alkyl, $(C_1$-$C_8)$-haloalkyl, $R^{13}O$-$(C_1$-$C_8)$-alkyl, $(C_2$-$C_8)$-alkenyl, aryl-$(C_1$-$C_8)$-alkyl, heteroaryl-$(C_1$-$C_8)$-alkyl,heterocyclyl-$(C_1$-$C_8)$-alkyl, $(C_3$-$C_8)$-cycloalkyl, aryl, heteroaryl, heterocyclyl,

$R^6$ represents hydrogen, fluorine, chlorine, bromine, trifluoromethyl, difluoromethyl, methoxy, ethoxy, prop-1-yloxy, but-1-yloxy,

$R^7$ represents hydrogen, methyl,

Q represents hydroxy or a group Q-1, Q-2

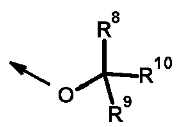
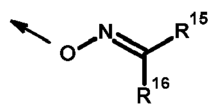

Q-1 Q-2

$R^8$ represents hydrogen, $(C_1$-$C_8)$-alkyl, $(C_1$-$C_8)$-haloalkyl, aryl, aryl-$(C_1$-$C_8)$-alkyl, heteroaryl, $(C_2$-$C_8)$-alkynyl, $(C_2$-$C_8)$-alkenyl, $C(O)R^{13}$, $C(O)OR^{13}$, $(C_1$-$C_8)$-alkoxy-$(C_1$-$C_8)$-alkyl,

$R^9$ represents hydrogen, $(C_1$-$C_8)$-alkyl,

$R^{10}$ represents hydrogen, halogen, cyano, nitro, $(C_1C_8)$-alkyl, $(C_1C_8)$-haloalkyl, $(C_3C_8)$-cycloalkyl, $(C_3C_8)$-cycloalkyl-$(C_1C_8)$-alkyl, $(C_3C_8)$-halocycloalkyl, $(C_3C_8)$-halo-cycloalkyl-$(C_1C_8)$-alkyl, $(C_2C_8)$-alkenyl, $(C_2C_8)$-alkynyl, aryl, aryl-$(C_1C_8)$-alkyl, heteroaryl, heteroaryl-$(C_1C_8)$-alkyl, heterocyclyl, heterocyclyl-$(C_1C_8)$-alkyl, $R^{11}R^{12}N$-$(C_1C_8)$-alkyl, $R^{13}O$-$(C_1C_8)$-alkyl, cyano-$(C_1C_8)$-alkyl, $(C_1C_8)$-alkylcarbonyloxy-$(C_1C_8)$-alkyl, $(C_3C_8)$-cycloalkylcarbonyloxy-$(C_1C_8)$-alkyl, arylcarbonyloxy-$(C_1C_8)$-alkyl, heteroarylcarbonyloxy-$(C_1C_8)$-alkyl, heterocyclylcarbonyloxy-$(C_1C_8)$-alkyl, $OR^{13}$, $NR^{11}R^{12}$, $SR^{14}$, $S(O)R^{14}$, $SO_2R^{14}$, $R^{14}S$-$(C_1C_8)$-alkyl, $R^{14}(O)S$-$(C_1C_8)$-alkyl, $R^{14}O_2S$-$(C_1C_8)$-alkyl, tris-[$(C_1C_8)$-alkyl]silyl-$(C_1C_8)$-alkyl, bis-[$(C_1C_8)$-alkyl](aryl)silyl$(C_1C_8)$-alkyl, [$(C_1C_8)$-alkyl]-bis-(aryl)silyl-$(C_1C_8)$-alkyl, tris-[$(C_1C_8)$-alkyl]silyl, bis-hydroxy-boryl-$(C_1C_8)$-alkyl, bis-[$(C_1C_8)$-alkoxy]boryl-$(C_1C_8)$-alkyl, tetramethyl-1,3,2-Dioxa-borolan-2-yl, tetramethyl-1,3,2-dioxaborolan-2-

yl-($C_1C_8$)-alkyl, nitro-($C_1C_8$)-alkyl, C(O)OR$^{13}$, C(O)R$^{13}$, C(O)NR$^{11}$R$^{12}$, R$^{13}$O(O)C-($C_1C_8$)-alkyl, R$^{11}$R$^{12}$N(O)C-($C_1C_8$)-alkyl, bis-($C_1C_8$)-alkoxy-($C_1C_8$)-alkyl, or

R$^8$ and R$^{10}$ together with the carbon atom to which they are bonded form a fully saturated or partly saturated 3- to 10-membered monocyclic or bicyclic ring optionally interrupted by heteroatoms and optionally having further substitution,

R$^{11}$ and R$^{12}$ independently of each other represent hydrogen, ($C_1$-$C_8$)-alkyl, ($C_2$-$C_8$)-alkenyl, ($C_2$-$C_8$)-alkynyl, ($C_1$-$C_8$)-cyanoalkyl, ($C_1$-$C_{10}$)-haloalkyl, ($C_2$-$C_8$)-haloalkenyl, ($C_3$-$C_8$)-haloalkynyl, ($C_3$-$C_{10}$)-cycloalkyl, ($C_3$-$C_{10}$)-halocycloalkyl, ($C_4$-$C_{10}$)-cycloalkenyl, ($C_4$-$C_{10}$)-halocycloalkenyl, ($C_1$-$C_8$)-alkoxy-($C_1$-$C_8$)-alkyl, ($C_1$-$C_8$)-haloalkoxy-($C_1$-$C_8$)-alkyl, ($C_1$-$C_8$)-alkylthio-($C_1$-$C_8$)-alkyl, ($C_1$-$C_8$)-haloalkylthio-($C_1$-$C_8$)-alkyl, ($C_1$-$C_8$)-alkoxy-($C_1$-$C_8$)-haloalkyl, aryl, aryl-($C_1$-$C_8$)-alkyl, heteroaryl, heteroaryl-($C_1$-$C_8$)-alkyl, ($C_3$-$C_8$)-cycloalkyl-($C_1$-$C_8$)-alkyl, ($C_4$-$C_{10}$)-cycloalkenyl-($C_1$-$C_8$)-alkyl, C(O)R$^{13}$, $SO_2R^{14}$, heterocyclyl, ($C_1$-$C_8$)-alkoxycarbonyl, bis-[($C_1$-$C_8$)-alkyl]aminocarbonyl-($C_1$-$C_8$)-alkyl, ($C_1$-$C_8$)-alkyl-aminocarbonyl-($C_1$-$C_8$)-alkyl, aryl-($C_1$-$C_8$)-alkyl-aminocarbonyl-($C_1$-$C_8$)-alkyl, aryl-($C_1$-$C_8$)-alkoxycarbonyl, heteroaryl-($C_1$-$C_8$)-alkoxycarbonyl, ($C_2$-$C_8$)-alkenyloxycarbonyl, ($C_2$-$C_8$)-alkynyloxycarbonyl, heterocyclyl-($C_1$-$C_8$)-alkyl, or

R$^{11}$ and R$^{12}$ together with the nitrogen atom to which they are bonded form a fully saturated or partly saturated 3- to 10-membered monocyclic or bicyclic ring optionally interrupted by heteroatoms and optionally having further substitution,

R$^{13}$ represents hydrogen, ($C_1$-$C_8$)-alkyl, ($C_2$-$C_8$)-alkenyl, ($C_2$-$C_8$)-alkynyl, ($C_1$-$C_8$)-cyanoalkyl, ($C_1$-$C_{10}$)-haloalkyl, ($C_2$-$C_8$)-haloalkenyl, ($C_3$-$C_8$)-haloalkynyl, ($C_3$-$C_{10}$)-cycloalkyl, ($C_3$-$C_{10}$)-halocycloalkyl, ($C_4$-$C_{10}$)-cycloalkenyl, ($C_4$-$C_{10}$)-halocycloalkenyl, ($C_1$-$C_8$)-alkoxy-($C_1$-$C_8$)-alkyl, ($C_1$-$C_8$)-haloalkoxy-($C_1$-$C_8$)-alkyl, ($C_1$-$C_8$)-alkoxy-($C_1$-$C_8$)-haloalkyl, ($C_1$-$C_8$)-alkoxy-($C_1$-$C_8$)-alkoxy-($C_1$-$C_8$)-alkyl, ($C_1$-$C_8$)-alkoxy-($C_1$-$C_8$)-alkoxy-($C_1$-$C_8$)-alkoxy-($C_1$-$C_8$)-alkyl, ($C_1$-$C_8$)-alkoxy-($C_1$-$C_8$)-alkoxy-($C_1$-$C_8$)-alkoxy-($C_1$-$C_8$)-alkoxy-($C_1$-$C_8$)-alkyl, aryl, aryl-($C_1$-$C_8$)-alkyl, aryl-($C_1$-$C_8$)-alkoxy-($C_1$-$C_8$)-alkyl, heteroaryl, heteroaryl-($C_1$-$C_8$)-alkyl,($C_3$-$C_8$)-cycloalkyl-($C_1$-$C_8$)-alkyl, ($C_4$-$C_{10}$)-cycloalkenyl-($C_1$-$C_8$)-alkyl, bis-[($C_1$-$C_8$)-alkyl]aminocarbonyl-($C_1$-$C_8$)-alkyl, ($C_1$-$C_8$)-alkyl-aminocarbonyl-($C_1$-$C_8$)-alkyl, aryl-($C_1$-$C_8$)-alkyl-aminocarbonyl-($C_1$-$C_8$)-alkyl, bis-[($C_1$-$C_8$)-alkyl]amino-($C_2$-$C_6$)-alkyl, ($C_1$-$C_8$)-alkyl-amino-($C_2$-$C_6$)-alkyl, aryl-($C_1$-$C_8$)-alkyl-amino-($C_2$-$C_6$)-alkyl, R$^{14}$S-($C_1$-$C_8$)-alkyl, R$^{14}$(O)S-($C_1$-$C_8$)-alkyl, R$^{14}$O$_2$S-($C_1$-$C_8$)-alkyl, hydroxycarbonyl-($C_1$-$C_8$)-alkyl, heterocyclyl, heterocyclyl-($C_1$-$C_8$)-alkyl, tris-[($C_1$-$C_8$)-alkyl]silyl-($C_1$-$C_8$)-alkyl, bis-[($C_1$-$C_8$)-alkyl](aryl)silyl($C_1$-$C_8$)-alkyl, [($C_1$-$C_8$)-Alkyl]-bis-(aryl)silyl-($C_1$-$C_8$)-alkyl, ($C_1$-$C_8$)-alkylcarbonyloxy-($C_1$-$C_8$)-alkyl, ($C_3$-$C_8$)-cycloalkylcarbonyloxy-($C_1$-$C_8$)-alkyl, arylcarbonyloxy-($C_1$-$C_8$)-alkyl, heteroarylcarbonyloxy-($C_1$-$C_8$)-alkyl, heterocyclylcarbonyloxy-($C_1$-$C_8$)-alkyl, aryloxy-($C_1$-$C_8$)-alkyl, heteroaryloxy-($C_1$-$C_8$)-alkyl, ($C_1$-$C_8$)-alkoxycarbonyl steht,

R$^{14}$ represents hydrogen, ($C_1$-$C_8$)-alkyl, ($C_2$-$C_8$)-alkenyl, ($C_2$-$C_8$)-alkynyl, ($C_1$-$C_8$)-cyano-alkyl, ($C_1$-$C_{10}$)-haloalkyl, ($C_2$-$C_8$)-haloalkenyl, ($C_3$-$C_8$)-haloalkynyl, ($C_3$-$C_{10}$)-cycloalkyl, ($C_3$-$C_{10}$)-halocycloalkyl, ($C_4$-$C_{10}$)-cycloalkenyl, ($C_4$-$C_{10}$)-halocycloalkenyl, ($C_1$-$C_8$)-alkoxy-($C_1$-$C_8$)-alkyl, ($C_1$-$C_8$)-alkoxy-($C_1$-$C_8$)-haloalkyl, aryl, aryl-($C_1$-$C_8$)-alkyl, heteroaryl, heteroaryl-($C_1$-$C_8$)-alkyl,heterocyclyl-($C_1$-$C_8$)-alkyl, ($C_3$-$C_8$)-cycloalkyl-($C_1$-$C_8$)-alkyl, ($C_4$-$C_{10}$)-cycloalkenyl-($C_1$-$C_8$)-alkyl, bis-[($C_1$-$C_8$)-alkyl]amino, ($C_1$-$C_8$)-alkylamino, aryl-($C_1$-$C_8$)-amino, aryl-($C_1$-$C_6$)-alkylamino, aryl-[($C_1$-$C_8$)-alkyl]amino; ($C_3$-$C_8$)-cycloalkylamino, ($C_3$-$C_8$)-cycloalkyl-[($C_1$-$C_8$)-alkyl]amino; N-azetidinyl, N-pyrrolidinyl, N-piperidinyl. N-morpholinyl, and

R$^{15}$ and R$^{16}$ independently of each other represent ($C_1$-$C_8$)-alkyl, ($C_3$-$C_8$)-cycloalkyl, aryl, heteroaryl, heterocyclyl.

and

(B) represents one herbicide [component (B)] selected from the following two herbicidally active compounds (B1) and (B2), or (B) represents a combination of (B1) and (B2):

(B1): Flumioxazin; IUPAC name: 2-(7-fluoro-3-oxo-4-prop-2-ynyl-1,4-benzoxazin-6-yl)-4,5,6,7-tetrahydroisoindole-1,3-dione;

(B2): Pyraflufen-ethyl; IUPAC name: Ethyl {2-chloro-5-[4-chloro-5-(difluoromethoxy)-1-methyl-1H-pyrazol-3-yl]-4-fluorophenoxy} acetate.

The definitions of radicals listed above in general terms or within areas of preference apply both to the end products of the general formula (I) and correspondingly to the starting materials or intermediates required for preparation in each case. These radical definitions can be combined with one another as desired, i.e. including combinations between the given preferred ranges. Primarily for reasons of higher herbicidal activity, better selectivity and/or better producibility, compounds of the abovementioned general formula (I) according to the invention or their salts or their use according to the invention are of particular interest in which individual radicals have one of the preferred meanings already specified or specified below, or in particular those in which one or more of the preferred meanings already specified or specified below occur in combination. With regard to the compounds according to the invention, the terms used above and further below will be elucidated. These are familiar to the person skilled in the art and especially have the definitions elucidated hereinafter.

Unless defined differently, names of chemical groups are generally to be understood such that attachment to the skeleton or the remainder of the molecule is via the structural element mentioned last, i.e. for example in the case of ($C_2$-$C_8$)-alkenyloxy via the oxygen atom and in the case of ($C_1$-$C_8$)-alkoxy-($C_1$-$C_4$)-alkyl or ($C_1$-$C_8$)-alkoxycarbonyl-($C_1$-$C_8$)-alkyl, in each case via the carbon atom of the alkyl group. In the case of specified groups, such as $OR^{13}$, $NR^{11}R^{12}$, $S(O)_mR^{14}$, $C(O)R^{13}$, $C(O)OR^{13}$, or $C(O)NR^{11}R^{12}$ the attachment to the skeleton is via the structural element mentioned first, i.e. for example in the case of $OR^{13}$ via the oxgyen atom and in the case of $C(O)OR^{13}$ via the carbonyl atom.

According to the invention, "alkylsulfonyl" - alone or as part of a chemical group - refers to straight-chain or branched alkylsulfonyl, preferably having 1 to 8 or 1 to 6 carbon atoms, for example (but not limited to) ($C_1$-$C_6$)-alkylsulfonyl such as methylsulfonyl, ethylsulfonyl, propylsulfonyl, 1-methylethylsulfonyl, butylsulfonyl, 1-methylpropylsulfonyl, 2-methylpropylsulfonyl, 1,1-dimethylethylsulfonyl, pentylsulfonyl, 1-methylbutylsulfonyl, 2-methylbutylsulfonyl, 3-methylbutylsulfonyl, 1,1-dimethylpropylsulfonyl, 1,2-dimethylpropylsulfonyl, 2,2-dimethylpropylsulfonyl, 1-ethylpropylsulfonyl, hexylsulfonyl, 1-methylpentylsulfonyl, 2-methylpentylsulfonyl, 3-methylpentylsulfonyl, 4-methylpentylsulfonyl, 1,1-dimethylbutylsulfonyl, 1,2-dimethylbutylsulfonyl, 1,3-dimethylbutylsulfonyl, 2,2-dimethylbutylsulfonyl, 2,3-dimethylbutylsulfonyl, 3,3-dimethylbutylsulfonyl, 1-ethylbutylsulfonyl, 2-ethylbutylsulfonyl, 1,1,2-trimethylpropylsulfonyl, 1,2,2-trimethylpropylsulfonyl, 1-ethyl-1-methylpropylsulfonyl and 1-ethyl-2-methylpropylsulfonyl.

According to the invention, "alkylthio" - alone or as part of a chemical group - denotes straight-chain or branched S-alkyl, preferably having 1 to 8 or 1 to 6 carbon atoms, such as ($C_1$-$C_{10}$)-, ($C_1$-$C_6$)- or ($C_1$-$C_4$)-alkylthio, for example (but not limited to) ($C_1$-$C_6$)-alkylthio such as methylthio, ethylthio, propylthio, 1-methylethylthio, butylthio, 1-methylpropylthio, 2-methylpropylthio, 1,1-dimethylethylthio, pentylthio, 1-methylbutylthio, 2-methylbutylthio, 3-methylbutylthio, 1,1-dimethylpropylthio, 1,2-dimethylpropylthio, 2,2-dimethylpropylthio, 1-ethylpropylthio, hexylthio, 1-methylpentylthio, 2-methylpentylthio, 3-methylpentylthio, 4-methylpentylthio, 1,1-dimethylbutylthio, 1,2-dimethylbutylthio, 1,3-dimethylbutylthio, 2,2-dimethylbutylthio, 2,3-dimethylbutylthio, 3,3-dimethylbutylthio, 1-ethylbutylthio, 2-ethylbutylthio, 1,1,2-trimethylpropylthio, 1,2,2-trimethylpropylthio, 1-ethyl-1-methylpropylthio and 1-ethyl-2-methylpropylthio.

According to the invention, "alkylsulfinyl (alkyl-S(=O)-)", unless defined differently elsewhere, denotes alkyl radicals which are attached to the skeleton via -S(=O)-, such as ($C_1$-$C_{10}$)-, ($C_1$-$C_6$)- or ($C_1$-$C_4$)-alkylsulfinyl, for example (but not limited to) ($C_1$-$C_6$)-alkylsulfinyl such as methylsulfinyl, ethylsulfinyl, propylsulfinyl, 1-methylethylsulfinyl, butylsulfinyl, 1-methylpropylsulfinyl, 2-methylpropylsulfinyl, 1,1-dimethylethylsulfinyl, pentylsulfinyl, 1-methylbutylsulfinyl, 2-methylbutylsulfinyl, 3-methylbutylsulfinyl, 1,1-dimethylpropylsulfinyl, 1,2-dimethylpropylsulfinyl, 2,2-dimethylpropyl-sulfinyl, 1-ethylpropyl-sulfinyl, hexylsulfinyl, 1-methylpentylsulfinyl, 2-methylpentylsulfinyl, 3-methylpentylsulfinyl, 4-methylpentylsulfinyl, 1,1-dimethylbutylsulfinyl, 1,2-dimethylbutylsulfinyl, 1,3-dimethylbutylsulfinyl, 2,2-dimethylbutylsulfinyl, 2,3-dimethylbutylsulfinyl, 3,3-dimethylbutylsulfinyl, 1-ethylbutylsulfinyl, 2-ethylbutylsulfinyl, 1,1,2-trimethylpropylsulfinyl, 1,2,2-trimethylpropylsulfinyl, 1-ethyl-1-methylpropylsulfinyl and 1-ethyl-2-methylpropylsulfinyl.

According to the invention, "alkoxy" denotes an alkyl radical bonded via an oxygen atom, for example (but not limited to) ($C_1$-$C_6$)-alkoxy such as methoxy, ethoxy, propoxy, 1-methylethoxy, butoxy, 1-methylpropoxy, 2-methylpropoxy, 1,1-dimethylethoxy, pentoxy, 1-methylbutoxy, 2-methylbutoxy, 3-methylbutoxy, 1,1-dimethylpropoxy, 1,2-dimethylpropoxy, 2,2-dimethylpropoxy, 1-ethylpropoxy, hexoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy and 1-ethyl-2-methylpropoxy.

According to the invention, "Haloalkoxy" is, for example, $OCF_3$, $OCHF_2$, $OCH_2F$, $OCF_2CF_3$, $OCH_2CF_3$ and $OCH_2CH_2Cl$; this applies correspondingly to haloalkenyloxy, haloalkynyloxy and other halogen-substituted radicals. The term "$C_1$-$C_6$-haloalkoxy" as mentioned herein by way of example thus refers to a $C_1$-$C_6$-alkoxy group as defined above in which one or more hydrogen atoms are replaced with halogen atoms that may be the same or different. Examples of $C_1$-$C_6$-haloalkoxy include but are not limited to chloromethoxy, bromomethoxy, dichloromethoxy, trichloromethoxy, fluoromethoxy, difluoromethoxy, trifluoromethoxy, chlorofluoromethoxy, dichlorofluoromethoxy, chlorodifluoromethoxy, 1-chloro-ethoxy, 1-bromoethoxy, 1-fluoroethoxy, 2-fluoroethoxy, 2,2-difluoroethoxy, 2,2,2-trifluoroethoxy, 2-chloro-2-fluoroethoxy, 2-chloro-2,2-difluoroethoxy, 2,2-dichloro-2-fluoroethoxy, 2,2,2-trichloro-ethoxy, pentafluoroethoxy and 1,1,1-trifluoroprop-2-oxy.

Likewise, "Alkenyloxy" denotes an alkenyl radical attached via an oxygen atom, and alkynyloxy denotes an alkynyl radical attached via an oxygen atom, such as ($C_2$-$C_{10}$)-, ($C_2$-$C_6$)- or ($C_2$-$C_4$)-alkenyloxy and ($C_3$-$C_{10}$)-, ($C_3$-$C_6$)- or ($C_3$-$C_4$)-alkynyloxy.

The term "$C_2$-$C_6$-alkenyloxy" mentioned here by way of example refers to a formula ($C_2$-$C_6$-alkenyl)-O-, in which the term "$C_2$-$C_6$-alkenyl" group is which the as defined herein. Examples of $C_2$-$C_6$-alkenyloxy include but are not limited to ethenyloxy (or "vinyloxy"), prop-2-en-1-yloxy (or "allyloxy"), prop-1-en-1-yloxy, prop-1-en-2-yloxy (or "isopropenyloxy"), but-3-enyloxy, but-2-enyloxy, but-1-enyloxy, 2-methylprop-2-enyloxy, 1-methylprop-2-enyloxy, 2-methylprop-1-enyloxy and 1-methylprop-1-enyloxy.

According to the invention, "Cycloalkoxy" denotes a cycloalkyl radical attached via an oxygen atom and cycloalkenyloxy denotes a cycloalkenyl radical attached via an oxygen atom.

According to the invention, "alkylcarbonyl" (alkyl-C(=O)-), unless defined differently elsewhere, represents alkyl radicals attached to the skeleton via -C(=O)-, such as ($C_1$-$C_{10}$)-, ($C_1$-$C_6$)- or ($C_1$-$C_4$)-alkylcarbonyl. Here, the number of the carbon atoms refers to the alkyl radical in the alkylcarbonyl group.

Analogously, "alkenylcarbonyl" and "alkynylcarbonyl", unless defined differently elsewhere, in accordance with the invention, respectively represent alkenyl and alkynyl radicals attached to the skeleton via -C(=O)-, such as ($C_2$-$C_{10}$)-, ($C_2$-$C_6$)- or ($C_2$-$C_4$)-alkenylcarbonyl and ($C_2$-$C_{10}$)-, ($C_2$-$C_6$)- or ($C_2$-$C_4$)-alkynylcarbonyl. Here, the number of the carbon atoms refers to the alkenyl or alkynyl radical in the alkenyl or alkynyl group.

"Alkoxycarbonyl (alkyl-O-C(=O)-)," unless defined differently elsewhere: alkyl radicals attached to the skeleton via -O-C(=O)-, such as ($C_1$-$C_{10}$)-, ($C_1$-$C_6$)- or ($C_1$-$C_4$)-alkoxycarbonyl. Here, the number of the carbon atoms refers to the alkyl radical in the alkoxycarbonyl group.

Analogously, "alkenyloxycarbonyl" and "alkynyloxycarbonyl", unless defined differently elsewhere, in accordance with the invention, respectively represent alkenyl and alkynyl radicals attached to the skeleton via -O-C(=O)-, such as ($C_2$-$C_{10}$)-, ($C_2$-$C_6$)- or ($C_2$-$C_4$)-alkenyloxycarbonyl and ($C_3$-$C_{10}$)-, ($C_3$-$C_6$)- or ($C_3$-$C_4$)-alkynyloxycarbonyl. Here, the number of the carbon atoms refers to the alkenyl or alkynyl radical in the alkenyloxycarbonyl or alkynyloxycarbonyl group.

The term "aryl" denotes an optionally substituted mono-, bi- or polycyclic aromatic system having preferably 6 to 14, especially 6 to 10, ring carbon atoms, for example phenyl, naphthyl, anthryl, phenanthrenyl and the like, preferably phenyl.

The term "optionally substituted aryl" also embraces polycyclic systems, such as tetrahydronaphthyl, indenyl, indanyl, fluorenyl, biphenylyl, where the bonding site is on the aromatic system. In systematic terms, "aryl" is generally also encompassed by the term "optionally substituted phenyl". Preferred aryl substituents here are, for example, hydrogen, halogen, alkyl, cycloalkyl, cycloalkylalkyl, cycloalkenyl, halocycloalkyl, alkenyl, alkynyl, aryl, arylalkyl, arylalkenyl, heteroaryl, heteroarylalkyl, heterocyclyl, heterocyclylalkyl, alkoxyalkyl, alkylthio, haloalkylthio, haloalkyl, alkoxy, haloalkoxy, cycloalkoxy, cycloalkylalkoxy, aryloxy, heteroraryloxy, alkoxyalkoxy, alkynylalkoxy, alkenyloxy, dialkylaminoalkoxy, tris-[alkyl] silyl, di-[alkyl] arylsilyl, di-[alkyl] alkylsilyl, tris-[alkyl] silylalkynyl, arylalkynyl, heteroarylalkynyl, alkylalkynyl, cycloalkylalkynyl, haloalkylalkynyl, heterocyclyl-N-alkoxy, nitro, cyano, amino, alkylamino, dialkylamino, alkylcarbonylamino, cycloalkylcarbonylamino, arylcarbonylamino, alkoxycarbonylamino, alkoxycarbonylalkylamino, arylalkoxycarbonylalkylamino, hydroxycarbonyl, alkoxycarbonyl, aminocarbonyl, alkylaminocarbonyl, cycloalkylaminocarbonyl, di-alkylaminocarbonyl, heteroarylalkoxy, arylalkoxy.

A heterocyclic radical (heterocyclyl) contains at least one heterocyclic ring (=carbocyclic ring in which at least one carbon atom has been replaced by a heteroatom, preferably by a heteroatom from the group of N, O, S, P) which is saturated, unsaturated, partially saturated or heteroaromatic and may be unsubstituted or substituted, in which case the bonding site is localized on a ring atom. If the heterocyclyl radical or the heterocyclic ring is optionally substituted, it may be fused to other carbocyclic or heterocyclic rings. In the case of optionally substituted heterocyclyl, polycyclic systems are also included, for example 8-azabicyclo[3.2.1]octanyl, 8-azabicyclo[2.2.2]octanyl or 1-azabicyclo[2.2.1]heptyl. Optionally substituted heterocyclyl also includes spirocyclic systems, such as, for example, 1-oxa-5-aza-spiro[2.3]hexyl. Unless defined otherwise, the heterocyclic ring preferably contains 3 to 9 ring atoms, in particular 3 to 6 ring atoms, and one or more, preferably 1 to 4, in particular 1, 2 or 3 heteroatoms in the heterocyclic ring, preferably from the group N, O and S, where, however, two oxygen atoms must not be directly adjacent to one another, for example having one heteroatom from the group consisting of N, O and S 1- or 2- or 3-pyrrolidinyl, 3,4-dihydro-2H-pyrrol-2- or -3-yl, 2,3-dihydro-1H-pyrrol-1- or -2- or -3- or -4- or -5-yl; 2,5-dihydro-1H-pyrrol-1- or -2- or -3-yl, 1- or 2- or 3- or 4-piperidinyl; 2,3,4,5-tetrahydropyridin-2- or -3- or -4- or -5-yl or -6-yl; 1,2,3,6-tetra-hydropyridin-1- or -2- or -3- or -4- or -5- or -6-yl; 1,2,3,4-tetrahydropyridin-1- or -2- or -3- or -4- or -5- or -6-yl; 1,4-dihydropyridin-1- or -2- or -3- or -4-yl; 2,3-dihydropyridin-2- or -3- or -4- or -5- or -6-yl; 2,5-dihydropyridin-2- or -3- or -4- or -5- or -6-yl, 1- or 2- or 3- or 4-azepanyl; 2,3,4,5-tetrahydro-1H-azepin-1- or -2- or -3- or -4- or -5- or -6- or -7-yl; 2,3,4,7-tetrahydro-1H-azepin-1- or -2- or -3- or -4- or -5-

or -6- or -7-yl; 2,3,6,7-tetrahydro-1H-azepin-1- or -2- or -3- or -4-yl; 3,4,5,6-tetrahydro-2H-azepin-2- or -3- or -4- or -5- or -6- or -7-yl; 4,5-dihydro-1H-azepin-1- or -2- or -3- or -4-yl; 2,5-dihydro-1H-azepin-1- or -2- or -3- or -4- or -5- or -6- or -7-yl; 2,7-dihydro-1H-azepin-1- or -2- or -3- or -4-yl; 2,3-dihydro-1H-azepin-1- or -2- or -3- or -4- or -5- or -6- or -7-yl; 3,4-dihydro-2H-azepin-2- or -3- or -4- or -5- or -6- or -7-yl; 3,6-dihydro-2H-azepin-2- or -3- or -4- or -5- or -6- or -7-yl; 5,6-dihydro-2H-azepin-2- or -3- or -4- or -5- or -6- or -7-yl; 4,5-dihydro-3H-azepin-2- or -3- or -4- or -5- or -6- or -7-yl; 1H-azepin-1- or -2- or -3- or -4- or -5- or -6- or -7-yl; 2H-azepin-2- or -3- or -4- or -5- or -6- or -7-yl; 3H-azepin-2- or -3- or -4- or -5- or -6- or -7-yl; 4H-azepin-2- or -3- or -4- or -5- or -6- or -7-yl, 2- or 3-oxolanyl (= 2- or 3-tetrahydrofuranyl); 2,3-dihydrofuran-2- or -3- or -4- or -5-yl; 2,5-dihydrofuran-2- or -3-yl, 2- or 3- or 4-oxanyl (= 2- or 3- or 4-tetrahydropyranyl); 3,4-dihydro-2H-pyran-2- or -3- or -4- or - 5- or -6-yl; 3,6-dihydro-2H-pyran-2- or -3-or -4- or -5- or -6-yl; 2H-pyran-2- or -3- or -4- or -5- or -6-yl; 4H-pyran-2- or -3- or -4-yl, 2- or -3- or -4-oxepanyl; 2,3,4,5-tetrahydrooxepin-2- or -3- or -4- or -5- or - 6- or -7-yl; 2,3,4,7-tetrahydrooxepin-2- or -3- or -4- or -5- or -6- or -7-yl; 2,3,6,7-tetrahydrooxepin-2- or -3- or -4-yl; 2,3-dihydrooxepin-2- or -3- or -4- or -5- or -6- or -7-yl; 4,5-dihydrooxepin-2- or -3- or -4-yl; 2,5-dihydrooxepin-2- or -3- or -4- or -5- or -6- or -7-yl; oxepin-2- or -3- or -4- or -5- or -6- or -7-yl; 2- or 3-tetrahydrothiophenyl; 2,3-dihydrothiophen-2- or -3- or -4- or -5-yl; 2,5-dihydrothiophen-2- or -3-yl; tetrahydro-2H-thiopyran-2- or -3- or -4-yl; 3,4-dihydro-2H-thiopyran-2- or -3- or -4- or -5- or -6-yl; 3,6-dihydro-2H-thiopyran-2- or -3- or -4- or -5- or -6-yl; 2H-thiopyran-2- or -3- or -4- or -5- or -6-yl; 4H-thiopyran-2- or -3- or -4-yl. Preferred 3-membered and 4-membered heterocycles are, for example, 1- or 2-aziridinyl, oxiranyl, thiiranyl, 1- or 2- or 3-azetidinyl, 2- or 3-oxetanyl, 2- or 3-thietanyl, 1,3-dioxetan-2-yl. Further examples of "heterocyclyl" are a partially or fully hydrogenated heterocyclic radical having two heteroatoms from the group of N, O and S, for example 1- or 2- or 3- or 4-pyrazolidinyl; 4,5-dihydro-3H-pyrazol-3- or -4- or -5-yl; 4,5-dihydro-1H-pyrazol-1- or -3- or -4- or -5-yl; 2,3-dihydro-1H-pyrazol-1- or -2- or -3- or -4- or -5-yl; 1- or -2- or -3- or -4-imidazolidinyl; 2,3-dihydro-1H-imidazol-1- or -2- or -3- or -4-yl; 2,5-dihydro-1H-imidazol-1- or -2- or -4- or -5-yl; 4,5-dihydro-1H-imidazol-1- or -2- or -4- or -5-yl; hexahydropyridazin-1- or -2- or -3- or -4-yl; 1,2,3,4-tetrahydropyridazin-1- or -2- or -3- or -4- or -5- or -6-yl; 1,2,3,6-tetrahydropyridazin-1- or -2- or -3- or - 4- or -5- or -6-yl; 1,4,5,6-tetrahydropyridazin-1- or -3- or -4- or -5- or -6-yl; 3,4,5,6-tetrahydropyridazin-3- or -4- or -5-yl; 4,5-dihydropyridazin-3- or -4-yl; 3,4-dihydropyridazin-3- or -4- or -5- or -6-yl; 3,6-dihydropyridazin-3- or -4-yl; 1,6-dihydropyridazin-1- or -3- or -4- or -5- or -6-yl; hexahydropyrimidin-1- or -2- or -3- or -4-yl; 1,4,5,6-tetrahydropyrimidin-1- or -2- or -4- or -5- or -6-yl; 1,2,5,6-tetrahydropyrimidin-1- or -2- or -4- or -5- or -6-yl; 1,2,3,4-tetrahydropyrimidin-1- or -2- or -3- or -4- or -5- or -6-yl; 1,6-dihydropyrimidin-1- or -2- or -4- or -5- or -6-yl; 1,2-dihydropyrimidin-1- or -2- or -4- or -5- or -6-yl; 2,5-dihydropyrimidin-2- or -4- or -5-yl; 4,5-dihydropyrimidin- 4- or -5- or -6-yl; 1,4-dihydropyrimidin-1- or -2- or -4- or -5- or -6-yl; 1- or -2- or -3-piperazinyl; 1,2,3,6-tetrahydropyrazin-1- or -2- or -3- or -5- or -6-yl; 1,2,3,4-tetrahydropyrazin-1- or -2- or -3- or -4- or -5- or -6-yl; 1,2-dihydro-pyrazin-1- or -2- or -3- or -5- or -6-yl; 1,4-dihydropyrazin-1- or -2- or -3-yl; 2,3-dihydropyrazin-2- or -3- or -5- or -6-yl; 2,5-dihydropyrazin-2- or -3-yl; 1,3-dioxolan-2- or -4- or -5-yl; 1,3-dioxol-2- or -4-yl; 1,3-dioxan-2- or -4- or -5-yl; 4H-1,3-dioxin-2- or -4- or -5- or -6-yl; 1,4-dioxan-2- or -3- or -5- or -6-yl; 2,3-dihydro-1,4-dioxin-2- or -3- or -5- or -6-yl; 1,4-dioxin-2- or -3-yl; 1,2-dithiolan-3- or -4-yl; 3H-1,2-dithiol-3- or -4- or -5-yl; 1,3-dithiolan-2- or -4-yl; 1,3-dithiol-2- or -4-yl; 1,2-dithian-3- or -4-yl; 3,4-dihydro-1,2-dithiin-3- or -4- or -5- or -6-yl; 3,6-dihydro-1,2-dithiin-3- or -4-yl; 1,2-dithiin-3- or -4-yl; 1,3-dithian-2- or -4- or -5-yl; 4H-1,3-dithiin-2- or -4- or -5- or -6-yl; isoxazolidin-2- or -3- or -4- or -5-yl; 2,3-dihydroisoxazol-2- or -3- or -4- or -5-yl; 2,5-dihydroisoxazol-2- or -3- or -4- or -5-yl; 4,5-dihydroisoxazol-3- or -4- or -5-yl; 1,3-oxazolidin-2- or -3- or -4- or -5-yl; 2,3-dihydro-1,3-oxazol-2- or - 3- or -4- or -5-yl; 2,5-dihydro-1,3-oxazol-2- or -4- or -5-yl; 4,5-dihydro-1,3-oxazol-2- or -4- or -5-yl; 1,2-oxazinan-2- or -3- or -4- or -5- or -6-yl; 3,4-dihydro-2H-1,2-oxazin-2- or -3- or -4- or -5- or -6-yl; 3,6-dihydro-2H-1,2-oxazin-2- or -3- or -4- or -5- or -6-yl; 5,6-dihydro-2H-1,2-oxazin-2- or -3- or -4- or - 5- or -6-yl; 5,6-dihydro-4H-1,2-oxazin-3- or -4- or -5- or -6-yl; 2H-1,2-oxazin-2- or -3- or -4- or -5- or - 6-yl; 6H-1,2-oxazin-3- or -4- or -5- or -6-yl; 4H-1,2-oxazin-3- or -4- or -5- or -6-yl; 1,3-oxazinan-2- or - 3- or -4- or -5- or -6-yl; 3,4-dihydro-2H-1,3-oxazin-2- or -3- or -4- or -5- or -6-yl; 3,6-dihydro-2H-1,3-oxazin-2- or -3- or -4- or -5- or -6-yl; 5,6-dihydro-2H-1,3-oxazin-2- or -4- or -5- or -6-yl; 5,6-dihydro-4H-1,3-oxazin-2- or -4- or -5- or -6-yl; 2H-1,3-oxazin-2- or -4- or -5- or -6-yl; 6H-1,3-oxazin-2- or -4- or -5- or -6-yl; 4H-1,3-oxazin-2- or -4- or -5- or -6-yl; morpholin-2- or -3- or -4-yl; 3,4-dihydro-2H-1,4-oxazin-2- or -3- or -4- or -5- or -6-yl; 3,6-dihydro-2H-1,4-oxazin-2- or -3- or -5- or -6-yl; 2H-1,4-oxazin-2- or -3- or -5- or -6-yl; 4H-1,4-oxazin-2- or -3-yl; 1,2-oxazepan-2- or -3- or -4- or -5- or -6- or - 7-yl; 2,3,4,5-tetrahydro-1,2-oxazepin-2- or -3- or -4- or -5- or -6- or -7-yl; 2,3,4,7-tetrahydro-1,2-oxazepin-2- or -3- or -4- or -5- or -6- or -7-yl; 2,3,6,7-tetrahydro-1,2-oxazepin-2- or -3- or -4- or -5- or - 6- or -7-yl; 2,5,6,7-tetrahydro-1,2-oxazepin-2- or -3- or -4- or -5- or -6- or -7-yl; 4,5,6,7-tetrahydro-1,2-oxazepin-3- or -4- or -5- or -6- or -7-yl; 2,3-dihydro-1,2-oxazepin-2- or -3- or -4- or -5- or -6- or -7-yl; 2,5-dihydro-1,2-oxazepin-2- or -3- or -4- or -5- or -6- or -7-yl; 2,7-dihydro-1,2-oxazepin-2- or -3- or -4- or -5- or -6- or -7-yl; 4,5-dihydro-1,2-oxazepin-3- or -4- or -5- or -6- or -7-yl; 4,7-dihydro-1,2-oxazepin-3- or -4- or -5- or -6- or -7-yl; 6,7-dihydro-1,2-oxazepin-3- or -4- or -5- or -6- or -7-yl; 1,2-oxazepin-3- or -4- or -5- or -6- or -7-yl; 1,3-oxazepan-2- or -3- or -4- or -5- or -6- or -7-yl; 2,3,4,5-tetrahydro-1,3-oxazepin-2- or -3- or -4- or -5- or -6- or -7-yl; 2,3,4,7-tetrahydro-1,3-oxazepin-2- or -3- or -4- or -5- or - 6- or -7-yl; 2,3,6,7-tetrahydro-1,3-oxazepin-2- or -3- or -4- or -5- or -6- or -7-yl; 2,5,6,7-tetrahydro-1,3-oxazepin-2- or -4- or -5- or -6- or -7-yl; 4,5,6,7-tetrahydro-1,3-oxazepin-2- or -4- or -5- or -6- or -7-yl; 2,3-dihydro-1,3-oxazepin-2- or -3- or -4- or -5- or -6- or -7-yl; 2,5-dihydro-1,3-oxazepin-2- or -4- or -5- or -6- or -7-yl; 2,7-dihydro-1,3-oxazepin-2- or -4- or -5- or -6- or -7-yl; 4,5-dihydro-1,3-oxazepin-2- or - 4- or -5- or -6- or -7-yl; 4,7-dihydro-1,3-oxazepin-2- or -4- or -5- or -6- or -7-yl; 6,7-dihydro-1,3-oxazepin-2- or -4- or -5- or -6- or -7-yl; 1,3-oxazepin-2- or -4- or -5- or -6- or -7-yl; 1,4-oxazepan-2- or -3- or -5- or -6- or -7-yl; 2,3,4,5-tetrahydro-1,4-oxazepin-2- or -3- or -4- or -5- or -6- or -7-yl; 2,3,4,7-tetrahydro-1,4-oxazepin-2- or -3- or -4- or -5- or -6- or -7-yl; 2,3,6,7-tetrahydro-1,4-oxazepin-2- or -3- or -5- or -6- or -7-yl; 2,5,6,7-tetrahydro-1,4-oxazepin-2- or -3- or -5- or -6- or -7-yl; 4,5,6,7-tetrahydro-1,4-oxazepin-2- or -3- or -4- or -5- or -6- or -7-yl; 2,3-dihydro-1,4-oxazepin-2- or -3- or -5- or -6- or -7-yl; 2,5-dihydro-1,4-oxazepin-2- or -3- or -5- or -6- or -7-yl; 2,7-dihydro-1,4-oxazepin-2- or -3- or -5- or -6- or -7-yl; 4,5-dihydro-1,4-oxazepin-2- or -3- or -4- or -5- or -6- or -7-yl; 4,7-dihydro-1,4-oxazepin-2- or -3- or -4- or -5- or -6- or -7-yl; 6,7-dihydro-1,4-oxazepin-2- or -3- or -5- or -6- or -7-yl; 1,4-oxazepin-2- or -3- or -5- or -6- or -7-yl; isothiazolidin-2- or -3- or -4- or -5-yl; 2,3-dihydroisothiazol-2- or -3- or -4- or -5-yl; 2,5-dihydroisothiazol-2- or -3- or -4- or -5-yl; 4,5-dihydroisothiazol-3- or -4- or -5-yl; 1,3-thiazolidin-2- or -3- or -4- or -5-yl; 2,3-dihydro-1,3-thiazol-2- or -3- or -4- or -5-yl; 2,5-dihydro-1,3-thiazol-2- or -4- or -5-yl; 4,5-dihydro-1,3-thiazol-2- or -4- or -5-yl; 1,3-thiazinan-2- or -3- or -4- or - 5- or -6-yl; 3,4-dihydro-2H-1,3-thiazin-2- or -3- or -4- or -5- or -6-yl; 3,6-dihydro-2H-1,3-thiazin-2- or - 3- or -4- or -5- or -6-yl; 5,6-dihydro-2H-1,3-thiazin-2- or -4- or -5- or -6-yl; 5,6-dihydro-4H-1,3-thiazin-2- or -4- or -5- or -6-yl; 2H-1,3-thiazin-2- or -4- or -5- or -6-yl; 6H-1,3-thiazin-2- or -4- or -5- or -6-yl; 4H-1,3-thiazin-2- or -4- or -5- or -6-yl. Further examples of "heterocyclyl" are a partially or fully hydrogenated heterocyclic radical having 3 heteroatoms from the group of N, O and S, for example 1,4,2-dioxazolidin-2- or -3- or -5-yl; 1,4,2-dioxazol-3- or -5-yl; 1,4,2-dioxazinan-2- or -3- or -5- or -6-yl; 5,6-dihydro-1,4,2-dioxazin-3- or -5- or -6-yl; 1,4,2-dioxazin-3- or -5- or -6-yl; 1,4,2-dioxazepan-2- or - 3- or -5- or -6- or -7-yl; 6,7-dihydro-5H-1,4,2-dioxazepin-3- or -5- or -6- or -7-yl; 2,3-dihydro-7H-1,4,2-dioxazepin-2- or -3- or -5- or -6- or -7-yl; 2,3-dihydro-5H-1,4,2-dioxazepin-2- or -3- or -5- or -6- or -7-yl; 5H-1,4,2-dioxazepin-3- or -5- or -6- or -7-yl; 7H-1,4,2-dioxazepin-3- or -5- or -6- or -7-yl. Structural examples of heterocycles which are optionally substituted further are also listed below:

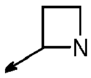 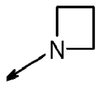 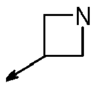 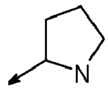 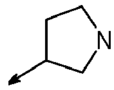

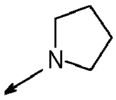 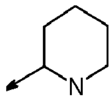 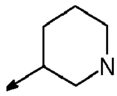 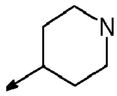 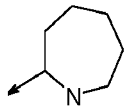

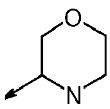 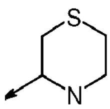 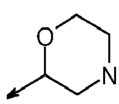 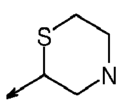 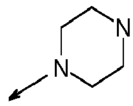

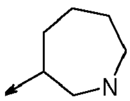 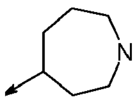 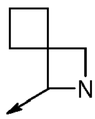 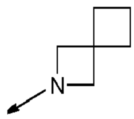 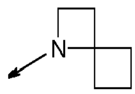

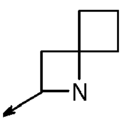 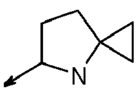 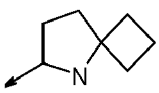 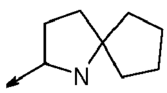 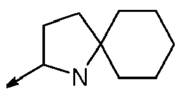

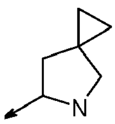 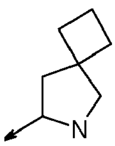 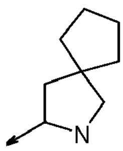 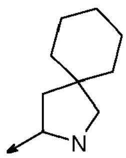 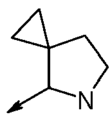

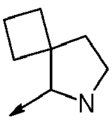 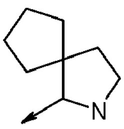 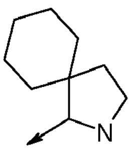 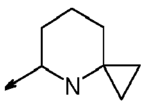 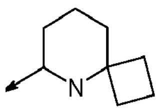

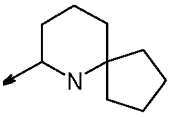 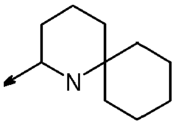 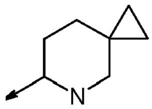 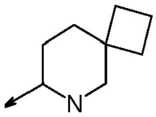 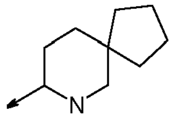

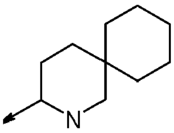 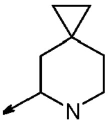 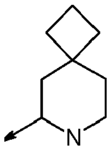 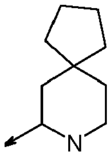 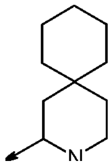

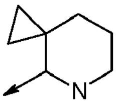 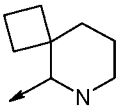 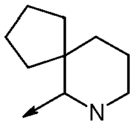 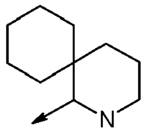 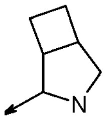

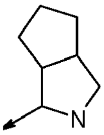 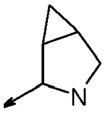 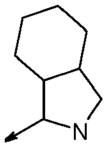 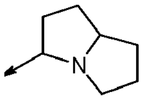 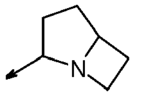

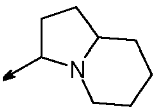 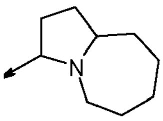 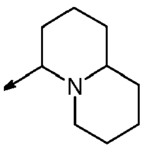 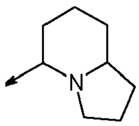 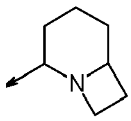

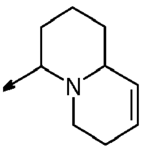 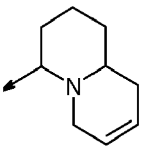 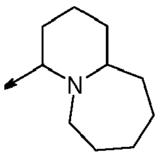 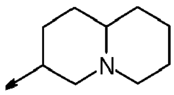 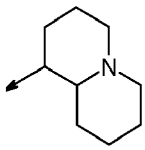

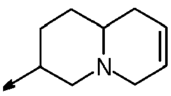 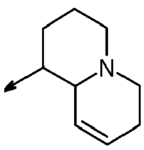 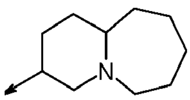 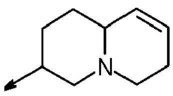 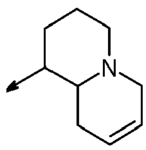

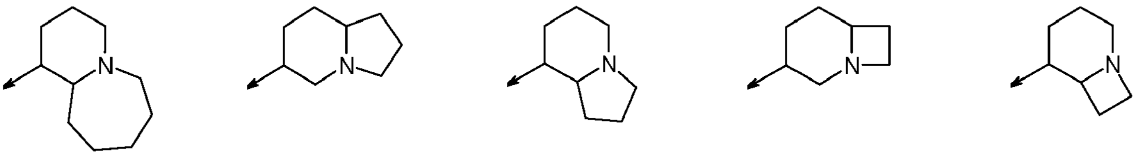

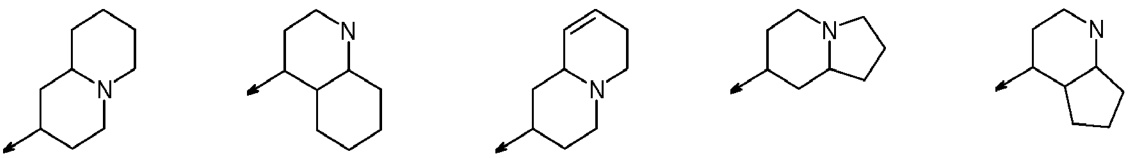

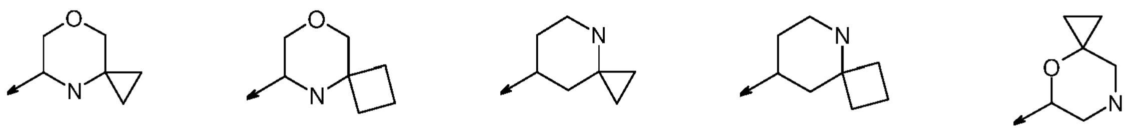

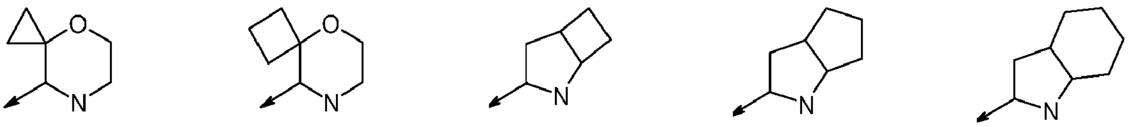

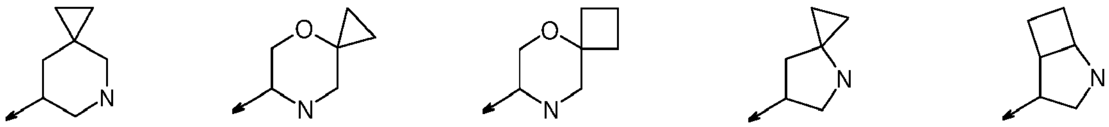

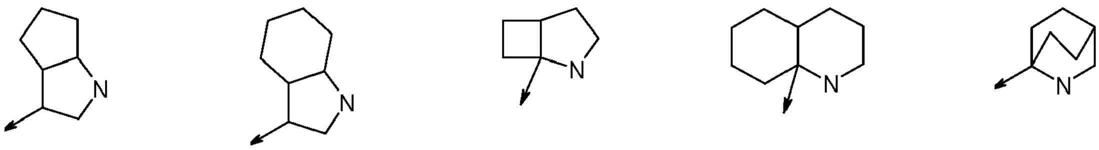

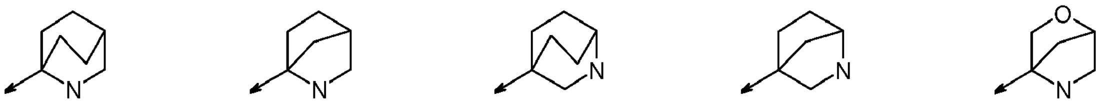

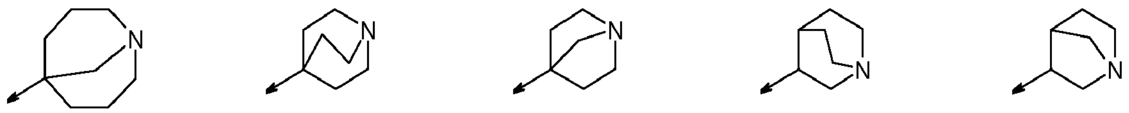

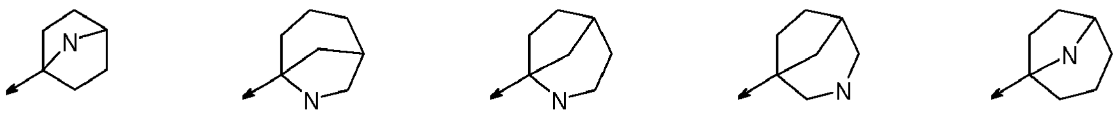

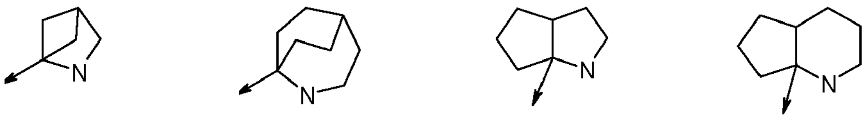

The heterocycles listed above are preferably substituted, for example, by hydrogen, halogen, alkyl, haloalkyl, hydroxyl, alkoxy, cycloalkoxy, aryloxy, alkoxyalkyl, alkoxyalkoxy, cycloalkyl, halocycloalkyl, aryl, arylalkyl, heteroaryl, heterocyclyl, alkenyl, alkylcarbonyl, cycloalkylcarbonyl, arylcarbonyl, heteroarylcarbonyl, alkoxycarbonyl, hydroxycarbonyl, cycloalkoxycarbonyl, cycloalkylalkoxycarbonyl, alkoxycarbonylalkyl, arylalkoxycarbonyl, arylalkoxycarbonylalkyl, alkynyl, alkynylalkyl, alkylalkynyl, trisalkylsilylalkynyl, nitro, amino, cyano, haloalkoxy, haloalkylthio, alkylthio, hydrothio, hydroxyalkyl, oxo, heteroarylalkoxy, arylalkoxy, heterocyclylalkoxy, heterocyclylalkylthio, heterocyclyloxy, heterocyclylthio, heteroaryloxy, dialkylamino, alkylamino, cycloalkylamino, hydroxycarbonylalkylamino, alkoxycarbonylalkylamino, arylalkoxycarbonylalkylamino, alkoxycarbonylalkyl(alkyl)amino, aminocarbonyl, alkylaminocarbonyl, dialkylaminocarbonyl, cycloalkylaminocarbonyl, hydroxycarbonylalkylaminocarbonyl, alkoxycarbonylalkylaminocarbonyl, arylalkoxycarbonylalkylaminocarbonyl.

When a base structure is substituted "by one or more substituents" from a list of radicals (= group) or a generically defined group of radicals, this in each case includes simultaneous substitution by a plurality of identical and/or structurally different radicals. In the case of a partially or fully saturated nitrogen heterocycle, this may be joined to the remainder of the molecule either via carbon or via the nitrogen. Suitable substituents for a substituted heterocyclic radical are the

substituents specified further down, and additionally also oxo and thioxo. The oxo group as a substituent on a ring carbon atom is then, for example, a carbonyl group in the heterocyclic ring. As a result, lactones and lactams are preferably also included. The oxo group may also occur on the ring heteroatoms, which may exist in different oxidation states, for example in the case of N and S, and in that case form, for example, the divalent -N(O)-, - S(O)- (also SO for short) and $-S(O)_2-$ (also $SO_2$ for short) groups in the heterocyclic ring. In the case of - N(O)- and -S(O)- groups, both enantiomers in each case are included.

According to the invention, the expression "heteroaryl" refers to heteroaromatic compounds, i.e. fully unsaturated aromatic heterocyclic compounds, preferably 5- to 7-membered rings having 1 to 4, preferably 1 or 2, identical or different heteroatoms, preferably O, S or N. Inventive heteroaryls are, for example, 1H-pyrrol-1-yl; 1H-pyrrol-2-yl; 1H-pyrrol-3-yl; furan-2-yl; furan-3-yl; thien-2-yl; thien-3-yl, 1H-imidazol-1-yl; 1H-imidazol-2-yl; 1H-imidazol-4-yl; 1H-imidazol-5-yl; 1H-pyrazol-1-yl; 1H-pyrazol-3-yl; 1H-pyrazol-4-yl; 1H-pyrazol-5-yl, 1H-1,2,3-triazol-1-yl, 1H-1,2,3-triazol-4-yl, 1H-1,2,3-triazol-5-yl, 2H-1,2,3-triazol-2-yl, 2H-1,2,3-triazol-4-yl, 1H-1,2,4-triazol-1-yl, 1H-1,2,4-triazol-3-yl, 4H-1,2,4-triazol-4-yl, 1,2,4-oxadiazol-3-yl, 1,2,4-oxadiazol-5-yl, 1,3,4-oxadiazol-2-yl, 1,2,3-oxadiazol-4-yl, 1,2,3-oxadiazol-5-yl, 1,2,5-oxadiazol-3-yl, azepinyl, pyridin-2-yl, pyridin-3-yl, pyridin-4-yl, pyrazin-2-yl, pyrazin-3-yl, pyrimidin-2-yl, pyrimidin-4-yl, pyrimidin-5-yl, pyridazin-3-yl, pyridazin-4-yl, 1,3,5-triazin-2-yl, 1,2,4-triazin-3-yl, 1,2,4-triazin-5-yl, 1,2,4-triazin-6-yl, 1,2,3-triazin-4-yl, 1,2,3-triazin-5-yl, 1,2,4-, 1,3,2-, 1,3,6- and 1,2,6-oxazinyl, isoxazol-3-yl, isoxazol-4-yl, isoxazol-5-yl, 1,3-oxazol-2-yl, 1,3-oxazol-4-yl, 1,3-oxazol-5-yl, isothiazol-3-yl, isothiazol-4-yl, isothiazol-5-yl, 1,3-thiazol-2-yl, 1,3-thiazol-4-yl, 1,3-thiazol-5-yl, oxepinyl, thiepinyl, 1,2,4-triazolonyl and 1,2,4-diazepinyl, 2H-1,2,3,4-tetrazol-5-yl, 1H-1,2,3,4-tetrazol-5-yl, 1,2,3,4-oxatriazol-5-yl, 1,2,3,4-thiatriazol-5-yl, 1,2,3,5-oxatriazol-4-yl, 1,2,3,5-thiatriazol-4-yl. The heteroaryl groups according to the invention may also be substituted by one or more identical or different radicals. If two adjacent carbon atoms are part of a further aromatic ring, the systems are fused heteroaromatic systems, such as benzofused or polyannealed heteroaromatics. Preferred examples are quinolines (e.g. quinolin-2-yl, quinolin-3-yl, quinolin-4-yl, quinolin-5-yl, quinolin-6-yl, quinolin-7-yl, quinolin-8-yl); isoquinolines (e.g. isoquinolin-1-yl, isoquinolin-3-yl, isoquinolin-4-yl, isoquinolin-5-yl, isoquinolin-6-yl, isoquinolin-7-yl, isoquinolin-8-yl); quinoxaline; quinazoline; cinnoline; 1,5-naphthyridine; 1,6-naphthyridine; 1,7-naphthyridine; 1,8-naphthyridine; 2,6-naphthyridine; 2,7-naphthyridine; phthalazine; pyridopyrazines; pyridopyrimidines; pyridopyridazines; pteridines; pyrimidopyrimidines. Examples of heteroaryl are also 5- or 6-membered benzofused rings from the group of 1H-indol-1-yl, 1H-indol-2-yl, 1H-indol-3-yl, 1H-indol-4-yl, 1H-indol-5-yl, 1H-indol-6-yl, 1H-indol-7-yl, 1-benzofuran-2-yl, 1-benzofuran-3-yl, 1-benzofuran-4-yl, 1-benzofuran-5-yl, 1-benzofuran-6-yl, 1-benzofuran-7-yl, 1-benzothiophen-2-yl, 1-benzothiophen-3-yl, 1-benzothiophen-4-yl, 1-benzothiophen-5-yl, 1-benzothiophen-6-yl, 1-benzothiophen-7-yl, IH-indazol-1-yl, 1H-indazol-3-yl, 1H-indazol-4-yl, 1H-indazol-5-yl, 1H-indazol-6-yl, 1H-indazol-7-yl, 2H-indazol-2-yl, 2H-indazol-3-yl, 2H-indazol-4-yl, 2H-indazol-5-yl, 2H-indazol-6-yl, 2H-indazol-7-yl, 2H-isoindol-2-yl, 2H-isoindol-1-yl, 2H-isoindol-3-yl, 2H-isoindol-4-yl, 2H-isoindol-5-yl, 2H-isoindol-6-yl; 2H-isoindol-7-yl, 1H-benzimidazol-1-yl, 1H-benzimidazol-2-yl, 1H-benzimidazol-4-yl, 1H-benzimidazol-5-yl, 1H-benzimidazol-6-yl, 1H-benzimidazol-7-yl, 1,3-benzoxazol-2-yl, 1,3-benzoxazol-4-yl, 1,3-benzoxazol-5-yl, 1,3-benzoxazol-6-yl, 1,3-benzoxazol-7-yl, 1,3-benzothiazol-2-yl, 1,3-benzothiazol-4-yl, 1,3-benzothiazol-5-yl, 1,3-benzothiazol-6-yl, 1,3-benzothiazol-7-yl, 1,2-benzisoxazol-3-yl, 1,2-benzisoxazol-4-yl, 1,2-benzisoxazol-5-yl, 1,2-benzisoxazol-6-yl, 1,2-benzisoxazol-7-yl, 1,2-benzisothiazol-3-yl, 1,2-benzisothiazol-4-yl, 1,2-benzisothiazol-5-yl, 1,2-benzisothiazol-6-yl, 1,2-benzisothiazol-7-yl.

The term "halogen" denotes, for example, fluorine, chlorine, bromine or iodine. If the term is used for a radical, "halogen" denotes, for example, a fluorine, chlorine, bromine or iodine atom.

According to the invention, "alkyl" denotes a straight-chain or branched open-chain, saturated hydrocarbon radical which is optionally mono- or polysubstituted, and in the latter case is referred to as "substituted alkyl". Preferred substituents are halogen atoms, alkoxy, haloalkoxy, cyano, alkylthio, haloalkylthio, amino or nitro groups, particular preference being given to methoxy, methyl, fluoroalkyl, cyano, nitro, fluorine, chlorine, bromine or iodine.

The prefix "di" includes the combination of equal or different alkyl radicals, e.g. dimethyl or methyl(ethyl) or ethyl(methyl).

According to the invention, "Haloalkyl", "-alkenyl" and "-alkynyl" respectively denote alkyl, alkenyl and alkynyl partially or fully substituted by identical or different halogen atoms, for example monohaloalkyl such as $CH_2CH_2Cl$, $CH_2CH_2Br$, $CHClCH_3$, $CH_2Cl$, $CH_2F$; perhaloalkyl such as $CCl_3$, $CClF_2$, $CFCl_2$, $CF_2CClF_2$, $CF_2CClFCF_3$; polyhaloalkyl such as $CH_2CHFCl$, $CF_2CClFH$, $CF_2CBrFH$, $CH_2CF_3$; the term perhaloalkyl also encompasses the term perfluoroalkyl.

The term "$C_2$-$C_6$-haloalkenyl" as mentioned herein by way of example refers to a $C_2$-$C_6$-alkenyl group as defined above in which one or more hydrogen atoms are replaced with one or more halogen atoms that may be the same or different. Typically, $C_2$-$C_6$-haloalkenyl comprises up to 9 halogen atoms that can be the same or different.

The term "$C_2$-$C_6$-haloalkynyl" as mentioned herein by way of example refers to a $C_2$-$C_6$-alkynyl group as defined above in which one or more hydrogen atoms are replaced with one or more halogen atoms that may be the same or different. Typically, $C_2$-$C_6$-haloalkynyl comprises up to 9 halogen atoms that can be the same or different.

According to the invention, the expression "($C_1$-$C_4$)-alkyl" mentioned here by way of example is a brief notation for straight-chain or branched alkyl having one to 4 carbon atoms according to the range stated for carbon atoms, i.e. encompasses the methyl, ethyl, 1-propyl, 2-propyl, 1-butyl, 2-butyl, 2-methylpropyl or tert-butyl radicals. General alkyl

radicals with a larger specified range of carbon atoms, e.g. "($C_1$-$C_6$)-alkyl", correspondingly also encompass straight-chain or branched alkyl radicals with a greater number of carbon atoms, i.e. according to the example also the alkyl radicals having 5 and 6 carbon atoms. Unless stated specifically, preference is given to the lower carbon skeletons, for example having from 1 to 6 carbon atoms, or having from 2 to 6 carbon atoms in the case of unsaturated groups, in the case of the hydrocarbyl radicals such as alkyl, alkenyl and alkynyl radicals, including in composite radicals. Alkyl radicals, including in composite radicals such as alkoxy, haloalkyl, etc., are, for example, methyl, ethyl, n-propyl or i-propyl, n-, i-, t- or 2-butyl, pentyls, hexyls such as n-hexyl, i-hexyl and 1,3-dimethylbutyl, heptyls such as n-heptyl, 1-methylhexyl and 1,4-dimethylpentyl; alkenyl and alkynyl radicals are defined as the possible unsaturated radicals corresponding to the alkyl radicals, where at least one double bond or triple bond is present. Preference is given to radicals having one double bond or triple bond.

According to the invention, the term "alkenyl" also includes, in particular, straight-chain or branched open-chain hydrocarbon radicals having more than one double bond, such as 1,3-butadienyl and 1,4-pentadienyl, but also allenyl or cumulenyl radicals having one or more cumulated double bonds, for example allenyl (1,2-propadienyl), 1,2-butadienyl and 1,2,3-pentatrienyl. Alkenyl denotes, for example, vinyl which may optionally be substituted by further alkyl radicals, for example (but not limited thereto) ($C_2$-$C_6$)-alkenyl such as ethenyl, 1-propenyl, 2-propenyl, 1-methylethenyl, 1-butenyl, 2-butenyl, 3-butenyl, 1-methyl-1-propenyl, 2-methyl-1-propenyl, 1-methyl-2-propenyl, 2-methyl-2-propenyl, 1-pentenyl, 2-pentenyl, 3-pentenyl, 4-pentenyl, 1-methyl-1-butenyl, 2-methyl-1-butenyl, 3-methyl-1-butenyl, 1-methyl-2-butenyl, 2-methyl-2-butenyl, 3-methyl-2-butenyl, 1-methyl-3-butenyl, 2-methyl-3-butenyl, 3-methyl-3-butenyl, 1,1-dimethyl-2-propenyl, 1,2-dimethyl-1-propenyl, 1,2-dimethyl-2-propenyl, 1-ethyl-1-propenyl, 1-ethyl-2-propenyl, 1-hexenyl, 2-hexenyl, 3-hexenyl, 4-hexenyl, 5-hexenyl, 1-methyl-1-pentenyl, 2-methyl-1-pentenyl, 3-methyl-1-pentenyl, 4-methyl-1-pentenyl, 1-methyl-2-pentenyl, 2-methyl-2-pentenyl, 3-methyl-2-pentenyl, 4-methyl-2-pentenyl, 1-methyl-3-pentenyl, 2-methyl-3-pentenyl, 3-methyl-3-pentenyl, 4-methyl-3-pentenyl, 1-methyl-4-pentenyl, 2-methyl-4-pentenyl, 3-methyl-4-pentenyl, 4-methyl-4-pentenyl, 1,1-dimethyl-2-butenyl, 1,1-dimethyl-3-butenyl, 1,2-dimethyl-1-butenyl, 1,2-dimethyl-2-butenyl, 1,2-dimethyl-3-butenyl, 1,3-dimethyl-1-butenyl, 1,3-dimethyl-2-butenyl, 1,3-dimethyl-3-butenyl, 2,2-dimethyl-3-butenyl, 2,3-dimethyl-1-butenyl, 2,3-dimethyl-2-butenyl, 2,3-dimethyl-3-butenyl, 3,3-dimethyl-1-butenyl, 3,3-dimethyl-2-butenyl, 1-ethyl-1-butenyl, 1-ethyl-2-butenyl, 1-ethyl-3-butenyl, 2-ethyl-1-butenyl, 2-ethyl-2-butenyl, 2-ethyl-3-butenyl, 1,1,2-trimethyl-2-propenyl, 1-ethyl-1-methyl-2-propenyl, 1-ethyl-2-methyl-1-propenyl and 1-ethyl-2-methyl-2-propenyl.

According to the invention, the term "alkynyl" also includes, in particular, straight-chain or branched open-chain hydrocarbon radicals having more than one triple bond, or else having one or more triple bonds and one or more double bonds, for example 1,3-butatrienyl or 3-penten-1-yn-1-yl. ($C_2$-$C_6$)-Alkynyl denotes, for example, ethynyl, 1-propynyl, 2-propynyl, 1-butynyl, 2-butynyl, 3-butynyl, 1-methyl-2-propynyl, 1-pentynyl, 2-pentynyl, 3-pentynyl, 4-pentynyl, 1-methyl-2-butynyl, 1-methyl-3-butynyl, 2-methyl-3-butynyl, 3-methyl-1-butynyl, 1,1-dimethyl-2-propynyl, 1-ethyl-2-propynyl, 1-hexynyl, 2-hexynyl, 3-hexynyl, 4-hexynyl, 5-hexynyl, 1-methyl-2-pentynyl, 1-methyl-3-pentynyl, 1-methyl-4-pentynyl, 2-methyl-3-pentynyl, 2-methyl-4-pentynyl, 3-methyl-1-pentynyl, 3-methyl-4-pentynyl, 4-methyl-1-pentynyl, 4-methyl-2-pentynyl, 1,1-dimethyl-2-butynyl, 1,1-dimethyl-3-butynyl, 1,2-dimethyl-3-butynyl, 2,2-dimethyl-3-butynyl, 3,3-dimethyl-1-butynyl, 1-ethyl-2-butynyl, 1-ethyl-3-butynyl, 2-ethyl-3-butynyl and 1-ethyl-1-methyl-2-propynyl.

According to the invention, the term "cycloalkyl" denotes a carbocyclic saturated ring system having preferably 3-8 ring carbon atoms, for example cyclopropyl, cyclobutyl, cyclopentyl or cyclohexyl, which optionally has further substitution, preferably by hydrogen, alkyl, alkoxy, cyano, nitro, alkylthio, haloalkylthio, halogen, alkenyl, alkynyl, haloalkyl, amino, alkylamino, dialkylamino, alkoxycarbonyl, hydroxycarbonyl, arylalkoxycarbonyl, aminocarbonyl, alkylaminocarbonyl, cycloalkylaminocarbonyl. In the case of optionally substituted cycloalkyl, cyclic systems with substituents are included, also including substituents with a double bond on the cycloalkyl radical, for example an alkylidene group such as methylidene. In the case of optionally substituted cycloalkyl, polycyclic aliphatic systems are also included, for example bicyclo[1.1.0]butan-1-yl, bicyclo[1.1.0]butan-2-yl, bicyclo[2.1.0]pentan-1-yl, bicyclo[1.1.1]pentan-1-yl, bicyclo[2.1.0]pentan-2-yl, bicyclo[2.1.0]pentan-5-yl, bicyclo[2.1.1]hexyl, bicyclo[2.2.1]hept-2-yl, bicyclo[2.2.2]octan-2-yl, bicyclo[3.2.1]octan-2-yl, bicyclo[3.2.2]nonan-2-yl, adamantan-1-yl and adamantan-2-yl, but also systems such as 1,1'-bi(cyclopropyl)-1-yl, 1,1'-bi(cyclopropyl)-2-yl, for example. The term "($C_3$-$C_7$)-cycloalkyl" is a brief notation for cycloalkyl having three to 7 carbon atoms, corresponding to the range specified for carbon atoms. In the case of substituted cycloalkyl, spirocyclic aliphatic systems are also included, for example spiro[2.2]pent-1-yl, spiro[2.3]hex-1-yl, spiro[2.3]hex-4-yl, 3-spiro[2.3]hex-5-yl, spiro[3.3]hept-1-yl, spiro[3.3]hept-2-yl.

"Cycloalkenyl" denotes a carbocyclic, nonaromatic, partially unsaturated ring system having preferably 4-8 carbon atoms, e.g. 1-cyclobutenyl, 2-cyclobutenyl, 1-cyclopentenyl, 2-cyclopentenyl, 3-cyclopentenyl, or 1-cyclohexenyl, 2-cyclohexenyl, 3-cyclohexenyl, 1,3-cyclohexadienyl or 1,4-cyclohexadienyl, also including substituents with a double bond on the cycloalkenyl radical, for example an alkylidene group such as methylidene. In the case of optionally substituted cycloalkenyl, the elucidations for substituted cycloalkyl apply correspondingly.

According to the invention, "haloalkylthio" - on its own or as constituent part of a chemical group - represents straight-chain or branched S-haloalkyl, preferably having 1 to 8, or having 1 to 6 carbon atoms, such as ($C_1$-$C_8$)-, ($C_1$-$C_6$)- or ($C_1$-$C_4$)-haloalkylthio, for example (but not limited thereto) trifluoromethylthio, pentafluoroethylthio, difluoromethyl,

2,2-difluoroeth-1-ylthio, 2,2,2-difluoroeth-1-ylthio, 3,3,3-prop-1-ylthio.

"Halocycloalkyl" and "halocycloalkenyl" denote cycloalkyl and cycloalkenyl, respectively, which are partially or fully substituted by identical or different halogen atoms, such as F, Cl and Br, or by haloalkyl, such as trifluoromethyl or difluoromethyl, for example 1-fluorocycloprop-1-yl, 2-fluorocycloprop-1-yl, 2,2-difluorocycloprop-1-yl, 1 -fluorocyclobut-1-yl, 1-trifluoromethylcycloprop-1-yl, 2-trifluoromethylcycloprop-1-yl, 1-chlorocycloprop-1-yl, 2-chlorocycloprop-1-yl, 2,2-dichlorocycloprop-1-yl, 3,3-difluorocyclobutyl.

According to the invention, "trialkylsilyl" - on its own or as constituent part of a chemical group - represents straight-chain or branched Si-alkyl, preferably having 1 to 8, or having 1 to 6 carbon atoms, such as tri[($C_1$-$C_8$)-, ($C_1$-$C_6$)- or ($C_1$-$C_4$)-alkyl]silyl, for example (but not limited thereto) trimethylsilyl, triethylsilyl, tri(n-propyl)silyl, tri(isopropyl)silyl, tri(n-butyl)silyl, tri(1-methylprop-1-yl)silyl, tri(2-methylprop-1-yl)silyl, tri(1,1-dimethyleth-1-yl)silyl, tri(2,2-dimethyleth-1-yl)silyl.

The term "oxo" as used herein refers to an oxygen atom which is bound to a carbon atom or sulfur atom via a double bound.

The term "methylidene" as used herein refers to a $CH_2$ group connected to a carbon atom via a double bond.

The term "halomethylidene" as used herein refers to a $CX_2$ group connected to a carbon atom via a double bond, wherein X is halogen.

If the compounds can form, through a hydrogen shift, tautomers whose structure is not formally covered by the general formula (I), these tautomers are nevertheless covered by the definition of the inventive compounds of the general formula (I), unless a particular tautomer is under consideration. For example, many carbonyl compounds may be present both in the keto form and in the enol form, both forms being encompassed by the definition of the compound of the general formula (I).

Depending on the nature of the substituents and the manner in which they are attached, the compounds of the general formula (I) may be present as stereoisomers. The general formula (I) embraces all possible stereoisomers defined by the specific three-dimensional form thereof, such as atropisomers, enantiomers, diastereomers, Z and E isomers. If, for example, one or more alkenyl groups are present, diastereomers (Z and E isomers) may occur. If, for example, one or more asymmetric carbon atoms are present, atropisomers, enantiomers and diastereomers may occur. Stereoisomers can be obtained from the mixtures obtained in the preparation by customary separation methods. The chromatographic separation can be affected either on the analytical scale to find the enantiomeric excess or the diastereomeric excess, or else on the preparative scale to produce test specimens for biological testing. It is likewise possible to selectively prepare stereoisomers by using stereoselective reactions with use of optically active starting materials and/or auxiliaries. The invention thus also relates to all stereoisomers which are embraced by the general formula (I), but are not shown in their specific stereomeric form, unless specified in the experimental section, and to mixtures thereof. Differences in stereochemistry may have an impact on biological effects.

The compositions of the invention may contain further components, for example other active ingredients to counter harmful organisms such as harmful plants, plant-damaging animals or plant-damaging fungi, especially active ingredients from the group of the herbicides, fungicides, insecticides, acaricides, nematicides and miticides, and related substances, or else other kinds of active ingredients for crop protection (e.g. resistance inductors), crop plant-protecting active ingredients (safeners, antidotes), plant growth regulators, and/or additions and/or formulation auxiliaries that are customary in crop protection. The components may be formulated together here (ready-to-use formulation) and employed as such, or they may be formulated separately and employed together, for example in a tankmix or in sequential application.

The individual active herbicidal ingredients of the general formula (I) present as component (A) are also referred to hereinafter as compound(s) (A), active ingredient(s) (A), component(s) (A), or herbicide(s) (A).

Correspondingly, the individual active herbicidal ingredients present as component (B) are also referred to hereinafter as compound(s) (B), active ingredient(s) (B), component(s) (B), or herbicide(s) (B).

An advantageous property of the inventive combination of herbicides (A) and (B) is found to be that active ingredients (A) and (B) are compatible with one another, meaning that they can be employed together without occurrence of significant chemical incompatibility between the active ingredients (A) and/or (B) that leads to destruction of one or more active ingredients. This avoids any reduction in the active ingredient content in formulations or spray liquors. The favourable compatibility also extends to the biological properties of the active ingredients on combined use. For instance, antagonistic effects are generally not observed in the case of control of harmful plants with the active ingredient combinations of the invention. The active ingredients (A) and (B) are thus particularly suitable for employment together with or in addition to further active ingredients for crop protection or agrochemicals. The combined application enabled permits the utilization of advantageous effects, for example the broadening of the spectrum of harmful plants to be controlled on application, or the reduction of the application rate of the individual herbicides (A) or (B) compared to the respective application rate of the herbicide in question in the case of individual application. It is thus possible to influence the degradation characteristics of the active ingredients and to achieve more favourable conditions for the subsequent growing of crop plants. A further advantage is considered to be that the development of resistances of the harmful plants

to the active ingredients can often be significantly reduced or avoided through the combination of active ingredients having different mechanisms of action.

More particularly, superadditive (= synergistic) effects surprisingly occur in the case of combined use of active ingredients (A) and (B) for a greater number of economically important harmful plants. The activity in the combination is higher here than the expected sum of the activities of the individual herbicides used. The synergistic effects allow the application rate to be reduced further, a broader spectrum of broadleaved weeds and weed grasses to be controlled, a more rapid onset of the herbicidal action, longer persistence, better control of the harmful plants with only one or a few applications, and extension of the application period possible. To some extent, the use of the products also reduces the amount of harmful ingredients, such as nitrogen or oleic acid, and their introduction into the soil.

Said properties and advantages are desirable in practical weed control in order to keep agricultural crops clear of unwanted competing plants and hence to ensure and/or increase the yields in terms of quality and quantity. The technical standard is clearly surpassed by the novel combinations with regard to the properties described.

The synergistic effects are observed in the case of joint deployment of active ingredients (A) and (B) but can also frequently occur in the case of offset application (splitting). It is also possible to apply the herbicides (A) or (B) or the herbicidal composition (A) and (B) in multiple portions (sequential application). For example, one or more pre-emergence applications may be followed by a post-emergence application, or an early post-emergence application may be followed by a moderately late or late post-emergence application. Preference is given to the simultaneous or immediately successive application of the active ingredients of the respective combination, if appropriate in several portions. But application of the individual active ingredients of a combination at different times is also possible and may be advantageous in the individual case. It is also possible to integrate other crop protection products into the system for application, for example the other active ingredients mentioned (other herbicides, fungicides, insecticides, acaricides etc.) and/or various auxiliaries, adjuvants and/or applications of fertilizer.

Application by the pre-emergence method or by the post-emergence method, according to the context in which the terms are used, is respectively understood to mean the application of the active ingredients before and after the visible appearance of the harmful plants above the ground, or the use of the active ingredients against the harmful plants before emergence of the crop plants and after emergence of the crop plants.

In the general formula (I) for compounds of the active herbicidal ingredients (A) and all the formulae that follow, the following definitions are applicable:
According to the nature of the substituents and the way in which they are joined, the compounds of the formula (I) may be present as stereoisomers. If, for example, there are one or more asymmetrically substituted carbon atoms and/or sulfoxides, it is possible for enantiomers and diastereomers to occur. Stereoisomers can be obtained from the mixtures obtained in the preparation by customary separation methods, for example by chromatographic separation processes. It is likewise possible to selectively prepare stereoisomers by using stereoselective reactions with use of optically active starting materials and/or auxiliaries.

The invention also relates to all stereoisomers and mixtures thereof which are encompassed by the formula (I) but not defined specifically. For the sake of simplicity, however, reference will always be made hereinafter to compounds of the formula (I), even though this means not only the pure compounds but also, if appropriate, mixtures with different proportions of isomeric compounds.

According to the nature of the substituents defined above, the compounds of the formula (I) have acidic properties and can form salts, and if appropriate also internal salts or adducts with inorganic or organic bases or with metal ions. If the compounds of the formula (I) bear hydroxyl, carboxyl or other groups which induce acidic properties, these compounds can be reacted with bases to give salts.Suitable bases are, for example, hydroxides, carbonates, hydrogencarbonates of the alkali metals and alkaline earth metals, especially those of sodium, potassium, magnesium and calcium, and also ammonia, primary, secondary and tertiary amines having ($C_1$-$C_4$)-alkyl groups, mono-, di- and trialkanolamines of ($C_1$-$C_4$)-alkanols, choline and chlorocholine, and organic amines, such as trialkylamines, morpholine, piperidine or pyridine. These salts are compounds in which the acidic hydrogen is replaced by an agriculturally suitable cation, for example metal salts, especially alkali metal salts or alkaline earth metal salts, especially sodium and potassium salts, or else ammonium salts, salts with organic amines or quaternary ammonium salts, for example with cations of the formula $[NRR'R''R''']^+$ in which R to R''' are each independently an organic radical, especially alkyl, aryl, aralkyl or alkylaryl. Also suitable are alkylsulfonium and alkylsulfoxonium salts, such as ($C_1$-$C_4$)-trialkylsulfonium and ($C_1$-$C_4$)-trialkylsulfoxonium salts.

The compounds of the formula (I) can form salts by addition of a suitable inorganic or organic acid, for example mineral acids, for example HCl, HBr, $H_2SO_4$, $H_3PO_4$ or $HNO_3$, or organic acids, for example carboxylic acids such as formic acid, acetic acid, propionic acid, oxalic acid, lactic acid or salicylic acid or sulfonic acids, for example p-toluenesulfonic acid, onto a basic group, for example amino, alkylamino, dialkylamino, piperidino, morpholino or pyridino. In such a case, these salts comprise the conjugate base of the acid as the anion.

Suitable substituents present in deprotonated form, for example sulfonic acids or carboxylic acids, may form internal salts with groups which for their part can be protonated, such as amino groups.

If a group is polysubstituted by radicals, this means that this group is substituted by one or more identical or different radicals from those mentioned.

In all the formulae specified hereinafter, the substituents and symbols have the same meaning as described in the general formula (I) of the herbicides (A), unless defined differently. Arrows in a chemical formula denote the points at which it is joined to the rest of the molecule.

There follows a description of preferred, more preferred, and even more preferred meanings for each of the individual substituents of the herbicides (A) of the general formula (I), as shown above. The other substituents of the herbicides (A) of the general formula (I) which are not specified hereinafter have the definition given above.

In a preferred embodiment of the present invention, herbicidally active substances (A) are represented by compounds of the general formula (I) in which

W represents a group W-1 to W-3

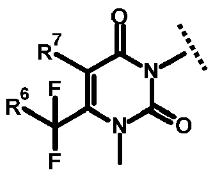
W-1

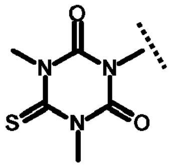
W-2

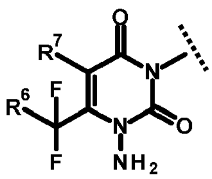
W-3

$R^1$ represents fluorine,

$R^2$ represents chlorine, bromine, or cyano,

$R^3$ and $R^4$ independently of each other represent hydrogen, methyl, ethyl, or

$R^3$ and $R^4$ together with the carbon atom to which they are bonded form a fully saturated, or partly saturated 3- to 6-membered carbocyclic ring optionally having further substitution,

$R^5$ represents hydrogen, methyl, ethyl, prop-1-yl,

$R^6$ represents fluorine,

$R^7$ represents hydrogen,

Q represents a group Q-1 bis Q-500 as outlined below

| | | | | |
|---|---|---|---|---|
| 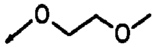 | 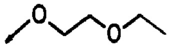 | 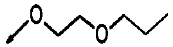 | 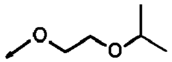 | 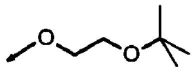 |
| Q-1 | Q-2 | Q-3 | Q-4 | Q-5 |
| | | | | |
| 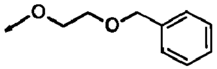 | 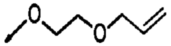 | 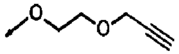 | 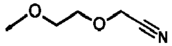 | 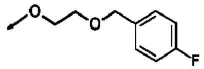 |
| Q-6 | Q-7 | Q-8 | Q-9 | Q-10 |
| | | | | |
| 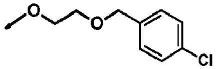 | 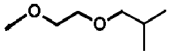 | 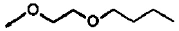 | 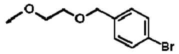 | 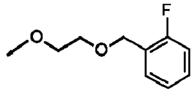 |
| Q-11 | Q-12 | Q-13 | Q-14 | Q-15 |
| | | | | |
| 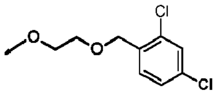 | 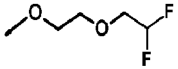 | 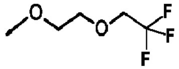 | 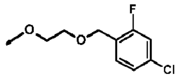 | 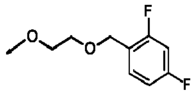 |
| Q-16 | Q-17 | Q-18 | Q-19 | Q-20 |
| | | | | |
| 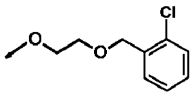 | 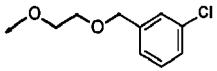 | 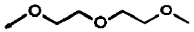 | 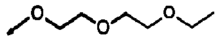 | 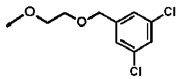 |
| Q-21 | Q-22 | Q-23 | Q-24 | Q-25 |
| | | | | |
| 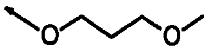 | 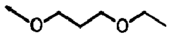 | 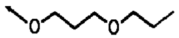 | 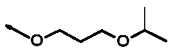 | 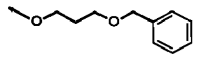 |
| Q-26 | Q-27 | Q-28 | Q-29 | Q-30 |
| | | | | |

(continued)

| | | | | |
|---|---|---|---|---|
| 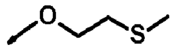 | 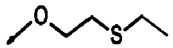 | 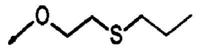 | 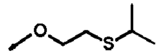 | 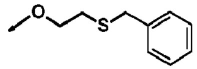 |
| Q-31 | Q-32 | Q-33 | Q-34 | Q-35 |
| | | | | |
| 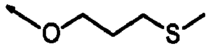 | 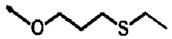 | 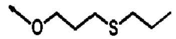 | 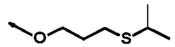 | 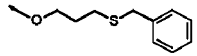 |
| Q-36 | Q-37 | Q-38 | Q-39 | Q-40 |
| | | | | |
| 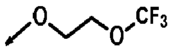 | 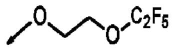 | 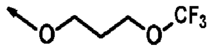 | 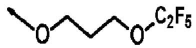 | 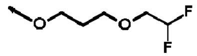 |
| Q-41 | Q-42 | Q-43 | Q-44 | Q-45 |
| | | | | |
| 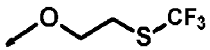 | 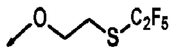 | 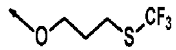 | 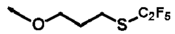 | 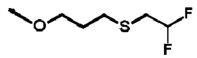 |
| Q-46 | Q-47 | Q-48 | Q-49 | Q-50 |
| | | | | |
| 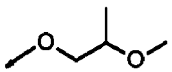 | 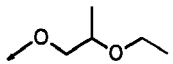 | 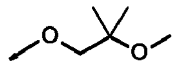 | 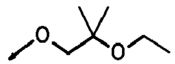 | 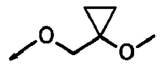 |
| Q-51 | Q-52 | Q-53 | Q-54 | Q-55 |
| | | | | |
| 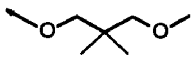 | 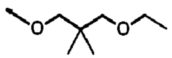 | 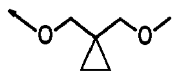 | 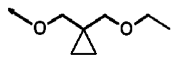 | 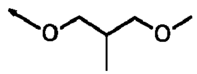 |
| Q-56 | Q-57 | Q-58 | Q-59 | Q-60 |
| | | | | |
| 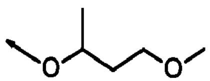 | 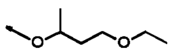 | 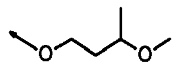 | 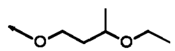 | 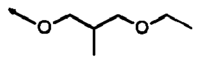 |

(continued)

| | | | | |
|---|---|---|---|---|
| Q-61 | Q-62 | Q-63 | Q-64 | Q-65 |
| | | | | |
| 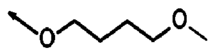 | 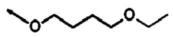 | 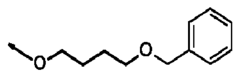 | 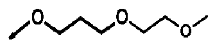 | 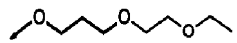 |
| Q-66 | Q-67 | Q-68 | Q-69 | Q-70 |
| | | | | |
| 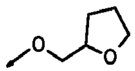 | 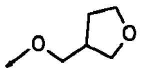 | 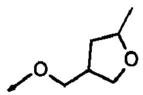 | 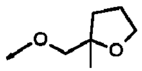 | 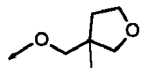 |
| Q-71 | Q-72 | Q-73 | Q-74 | Q-75 |
| 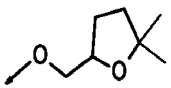 | 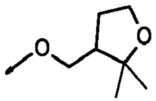 | 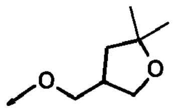 | 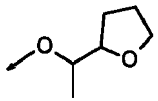 | 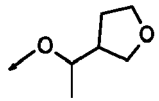 |
| Q-76 | Q-77 | Q-78 | Q-79 | Q-80 |
| | | | | |
| 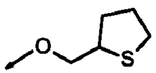 | 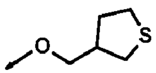 | 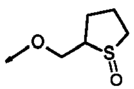 | 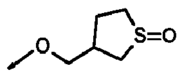 | 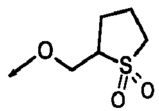 |
| Q-81 | Q-82 | Q-83 | Q-84 | Q-85 |
| | | | | |
| 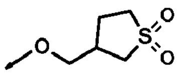 | 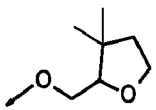 | 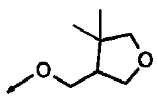 | 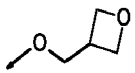 | 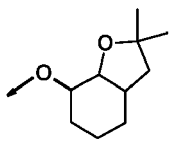 |
| Q-86 | Q-87 | Q-88 | Q-89 | Q-90 |
| | | | | |

(continued)

| | | | | |
|---|---|---|---|---|
| 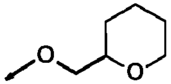 | 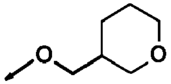 | 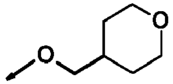 | 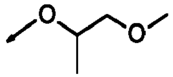 | 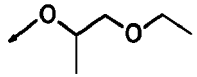 |
| Q-91 | Q-92 | Q-93 | Q-94 | Q-95 |
| 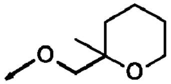 | 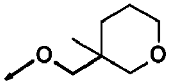 | 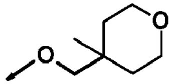 | 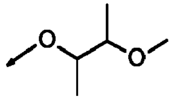 | 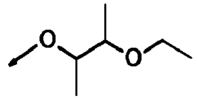 |
| Q-96 | Q-97 | Q-98 | Q-99 | Q-100 |
| 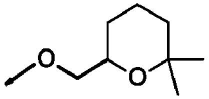 | 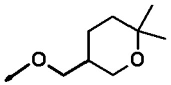 | 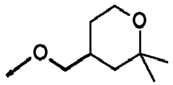 | 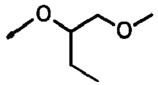 | 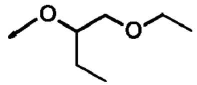 |
| Q-101 | Q-102 | Q-103 | Q-104 | Q-105 |
| 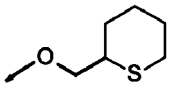 | 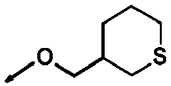 | 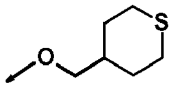 | 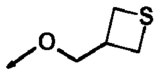 | 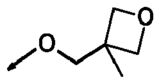 |
| Q-106 | Q-107 | Q-108 | Q-109 | Q-110 |
| 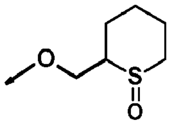 | 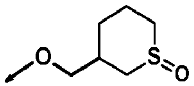 | 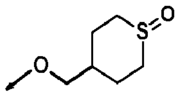 | 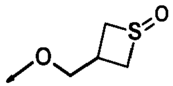 | 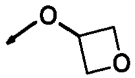 |
| Q-111 | Q-112 | Q-113 | Q-114 | Q-115 |

(continued)

| | | | | |
|---|---|---|---|---|
| 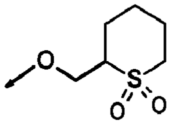 | 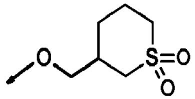 | 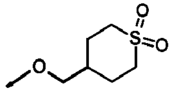 | 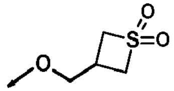 | 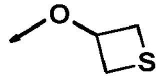 |
| Q-116 | Q-117 | Q-118 | Q-119 | Q-120 |
| | | | | |
| 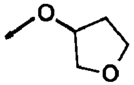 | 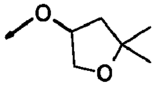 | 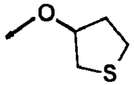 | 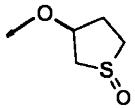 | 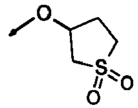 |
| Q-121 | Q-122 | Q-123 | Q-124 | Q-125 |
| | | | | |
| 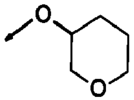 | 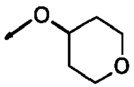 | 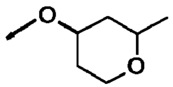 | 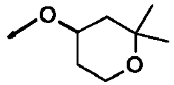 | 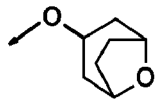 |
| Q-126 | Q-127 | Q-128 | Q-129 | Q-130 |
| | | | | |
| 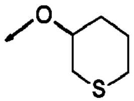 | 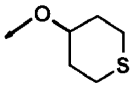 | 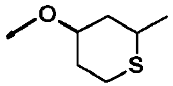 | 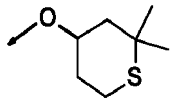 | 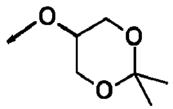 |
| Q-131 | Q-132 | Q-133 | Q-134 | Q-135 |
| | | | | |
| 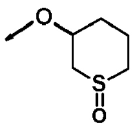 | 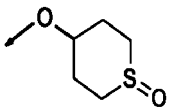 | 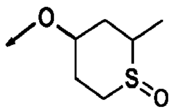 | 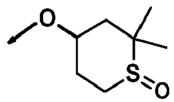 | 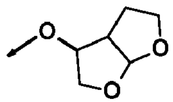 |
| Q-136 | Q-137 | Q-138 | Q-139 | Q-140 |
| | | | | |

(continued)

| | | | | |
|---|---|---|---|---|
| 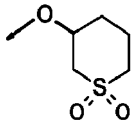 | 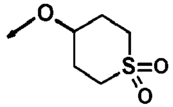 | 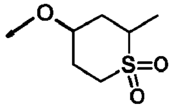 | 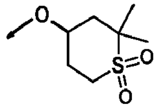 | 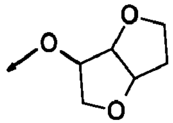 |
| Q-141 | Q-142 | Q-143 | Q-144 | Q-145 |
| | | | | |
| 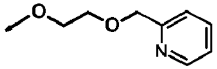 | 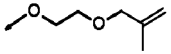 | 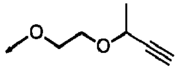 | 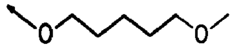 | 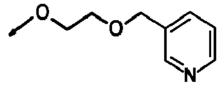 |
| Q-146 | Q-147 | Q-148 | Q-149 | Q-150 |
| 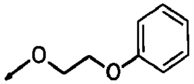 | 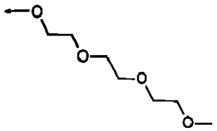 | 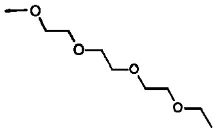 | 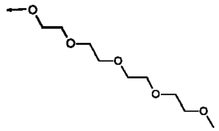 | 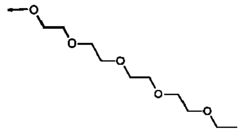 |
| Q-151 | Q-152 | Q-153 | Q-154 | Q-155 |
| | | | | |
| 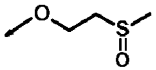 | 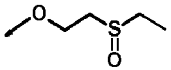 | 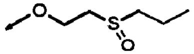 | 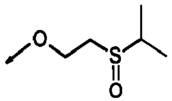 | 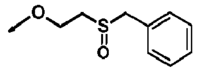 |
| Q-156 | Q-157 | Q-158 | Q-159 | Q-160 |
| | | | | |
| 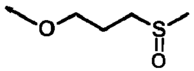 | 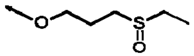 | 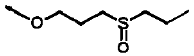 | 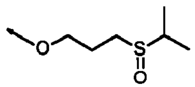 | 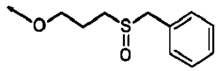 |
| Q-161 | Q-162 | Q-163 | Q-164 | Q-165 |
| | | | | |
| 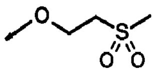 | 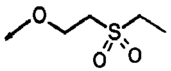 | 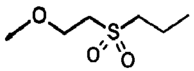 | 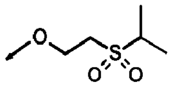 | 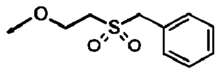 |

(continued)

| | | | | |
|---|---|---|---|---|
| Q-166 | Q-167 | Q-168 | Q-169 | Q-170 |
| | | | | |
| 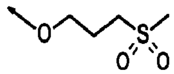 | 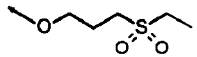 | 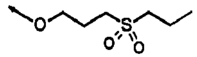 | 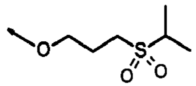 | 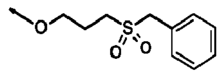 |
| Q-171 | Q-172 | Q-173 | Q-174 | Q-175 |
| | | | | |
| 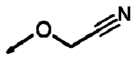 | 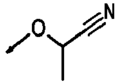 | 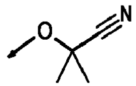 | 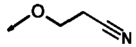 | 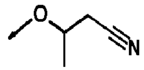 |
| Q-176 | Q-177 | Q-178 | Q-179 | Q-180 |
| | | | | |
| 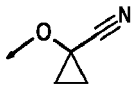 | 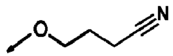 | 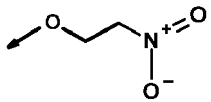 | 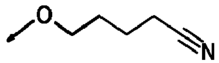 | 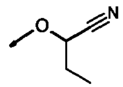 |
| Q-181 | Q-182 | Q-183 | Q-184 | Q-185 |
| | | | | |
| 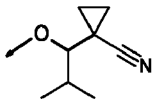 | 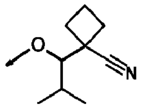 | 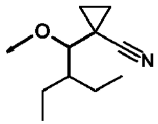 | 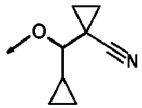 | 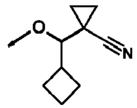 |
| Q-186 | Q-187 | Q-188 | Q-189 | Q-190 |
| 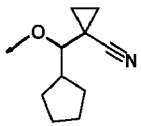 | 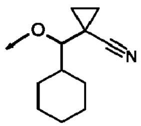 | 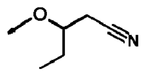 | 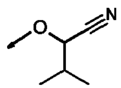 | 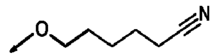 |
| Q-191 | Q-192 | Q-193 | Q-194 | Q-195 |
| | | | | |

(continued)

| | | | | |
|---|---|---|---|---|
| 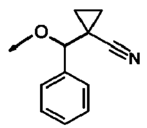 | 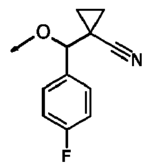 | 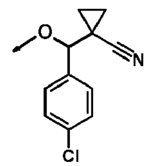 | 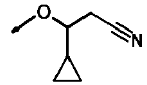 | 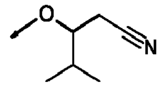 |
| Q-196 | Q-197 | Q-198 | Q-199 | Q-200 |
| | | | | |
| 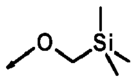 | 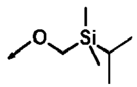 | 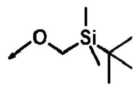 | 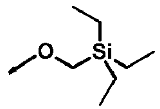 | 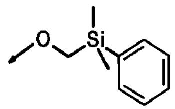 |
| Q-201 | Q-202 | Q-203 | Q-204 | Q-205 |
| | | | | |
| 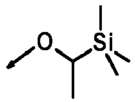 | 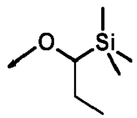 | 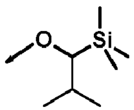 | 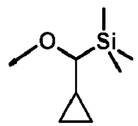 | 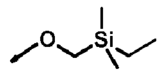 |
| Q-206 | Q-207 | Q-208 | Q-209 | Q-210 |
| | | | | |
| 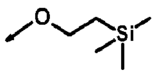 | 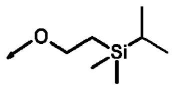 | 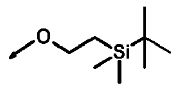 | 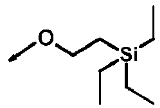 | 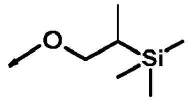 |
| Q-211 | Q-212 | Q-213 | Q-214 | Q-215 |
| | | | | |
| 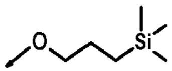 | 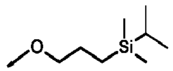 | 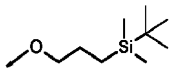 | 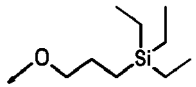 | 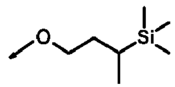 |
| Q-216 | Q-217 | Q-218 | Q-219 | Q-220 |
| | | | | |

(continued)

| | | | | |
|---|---|---|---|---|
| 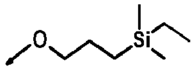 | 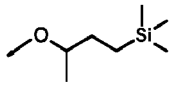 | 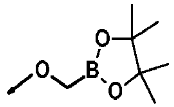 | 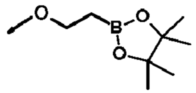 | 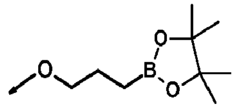 |
| Q-221 | Q-222 | Q-223 | Q-224 | Q-225 |
| 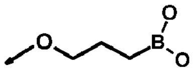 | 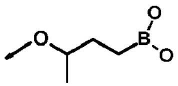 | 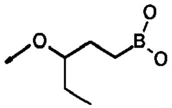 | 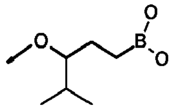 | 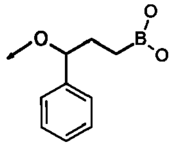 |
| Q-226 | Q-227 | Q-228 | Q-229 | Q-230 |
| | | | | |
| 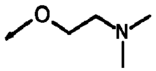 | 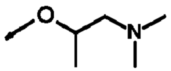 | 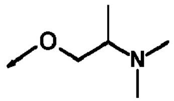 | 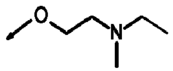 | 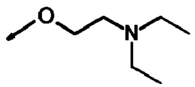 |
| Q-231 | Q-232 | Q-233 | Q-234 | Q-235 |
| | | | | |
| 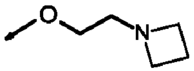 | 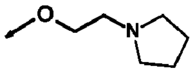 | 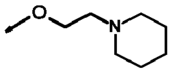 | 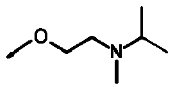 | 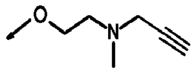 |
| Q-236 | Q-237 | Q-238 | Q-239 | Q-240 |
| | | | | |
| 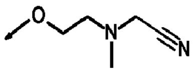 | 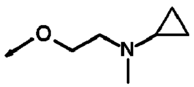 | 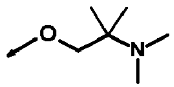 | 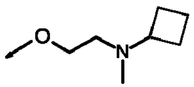 | 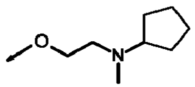 |
| Q-241 | Q-242 | Q-243 | Q-244 | Q-245 |
| | | | | |

(continued)

| | | | | |
|---|---|---|---|---|
| 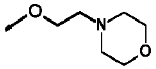 | 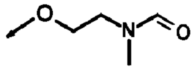 | 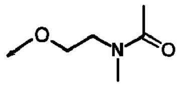 | 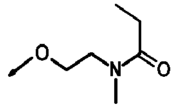 | 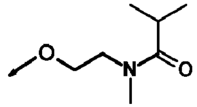 |
| Q-246 | Q-247 | Q-248 | Q-249 | Q-250 |
| | | | | |
| 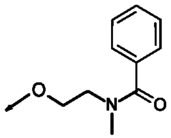 | 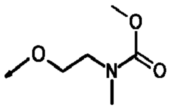 | 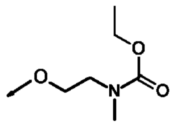 | 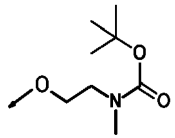 | 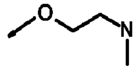 |
| Q-251 | Q-252 | Q-253 | Q-254 | Q-255 |
| | | | | |
| 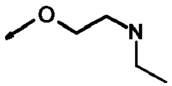 | 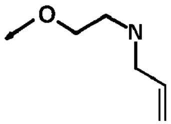 | 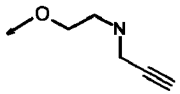 | 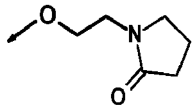 | 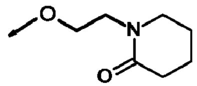 |
| Q-256 | Q-257 | Q-258 | Q-259 | Q-260 |
| | | | | |
| 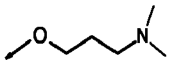 | 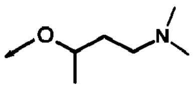 | 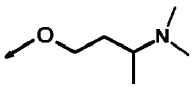 | 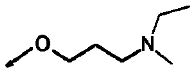 | 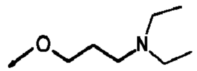 |
| Q-261 | Q-262 | Q-263 | Q-264 | Q-265 |
| | | | | |
| 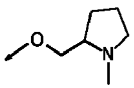 | 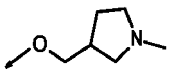 | 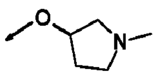 | 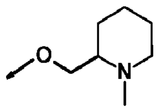 | 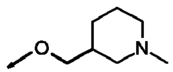 |
| Q-266 | Q-267 | Q-268 | Q-269 | Q-270 |
| | | | | |

(continued)

| | | | | |
|---|---|---|---|---|
| 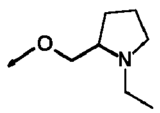 | 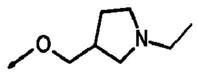 | 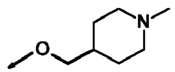 | 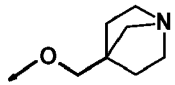 | 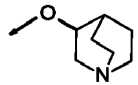 |
| Q-271 | Q-272 | Q-273 | Q-274 | Q-275 |
| | | | | |
| 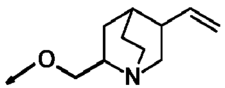 | 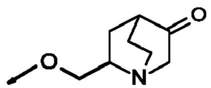 | 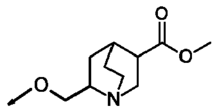 | 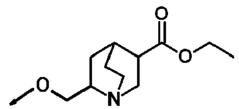 | 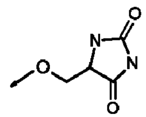 |
| Q-276 | Q-277 | Q-278 | Q-279 | Q-280 |
| | | | | |
| 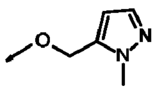 | 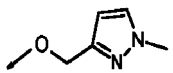 | 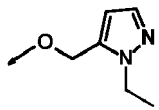 | 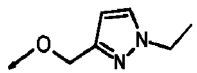 | 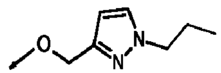 |
| Q-281 | Q-282 | Q-283 | Q-284 | Q-285 |
| | | | | |
| 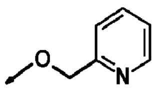 | 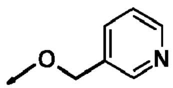 | 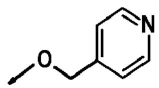 | 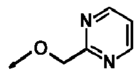 | 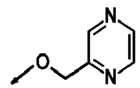 |
| Q-286 | Q-287 | Q-288 | Q-289 | Q-290 |
| | | | | |
| 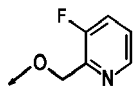 | 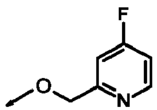 | 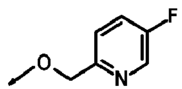 | 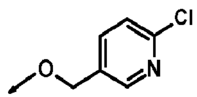 | 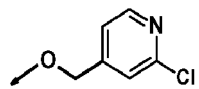 |
| Q-291 | Q-292 | Q-293 | Q-294 | Q-295 |
| | | | | |

(continued)

| | | | | |
|---|---|---|---|---|
| 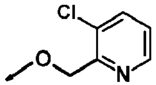 | 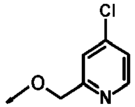 | 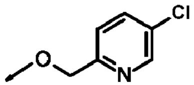 | 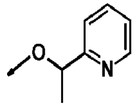 | 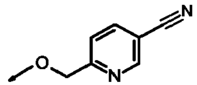 |
| Q-296 | Q-297 | Q-298 | Q-299 | Q-300 |
| 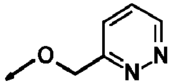 | 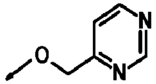 | 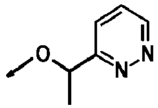 | 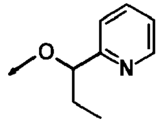 | 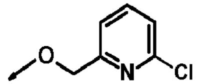 |
| Q-301 | Q-302 | Q-303 | Q-304 | Q-305 |
| | | | | |
| 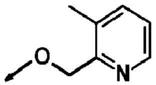 | 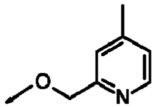 | 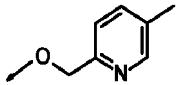 | 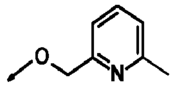 | 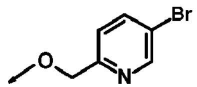 |
| Q-306 | Q-307 | Q-308 | Q-309 | Q-310 |
| | | | | |
| 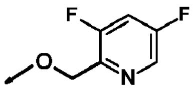 | 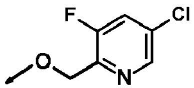 | 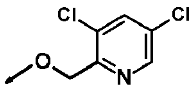 | 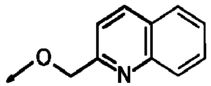 | 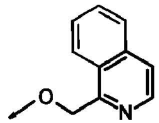 |
| Q-311 | Q-312 | Q-313 | Q-314 | Q-315 |
| | | | | |
| 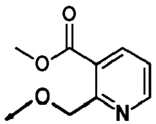 | 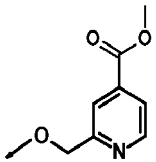 | 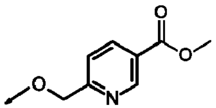 | 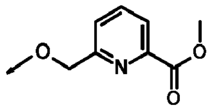 | 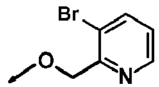 |
| Q-316 | Q-317 | Q-318 | Q-319 | Q-320 |
| | | | | |

(continued)

| | | | | |
|---|---|---|---|---|
| 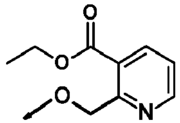 | 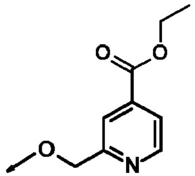 | 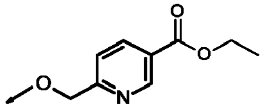 | 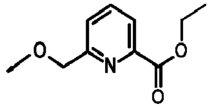 | 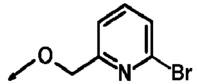 |
| Q-321 | Q-322 | Q-323 | Q-324 | Q-325 |
| | | | | |
| 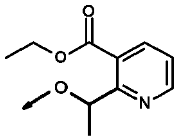 | 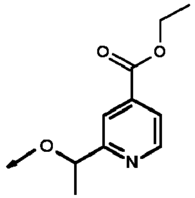 | 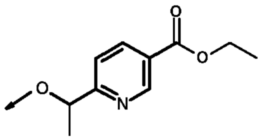 | 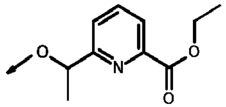 | 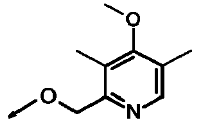 |
| Q-326 | Q-327 | Q-328 | Q-329 | Q-330 |
| 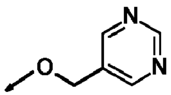 | 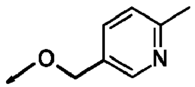 | 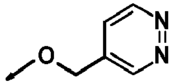 | 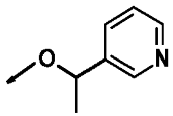 | 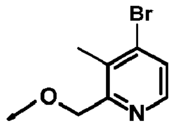 |
| Q-331 | Q-332 | Q-333 | Q-334 | Q-335 |
| | | | | |
| 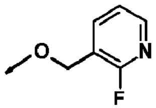 | 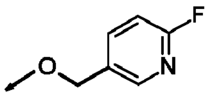 | 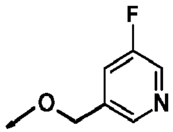 | 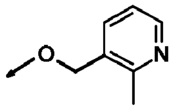 | 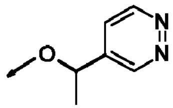 |
| Q-336 | Q-337 | Q-338 | Q-339 | Q-340 |
| 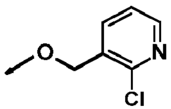 | 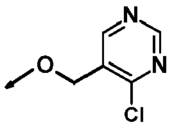 | 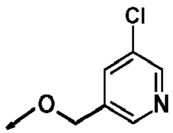 | 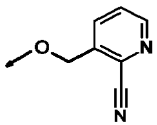 | 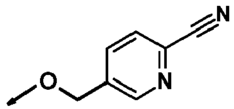 |

(continued)

| | | | | |
|---|---|---|---|---|
| Q-341 | Q-342 | Q-343 | Q-344 | Q-345 |
| | | | | |
| 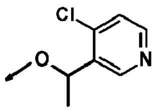 | 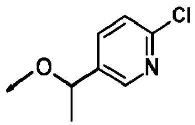 | 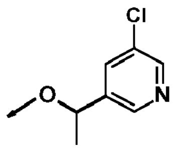 | 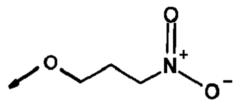 | 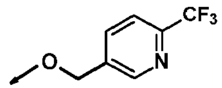 |
| Q-346 | Q-347 | Q-348 | Q-349 | Q-350 |
| | | | | |
| 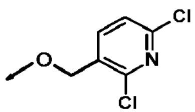 | 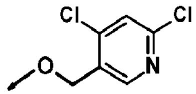 | 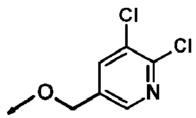 | 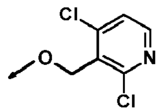 | 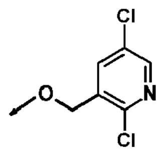 |
| Q-351 | Q-352 | Q-353 | Q-354 | Q-355 |
| | | | | |
| 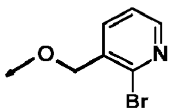 | 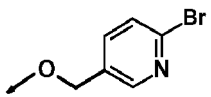 | 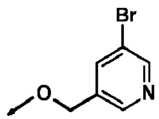 | 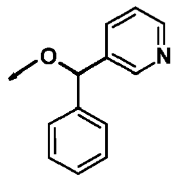 | 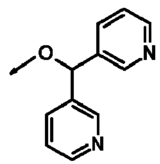 |
| Q-356 | Q-357 | Q-358 | Q-359 | Q-360 |
| | | | | |
| 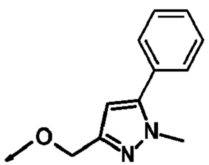 | 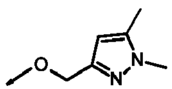 | 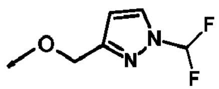 | 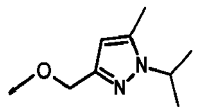 | 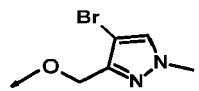 |
| Q-361 | Q-362 | Q-363 | Q-364 | Q-365 |

(continued)

| | | | | |
|---|---|---|---|---|
| 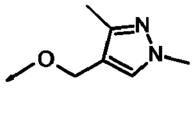 | 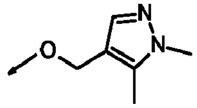 | 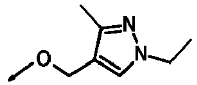 | 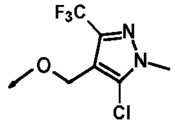 | 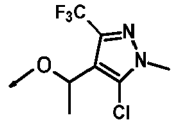 |
| Q-366 | Q-367 | Q-368 | Q-369 | Q-370 |
| | | | | |
| 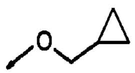 | 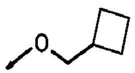 | 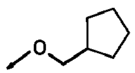 | 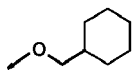 | 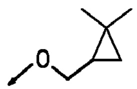 |
| Q-371 | Q-372 | Q-373 | Q-374 | Q-375 |
| | | | | |
| 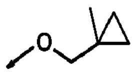 | 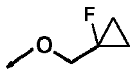 | 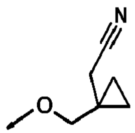 | 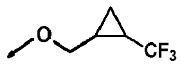 | 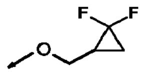 |
| Q-376 | Q-377 | Q-378 | Q-379 | Q-380 |
| | | | | |
| 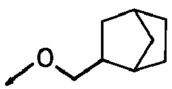 | 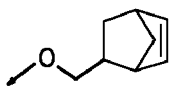 | 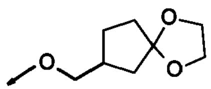 | 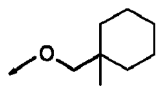 | 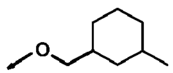 |
| Q-381 | Q-382 | Q-383 | Q-384 | Q-385 |
| | | | | |
| 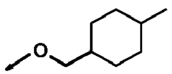 | 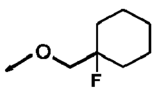 | 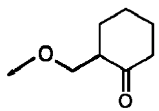 | 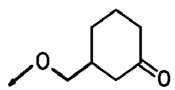 | 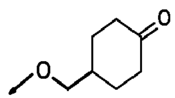 |
| Q-386 | Q-387 | Q-388 | Q-389 | Q-390 |
| | | | | |

(continued)

| | | | | |
|---|---|---|---|---|
| 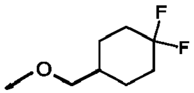 | 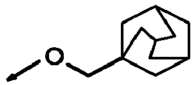 | 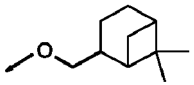 | 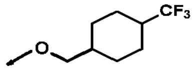 | 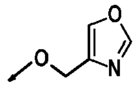 |
| Q-391 | Q-392 | Q-393 | Q-394 | Q-395 |
| | | | | |
| 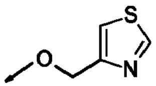 | 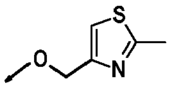 | 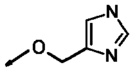 | 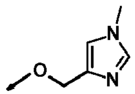 | 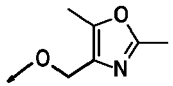 |
| Q-396 | Q-397 | Q-398 | Q-399 | Q-400 |
| | | | | |
| 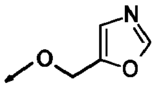 | 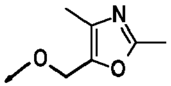 | 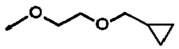 | 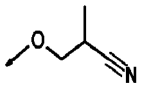 | 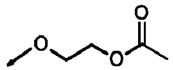 |
| Q-401 | Q-402 | Q-403 | Q-404 | Q-405 |
| 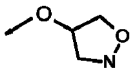 | 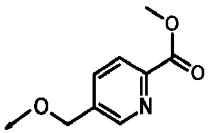 | 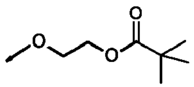 | 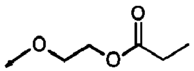 | 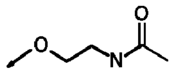 |
| Q-406 | Q-407 | Q-408 | Q-409 | Q-410 |
| | | | | |
| 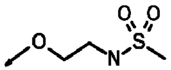 | 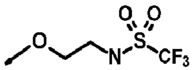 | 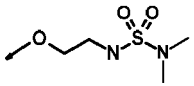 | 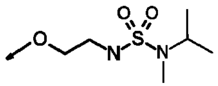 | 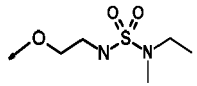 |
| Q-411 | Q-412 | Q-413 | Q-414 | Q-415 |
| | | | | |
| 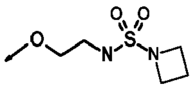 | 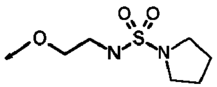 | 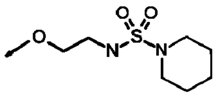 | 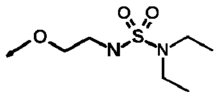 | 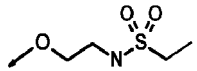 |

(continued)

| Q-416 | Q-417 | Q-418 | Q-419 | Q-420 |
|---|---|---|---|---|
| | | | | |
| 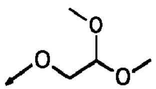 | 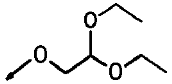 | 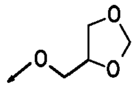 | 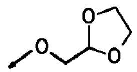 | 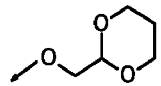 |
| Q-421 | Q-422 | Q-423 | Q-424 | Q-425 |
| | | | | |
| 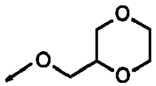 | 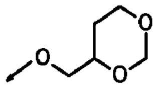 | 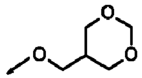 | 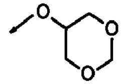 | 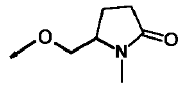 |
| Q-426 | Q-427 | Q-428 | Q-429 | Q-430 |
| | | | | |
| 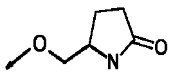 | 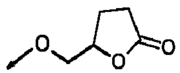 | 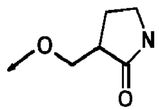 | 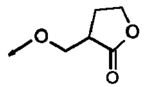 | 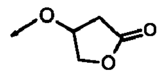 |
| Q-431 | Q-432 | Q-433 | Q-434 | Q-435 |
| | | | | |
| 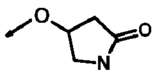 | 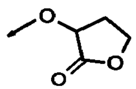 | 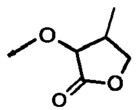 | 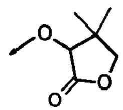 | 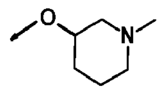 |
| Q-436 | Q-437 | Q-438 | Q-439 | Q-440 |
| | | | | |
| 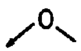 | 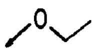 | 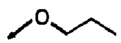 | 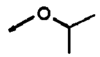 | 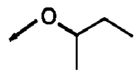 |
| Q-441 | Q-442 | Q-443 | Q-444 | Q-445 |
| 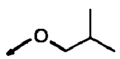 | 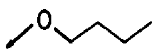 | 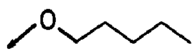 | 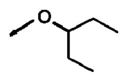 | 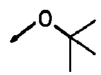 |

(continued)

| Q-446 | Q-447 | Q-448 | Q-449 | Q-450 |
|---|---|---|---|---|
| | | | | |
| 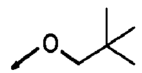 | 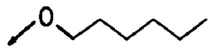 | 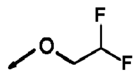 | 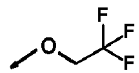 | 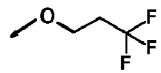 |
| Q-451 | Q-452 | Q-453 | Q-454 | Q-455 |
| | | | | |
| 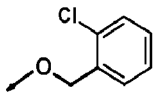 | 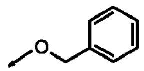 | 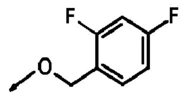 | 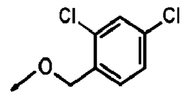 | 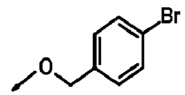 |
| Q-456 | Q-457 | Q-458 | Q-459 | Q-460 |
| | | | | |
| 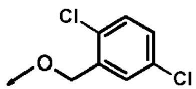 | 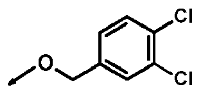 | 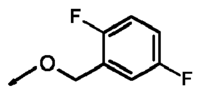 | 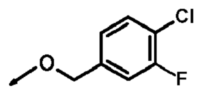 | 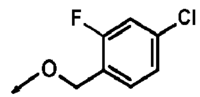 |
| Q-461 | Q-462 | Q-463 | Q-464 | Q-465 |
| | | | | |
| 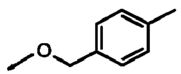 | 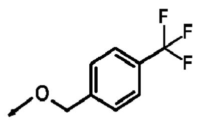 | 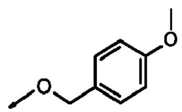 | 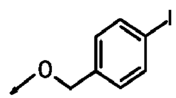 | 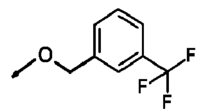 |
| Q-466 | Q-467 | Q-468 | Q-469 | Q-470 |
| | | | | |
| 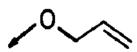 | 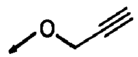 | 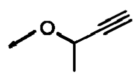 | 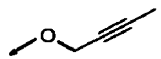 | 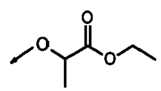 |
| Q-471 | Q-472 | Q-473 | Q-474 | Q-475 |
| | | | | |

(continued)

| | | | | |
|---|---|---|---|---|
| 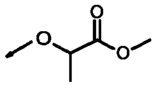 | 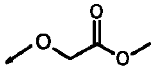 | 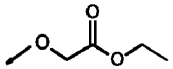 | 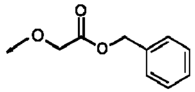 | 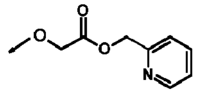 |
| Q-476 | Q-477 | Q-478 | Q-479 | Q-480 |
| | | | | |
| 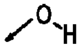 | 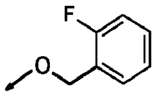 | 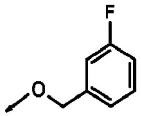 | 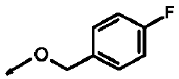 | 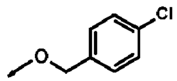 |
| Q-481 | Q-482 | Q-483 | Q-484 | Q-485 |
| 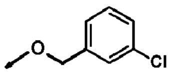 | 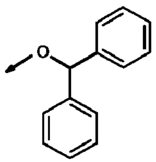 | 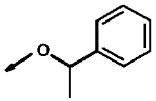 | 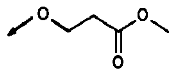 | 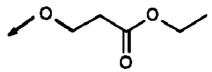 |
| Q-486 | Q-487 | Q-488 | Q-489 | Q-490 |
| | | | | |
| 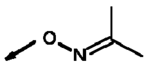 | 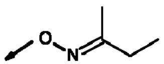 | 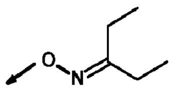 | 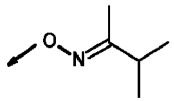 | 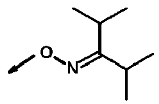 |
| Q-491 | Q-492 | Q-493 | Q-494 | Q-495 |
| | | | | |
| 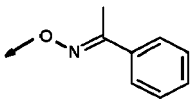 | 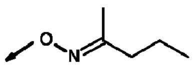 | 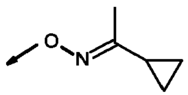 | 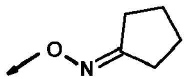 | 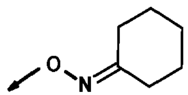 |
| Q-496 | Q-497 | Q-498 | Q-499 | Q-500 |

In a more preferred embodiment of the present invention, the herbicidal composition comprises at least one component (B) as defined above and further comprises preferably one or more compounds [component (A)] of the general formula (I) or the agrochemically compatible salts thereof [herbicides (A)] as represented by the following compounds (A1) to (A35):

methyl 2-{ [(E)-{2-chloro-4-fluoro-5-[3-methyl-2,6-dioxo-4-(trifluoromethyl)-3,6-dihydropyrimidin-1(2H)-yl]benzylidene}amino]oxy}propanoate (A1),

methyl (2R)-2-{[(E)-{2-chloro-4-fluoro-5-[3-methyl-2,6-dioxo-4-(trifluoromethyl)-3,6-dihydropyrimidin-1 (2H)-yl]benzylidene } amino] oxy }propanoate (A2),

methyl (2S)-2-{ [(E)-{2-chloro-4-fluoro-5-[3-methyl-2,6-dioxo-4-(trifluoromethyl)-3,6-dihydropyrimidin-1 (2H)-yl]benzylidene } amino] oxy }propanoate (A3),

methyl 2-{ [(Z)-{2-chloro-4-fluoro-5-[3-methyl-2,6-dioxo-4-(trifluoromethyl)-3,6-dihydropyrimidin-1(2H)-yl]benzylidene } amino] oxy}propanoate (A4),

2-{[(Z)-{2-chloro-4-fluoro-5-[3-methyl-2,6-dioxo-4-(trifluoromethyl)-3,6-dihydropyrimidin-1(2H)-yl]benzylidene}amino]oxy}propanoic acid (A5),

ethyl 2-{ [(E)-{2-chloro-4-fluoro-5-[3-methyl-2,6-dioxo-4-(trifluoromethyl)-3,6-dihydropyrimidin-1(2H)-yl]benzylidene } amino]oxy}propanoate (A6),

ethyl (2R)-2-{[(E)-{2-chloro-4-fluoro-5-[3-methyl-2,6-dioxo-4-(trifluoromethyl)-3,6-dihydropyrimidin-1(2H)-yl]benzylidene } amino]oxy}propanoate (A7),

ethyl (2S)-2-{[(E)-{2-chloro-4-fluoro-5-[3-methyl-2,6-dioxo-4-(trifluoromethyl)-3,6-dihydropyrimidin-1 (2H)-yl] benzylidene} amino]oxy}propanoate (A8),

2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoic acid (A9),

(2R)-2-{[(E)-{2-chloro-4-fluoro-5-[3-methyl-2,6-dioxo-4-(trifluoromethyl)-3,6-dihydropyrimidin-1(2H)-yl] benzylidene} amino] oxy }propanoic acid (A10),

(2S)-2-{[(E)-{2-chloro-4-fluoro-5-[3-methyl-2,6-dioxo-4-(trifluoromethyl)-3,6-dihydropyrimidin-1(2H)-yl] benzylidene} amino] oxy }propanoic acid (A11),

methyl 2-{[(E)-{2-chloro-4-fluoro-5-[3-methyl-2,6-dioxo-4-(trifluoromethyl)-3,6-dihydropyrimidin-1(2H)-yl]benzylidene} amino]oxy}-2-methylpropanoate (A12),

ethyl 2-{ [(E)-{2-chloro-4-fluoro-5-[3-methyl-2,6-dioxo-4-(trifluoromethyl)-3,6-dihydropyrimidin-1(2H)-yl] benzylidene} amino]oxy}-2-methylpropanoate (A13),

methyl 2-{ [(E)-{2-chloro-4-fluoro-5-[3-methyl-2,6-dioxo-4-(trifluoromethyl)-3,6-dihydropyrimidin-1(2H)-yl]benzylidene} amino]oxy}butanoate (A14),

methyl (2R)-2-{[(E)-{2-chloro-4-fluoro-5-[3-methyl-2,6-dioxo-4-(trifluoromethyl)-3,6-dihydropyrimidin-1 (2H)-yl]benzylidene}amino]oxy}butanoate (A15),

methyl (2S)-2-{[(E)-{2-chloro-4-fluoro-5-[3-methyl-2,6-dioxo-4-(trifluoromethyl)-3,6-dihydropyrimidin-1(2H)-yl]benzylidene} amino]oxy}butanoate (A16),

2-{[(E)-{2-chloro-4-fluoro-5-[3-methyl-2,6-dioxo-4-(trifluoromethyl)-3,6-dihydropyrimidin-1(2H)-yl]benzylidene} amino]oxy}butanoic acid (A17),

(2R)-2-{[(E)-{2-chloro-4-fluoro-5-[3-methyl-2,6-dioxo-4-(trifluoromethyl)-3,6-dihydropyrimidin-1(2H)-yl] benzylidene}amino]oxy}butanoic acid (A18),

(2S)-2-{[(E)-{2-chloro-4-fluoro-5-[3-methyl-2,6-dioxo-4-(trifluoromethyl)-3,6-dihydropyrimidin-1(2H)-yl] benzylidene}amino]oxy}butanoic acid (A19),

ethyl 2-{ [(E)-{2-chloro-4-fluoro-5-[3-methyl-2,6-dioxo-4-(trifluoromethyl)-3,6-dihydropyrimidin-1(2H)-yl]benzylidene}amino]oxy}butanoate (A20),

methyl 2-({(E)-[2-chloro-5-(3,5-dimethyl-2,6-dioxo-4-sulfanylidene-1,3,5-triazinan-1-yl)-4-fluorobenzylidene] amino}oxy)propanoate (A21),

methyl (2R)-2-({(E)-[2-chloro-5-(3,5-dimethyl-2,6-dioxo-4-sulfanylidene-1,3,5-triazinan-1-yl)-4-fluorobenzylidene] amino}oxy)propanoate (A22),

methyl (2S)-2-({(E)-[2-chloro-5-(3,5-dimethyl-2,6-dioxo-4-sulfanylidene-1,3,5-triazinan-1-yl)-4-fluorobenzylidene]amino}oxy)propanoate (A23),

2-({(E)-[2-chloro-5-(3,5-dimethyl-2,6-dioxo-4-sulfanylidene-1,3,5-triazinan-1-yl)-4-fluorobenzylidene] amino }oxy)propanoic acid (A24),

(2R)-2-([(E)-[2-chloro-5-(3,5-dimethyl-2,6-dioxo-4-sulfanyldene-1,3,5-triazinan-1-yl)-4-fluorobenzylidene] amino }oxy)propanoic acid (A25),

(2S)-2-([(E)-[2-chloro-5-(3,5-dimethyl-2,6-dioxo-4-sulfanyldene-1,3,5-triazinan-1-yl)-4-fluorobenzylidene] amino }oxy)propanoic acid (A26),

ethyl 2-({(E)-[2-chloro-5-(3,5-dimethyl-2,6-dioxo-4-sulfanylidene-1,3,5-triazinan-1-yl)-4-fluorobenzylidene] amino}oxy)propanoate (A27),

ethyl (2R)-2-({(E)-[2-chloro-5-(3,5-dimethyl-2,6-dioxo-4-sulfanylidene-1,3,5-triazinan-1-yl)-4-fluorobenzylidene] amino}oxy)propanoate (A28),

ethyl (2S)-2-({(E)-[2-chloro-5-(3,5-dimethyl-2,6-dioxo-4-sulfanylidene-1,3,5-triazinan-1-yl)-4-fluorobenzylidene] amino}oxy)propanoate (A29),

methyl 2-{[(E)-{5-[3-amino-2,6-dioxo-4-(trifluoromethyl)-3,6-dihydropyrimidin-1(2H)-yl]-2-chloro-4-fluorobenzylidene} amino]oxy}propanoate (A30),

methyl (2R)-2-{ [(E)-{5-[3-amino-2,6-dioxo-4-(trifluoromethyl)-3,6-dihydropyrimidin-1(2H)-yl]-2-chloro-4-fluorobenzylidene } amino]oxy}propanoate (A31),

methyl (2S)-2-{ [(E)-{5-[3-amino-2,6-dioxo-4-(trifluoromethyl)-3,6-dihydropyrimidin-1(2H)-yl]-2-chloro-4-fluorobenzylidene}amino]oxy}propanoate (A32),

2-{[(E)-{5-[3-amino-2,6-dioxo-4-(trifluoromethyl)-3,6-dihydropyrimidin-1(2H)-yl]-2-chloro-4-fluorobenzylidene}amino]oxy}propanoic acid (A33),

(2R)-2-{[(E)-{5-[3-amino-2,6-dioxo-4-(trifluoromethyl)-3,6-dihydropyrimidin-1(2H)-yl]-2-chloro-4-fluorobenzylidene}amino]oxy}propanoic acid (A34),

(2S)-2-{[(E)-{5-[3-amino-2,6-dioxo-4-(trifluoromethyl)-3,6-dihydropyrimidin-1(2H)-yl]-2-chloro-4-fluorobenzylidene}amino] oxy}propanoic acid (A35).

In a particularly preferred embodiment of the present invention, the herbicidal composition comprises at least one component (B) as defined above, and further comprises one or more compounds selected from (A1) to (A3), and (A6) to (A11) or the respective agrochemically compatible salts thereof as outlined below:

methyl 2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoate (A1),

methyl (2R)-2-{[(E)-{2-chloro-4-fluoro-5-[3-methyl-2,6-dioxo-4-(trifluoromethyl)-3,6-dihydropyrimidin-1 (2H)-yl]benzylidene } amino] oxy }propanoate (A2),

methyl (2S)-2-{ [(E)-{2-chloro-4-fluoro-5-[3-methyl-2,6-dioxo-4-(trifluoromethyl)-3,6-dihydropyrimidin-1 (2H)-yl]benzylidene}amino] oxy }propanoate (A3),

ethyl 2-{ [(E)-{2-chloro-4-fluoro-5-[3-methyl-2,6-dioxo-4-(trifluoromethyl)-3,6-dihydropyrimidin-1(2H)-yl]benzylidene}amino]oxy}propanoate (A6),

ethyl (2R)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoate (A7),

ethyl (2S)-2-{[(E)-{2-chloro-4-fluoro-5-[3-methyl-2,6-dioxo-4-(trifluoromethyl)-3,6-dihydropyrimidin-1 (2H)-yl] benzylidene}amino] oxy }propanoate (A8),

2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoic acid (A9),

(2R)-2-{[(E)-{2-chloro-4-fluoro-5-[3-methyl-2,6-dioxo-4-(trifluoromethyl)-3,6-dihydropyrimidin-1(2H)-yl] benzylidene}amino]oxy}propanoic acid (A10),

(2S)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoic acid (A11).

In an especially preferred embodiment of the present invention, the herbicidal composition comprises at least one component (B) as defined above, and further comprises one or more compound(s) (A1) to (A3) or the respective agrochemically compatible salts thereof [component (A)] as outlined below:

methyl 2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoate (A1),

methyl (2R)-2-{[(E)-{2-chloro-4-fluoro-5-[3-methyl-2,6-dioxo-4-(trifluoromethyl)-3,6-dihydropyrimidin-1 (2H)-yl]benzylidene } amino] oxy}propanoate (A2),

methyl (2S)-2-{[(E)-{2-chloro-4-fluoro-5-[3-methyl-2,6-dioxo-4-(trifluoromethyl)-3,6-dihydropyrimidin-1 (2H)-yl]benzylidene } amino] oxy }propanoate (A3).

The compounds of the formula (I) are known from the international application WO2021/139482 and can be prepared by the processes described therein.

The application rates of the herbicides (A) are in the range of 0.02 to 750 g of active substance per hectare (g a.i./ha hereinafter), preferably 0.05 to 400 g a.i./ha, especially 0.25 to 300 g a.i./ha. In the combinations according to the invention, and within the scope of the application rates mentioned by comparison to individual application, required application rates of the respective active ingredient are usually lower, preferably 0.02 to 250 g a.i./ha, especially 0.05 to 150 g a.i./ha, and most preferably 0.25 to 120 g a.i./ha.

Suitable combination partners (B) [= component (B) or herbicides (B)] can be selected from the group consisting of B1 and B2 or can represent the combination of B1 and B2 as defined above and applied in the range of application rates as known in principle and which are generally in the range of 0.01 to 300 g a.i./ha, preferably in the range of 0.02 to 200 g a.i./ha, especially 0.1 to 120 g a.i./ha. These application rate ranges apply for either B1 or B2 (binary combination with A) or the combination of B1 and B2 (ternary combination with A).

According to the invention, herbicidal compositions comprising active ingredient components (A) and (B) [with (B) representing B1 or B2 or the combination of B1 and B2], as defined above, in a weight ratio of 50:1 to 1:50, preferably 25:1 to 1:25, more preferably 10:1 to 1:10, even more preferably 5:1 to 1:5, can be employed.

In the context of the present invention, it is possible to combine the individual preferred, more preferred, and most preferred embodiments with one another as desired. Said that, herbicidal compositions comprising (A) one or more compounds of the general formula (I) or agrochemically acceptable salts thereof [component (A)] and (B) one or both herbicides [component (B)] selected from the group consisting of (B1) and (B2) are encompassed by the present invention, in which any desired preferred, more preferred and most preferred embodiments disclosed can be combined with one another as detailed above.

Some binary and ternary compositions comprising one herbicidally active compound (A) of the general formula (I) or agrochemically acceptable salts thereof and one or both herbicidally active compounds (B) have surprisingly been found to be particularly advantageous in fighting weeds.

Particularly preferred compositions in the context of the present invention are the compositions listed in tables 2.1-2.6, below:

Table 2.1: Particularly preferred compositions comprising (A1)

| Composition | Compound (A) | Compound (B) |
|---|---|---|
| Z1-1 | A1 | B1 |
| Z1-2 | A1 | B2 |
| Z1-3 | A1 | B1 + B2 |

Table 2.2: Particularly preferred compositions comprising (A2)

| Composition | Compound (A) | Compound (B) |
|---|---|---|
| Z2-1 | A2 | B1 |
| Z2-2 | A2 | B2 |
| Z2-3 | A2 | B1 + B2 |

Table 2.3: Particularly preferred compositions comprising (A3)

| Composition | Compound (A) | Compound (B) |
|---|---|---|
| Z3-1 | A3 | B1 |
| Z3-2 | A3 | B2 |
| Z3-3 | A3 | B1 + B2 |

Table 2.4: Particularly preferred compositions comprising (A6)

| Composition | Compound (A) | Compound (B) |
|---|---|---|
| Z4-1 | A6 | B1 |
| Z4-2 | A6 | B2 |
| Z4-3 | A6 | B1 + B2 |

Table 2.5: Particularly preferred compositions comprising (A7)

| Composition | Compound (A) | Compound (B) |
|---|---|---|
| Z5-1 | A7 | B1 |
| Z5-2 | A7 | B2 |
| Z5-3 | A7 | B1 + B2 |

Table 2.6: Particularly preferred compositions comprising (A8)

| Composition | Compound (A) | Compound (B) |
|---|---|---|
| Z6-1 | A8 | B1 |
| Z6-2 | A8 | B2 |

(continued)

| Composition | Compound (A) | Compound (B) |
|---|---|---|
| Z6-3 | A8 | B1 + B2 |

Table 2.7: Particularly preferred compositions comprising (A9)

| Composition | Compound (A) | Compound (B) |
|---|---|---|
| Z4-1 | A9 | B1 |
| Z4-2 | A9 | B2 |
| Z4-3 | A9 | B1 + B2 |

Table 2.8: Particularly preferred compositions comprising (A10)

| Composition | Compound (A) | Compound (B) |
|---|---|---|
| Z5-1 | A10 | B1 |
| Z5-2 | A10 | B2 |
| Z5-3 | A10 | B1 + B2 |

Table 2.9: Particularly preferred compositions comprising (A11)

| Composition | Compound (A) | Compound (B) |
|---|---|---|
| Z6-1 | A11 | B1 |
| Z6-2 | A11 | B2 |
| Z6-3 | A11 | B1 + B2 |

Furthermore, the combinations of the invention can be used together with other active ingredients such as the active ingredients mentioned (herbicides, fungicides, insecticides, acaricides etc.) and/or plant growth regulators or auxiliaries from the group of additives customary in crop protection, such as adjuvants and formulation aids. The combination of the active crop protection ingredients comprising the active ingredients (A) and (B) and optionally further active ingredients are referred to here as "herbicide combination" for short. Their use forms such as formulations or tankmixes are herbicidal products (compositions).

The invention therefore also provides the herbicidal products comprising the active ingredient combinations of the invention with additives customary in crop protection, such as adjuvants and formulation aids, and optionally further active crop protection ingredients.

The invention also provides for the use of, or the application method using, the active ingredient combinations of the invention as herbicides and plant growth regulators, preferably as herbicides and plant growth regulators having a synergistically active content of the respective active ingredient combination present.

In the mixtures of the invention, in the context of the application rates mentioned, required application rates of the respective active ingredient are generally lower compared to individual application. The herbicidal compositions of the invention can also be combined with further herbicides and plant growth regulators (= active ingredients (C*)), for example to supplement the activity spectrum. Combination partners usable for the compounds according to the invention in mixed formulations or in a tankmix are, for example, known active ingredients based on inhibition of, for example, acetolactate synthase, acetyl-CoA carboxylase, cellulose synthase, enolpyruvylshikimate-3-phosphate synthase, glutamine synthetase, p-hydroxyphenylpyruvate dioxygenase, phytoene desaturase, photosystem I, photosystem II, protoporphyrinogen oxidase, as known, for example, from Weed Research 26 (1986) 441-445 or "The Pesticide Manual", 14th edition, The British Crop Protection Council and the Royal Soc. of Chemistry, 2006, the corresponding "e-Pesticide Manual Version 4 (2006)", and literature cited therein. Further trade names and "common names" are listed in the "Compendium of Pesticide Common Names" (available on the Internet under http://www.alanwood.net/pesticides).

Examples of known herbicides which can be combined with the compounds of the invention include the active

ingredients which follow (N.B.: the compounds are designated either by the common name according to the International Organization for Standardization (ISO) or by the chemical name, in some cases together with a standard code number) and always encompass all use forms, such as acids, salts, esters and isomers, such as stereoisomers and optical isomers.

The list includes one, and in some cases, also more than one application form:

acetochlor, acifluorfen, acifluorfen-methyl, acifluorfen-sodium, aclonifen, alachlor, allidochlor, alloxydim, alloxydim-sodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlor-potassium, aminocyclopyrachlor-methyl, aminopyralid, aminopyralid-dimethylammonium, aminopyralid-tripromine, amitrole, ammoniumsulfamate, anilofos, asulam, asulam-potassium, asulam sodium, atrazine, azafenidin, azimsulfuron, beflubutamid, (S)-(-)-beflubutamid, beflubutamid-M, benazolin, benazolin-ethyl, benazolin-dimethylammonium, benazolin-potassium, benfluralin, benfuresate, bensulfuron, bensulfuron-methyl, bensulide, bentazone, bentazone-sodium, benzobicyclon, benzofenap, bicyclopyrone, bifenox, bilanafos, bilanafos-sodium, bipyrazone, bispyribac, bispyribac-sodium, bixlozone, bromacil, bromacil-lithium, bromacil-sodium, bromobutide, bromofenoxim, bromoxynil, bromoxynil-butyrate, -potassium, -heptanoate und -octanoate, busoxinone, butachlor, butafenacil, butamifos, butenachlor, butralin, butroxydim, butylate, cafenstrole, cambendichlor, carbetamide, carfentrazone, carfentrazone-ethyl, chloramben, chloramben-ammonium, chloramben-diolamine, chlroamben-methyl, chloramben-methylammonium, chloramben-sodium, chlorbromuron, chlorfenac, chlorfenac-ammonium, chlorfenac-sodium, chlorfenprop, chlorfenprop-methyl, chlorflurenol, chlorflurenol-methyl, chloridazon, chlorimuron, chlorimuron-ethyl, chlorophthalim, chlorotoluron, chlorsulfuron, chlorthal, chlorthal-dimethyl, chlorthal-monomethyl, cinidon, cinidon-ethyl, cinmethylin, exo-(+)-cinmethylin, i.e. (1R,2S,4S)-4-isopropyl-1-methyl-2-[(2-methylbenzyl)oxy]-7-oxabicyclo[2.2.1]heptane, exo-(-)-cinmethylin, i.e. (1R,2S,4S)-4-isopropyl-1-methyl-2-[(2-methylbenzyl)oxy]-7-oxabicyclo[2.2.1]heptane, cinosulfuron, clacyfos, clethodim, clodinafop, clodinafop-ethyl, clodinafop-propargyl, clomazone, clomeprop, clopyralid, clopyralid-methyl, clopyralid-olamine, clopyralid-potassium, clopyralid-tripomine, cloransulam, cloransulam-methyl, cumyluron, cyanamide, cyanazine, cycloate, cyclopyranil, cyclopyrimorate, cyclosulfamuron, cycloxydim, cyhalofop, cyhalofop-butyl, cyprazine, 2,4-D (including thea mmonium, butotyl, -butyl, choline, diethylammonium, -dimethylammonium, -diolamine, -doboxyl, -dodecylammonium, etexyl, ethyl, 2-ethylhexyl, heptylammonium, isobutyl, isooctyl, isopropyl, isopropylammonium, lithium, meptyl, methyl, potassium, tetradecylammonium, triethylammonium, triisopropanolammonium, tripromine and trolamine salt thereof), 2,4-DB, 2,4-DB-butyl, -dimethylammonium, isooctyl, -potassium und -sodium, daimuron (dymron), dalapon, dalapon-calcium, dalapon-magnesium, dalapon-sodium, dazomet, dazomet-sodium, n-decanol, 7-deoxy-D-sedoheptulose, desmedipham, detosyl-pyrazolate (DTP), dicamba and its salts, e. g. dicamba-biproamine, dicamba-N,N-Bis(3-aminopropyl)methylamine, dicamba-butotyl, dicamba-choline, dicamba-diglycolamine, dicamba-dimethylammonium, dicamba-diethanolamine ammonium, dicamba-diethylammonium, dicamba-isopropylammonium, dicamba-methyl, dicamba-monoethanolamine, dicamba-olamine, dicamba-potassium, dicamba-sodium, dicamba-triethanolamine, dichlobenil, 2-(2,4-dichlorobenzyl)-4,4-dimethyl-1,2-oxazolidin-3-one, 2-(2,5-dichlorobenzyl)-4,4-dimethyl-1,2-oxazolidin-3-one, dichlorprop, dichlorprop-butotyl, dichlorprop-dimethylammonium, dichhlorprop-etexyl, dichlorprop-ethylammonium, dichlorprop-isoctyl, dichlorprop-methyl, dichlorprop-potassium, dichlorprop-sodium, dichlorprop-P, dichlorprop-P-dimethylammonium, dichlorprop-P-etexyl, dichlorprop-P-potassium, dichlorprop-sodium, diclofop, diclofop-methyl, diclofop-P, diclofop-P-methyl, diclosulam, difenzoquat, difenzoquat-metilsulfate, diflufenican, diflufenzopyr, diflufenzopyr-sodium, dimefuron, dimepiperate, dimesulfazet, dimethachlor, dimethametryn, dimethenamid, dimethenamid-P, dimetrasulfuron, dinitramine, dinoterb, dinoterb-acetate, diphenamid, diquat, diquat-dibromid, diquat-dichloride, dithiopyr, diuron, DNOC, DNOC-ammonium, DNOC-potassium, DNOC-sodium, endothal, endothal-diammonium, endothal-dipotassium, endothal-disodium, Epyrifenacil (S-3100), EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-5231, i.e. N-[2-Chlor-4-fluor-5-[4-(3-fluorpropyl)-4,5-dihydro-5-oxo-1H-tetrazol-1-yl]-phenyl]-ethansulfonamid, F-7967, i.e. 3-[7-Chlor-5-fluor-2-(trifluormethyl)-1H-benzimidazol-4-yl]-1-methyl-6-(trifluormethyl)pyrimidin-2,4(1H,3H)-dione, fenoxaprop, fenoxaprop-P, fenoxaprop-ethyl, fenoxaprop-P-ethyl, fenoxasulfone, fenpyrazone, fenquinotrione, fentrazamide, flamprop, flamprop-isoproyl, flamprop-methyl, flamprop-M-isopropyl, flamprop-M-methyl, flazasulfuron, florasulam, florpyrauxifen, florpyrauxifen-benzyl, fluazifop, fluazifop-butyl, fluazifop-methyl, fluazifop-P, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, fluometuron, flurenol, flurenol-butyl, -dimethylammonium und -methyl, fluoroglycofen, fluoroglycofen-ethyl, flupropanate, flupropanate-sdium, flupyrsulfuron, flupyrsulfuron-methyl, flupyrsulfuron-methyl-sodium, fluridone, flurochloridone, fluroxypyr, fluroxypyr-butometyl, fluroxypyr-meptyl, flurtamone, fluthiacet, fluthiacet-methyl, fomesafen, fomesafen-sodium, foramsulfuron, foramsulfuron sodium salt, fosamine, fosamine-ammonium, glufosinate, glufosinate-ammonium, glufosinate-sodium, L-glufosinate-ammonium, L-glufosiante-sodium, glufosinate-P-sodium, glufosinate-P-ammonium, glyphosate, glyphosate-ammonium, -isopropylammonium, -diammonium, -dimethylammonium, -potassium, - sodium, sesquisodium and -trimesium, H-9201, i.e. O-(2,4-Dimethyl-6-nitrophenyl)-O-ethyl-isopropylphosphoramidothioat, halauxifen, halauxifen-methyl, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, haloxifop-sodium, hexazinone, HNPC-A8169, i.e. prop-2-yn-1-yl (2S)-2-{3-[(5-tert-butylpyridin-2-yl)oxy]phenoxy}propanoate, HW-02, i.e. 1-(Dimethoxyphosphoryl)-ethyl-(2,4-dichlorphenoxy)acetat, hydantocidin, imazamethabenz, imazamethabenz-methyl, imazamox, imazamox-ammonium, imazapic, imazapic-ammonium, imazapyr, imazapyr-isopropylammonium, imazaquin, imazaquin-ammonium, imazaquin.methyl, imazethapyr, imazethapyr-immonium, imazosulfuron, indanofan, indaziflam, iodosulfuron, iodosulfuron-methyl, iodosulfuron-methyl-sodium, ioxynil, ioxynil-lithium, -octanoate, -potassium und sodium, ipfencarbazone, isoproturon, isouron, isoxaben, isoxaflutole, karbutilate, KUH-043, i.e. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, ketospiradox, ketospiradox-potassium, lactofen, lancotrione, lenacil, linuron, MCPA, MCPA-butotyl, -butyl, -dimethylammonium, -diolamine, -2-ethylhexyl, -ethyl, -isobutyl, isoctyl, -isopropyl, -isopropylammonium, -methyl, olamine, -potassium, -sodium and -trolamine, MCPB, MCPB-methyl, -ethyl und -sodium, mecoprop, mecoprop-butotyl, mecoprop- demethylammonium, mecoprop-diolamine, mecoprop-etexyl, mecoprop-ethadyl, mecoprop-isoctyl, mecoprop-methyl, mecoprop-potassium, mecoprop-sodium, and mecoprop-trolamine, mecoprop-P, mecoprop-P-butotyl, -dimethylammonium, -2-ethylhexyl and -potassium, mefenacet, mefluidide, mefluidide-diolamine, mefluidide-potassium, mesosulfuron, mesosulfuron-methyl, mesosulfuron sodium salt, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinate, monolinuron, monosulfuron, monosulfuron-methyl, MT-5950, i.e. N-[3-chlor-4-(1-methylethyl)-phenyl]-2-methylpentanamid, NGGC-011, napropamide, NC-310, i.e. 4-(2,4-Dichlorbenzoyl)-1-methyl-5-benzyloxypyrazol, NC-656, i.e. 3-[(isopropylsulfonyl)methyl]-N-(5-methyl-1,3,4-oxadiazol-2-yl)-5-(trifluoromethyl)[1,2,4]triazolo[4,3-a]pyridine-8-carboxamide, neburon, nicosulfuron, nonanoic acid (pelargonic acid), norflurazon, oleic acid (fatty acids), orbencarb, orthosulfamuron, oryzalin, oxadiargyl, oxadiazon, oxasulfuron, oxaziclomefone, oxyfluorfen, paraquat, paraquat-dichloride, paraquat-dimethylsulfate, pebulate, pendimethalin, penoxsulam, pentachlorphenol, pentoxazone, pethoxamid, petroleum oils, phenmedipham, phenmedipham-ethyl, picloram, picloram-dimethylammonium, picloram-etexyl, picloram-isoctyl, picloram-methyl, picloram-olamine, picloram-potassium, picloram-triethylammonium, picloram-tripromine, picloram-trolamine, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinclorac-dimethylammonium, quinclorac-methyl, quinmerac, quinoclamine, quizalofop, quizalofop-ethyl, quizalofop-P, quizalofop-P-ethyl, quizalofop-P-tefuryl, QYM201, i.e. 1-{2-chloro-3-[(3-cyclopropyl-5-hydroxy-1-methyl-1H-pyrazol-4-yl)carbonyl]-6-(trifluoromethyl)phenyl}piperidin-2-one, rimsulfuron, saflufenacil, sethoxydim, siduron, simazine, simetryn, SL-261, sulcotrione, sulfentrazone, sulfometuron, sulfometuron-methyl, sulfosulfuron, , SYP-249, i.e. 1-Ethoxy-3-methyl-1-oxobut-3-en-2-yl-5-[2-chlor-4-(trifluormethyl)phenoxy]-2-nitrobenzoat, SYP-300, i.e. 1-[7-Fluor-3-oxo-4-(prop-2-in-1-yl)-3,4-dihydro-2H-1,4-benzoxazin-6-yl]-3-propyl-2-thioxoimidazolidin-4,5-dion, 2,3,6-TBA, TCA (trichloro acetic acid) and its salts, e.g. TCA-ammonium, TCA-calcium, TCA-ethyl, TCA-magnesium, TCA-sodium, tebuthiuron, tefuryltrione, tembotrione, tepraloxydim, terbacil, terbucarb, terbumeton, terbuthylazine, terbutryn, tetflupyrolimet, thaxtomin, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, triclopyr-butotyl, triclopyr-choline, triclopyr-ethyl, triclopyr-triethylammonium, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-Dichlor-N-{2-[(4,6-dimethoxypyrimidin-2-yl)oxy]benzyl}anilin, 3-(2-chloro-4-fluoro-5-(3-methyl-2,6-dioxo-4-trifluoromethyl-3,6-dihydropyrimidin-1 (2H)-yl)phenyl)-5-methyl-4,5-dihydroisoxazole-5-carboxylic acid ethyl ester, ethyl-[(3-{2-chlor-4-fluor-5-[3-methyl-2,6-dioxo-4-(trifluormethyl)-3,6-dihydropyrimidin-1(2H)-yl]phenoxy}pyridin-2-yl)oxy]acetate, 3-chloro-2-[3-(difluoromethyl)isoxazolyl-5-yl]phenyl-5-chloropyrimidin-2-yl ether, 2-(3,4-dimethoxyphenyl)-4-[(2-hydroxy-6-oxocyclohex-1-en-1-yl)carbonyl]-6-methylpyridazine-3(*2H*)-one, 2-({2-[(2-methoxyethoxy)methyl]-6-methylpyridin-3-yl}carbonyl)cyclohexane-1,3-dione, (5-hydroxy-1-methyl-1H-pyrazol-4-yl)(3,3,4-trimethyl-1,1-dioxido-2,3-dihydro-1-benzothiophen-5-yl)methanone, 1-methyl-4-[(3,3,4-trimethyl-1,1-dioxido-2,3-dihydro-1-benzothiophen-5-yl)carbonyl]-1H-pyrazol-5-yl propane-1-sulfonate, 4-{2-chloro-3-[(3,5-dimethyl-1H-pyrazol-1-yl)methyl]-4-(methylsulfonyl)benzoyl}-1-methyl-1H-pyrazol-5-yl-1,3-dimethyl-1H-pyrazole-4-carboxylate; cyanomethyl 4-amino-3-chloro-5-fluoro-6-(7-fluoro-1H-indol-6-yl)pyridine-2-carboxylate, prop-2-yn-1-yl 4-amino-3-chloro-5-fluoro-6-(7-fluoro-1H-indol-6-yl)pyridine-2-carboxylate, methyl 4-amino-3-chloro-5-fluoro-6-(7-fluoro-1H-indol-6-yl)pyridine-2-carboxylate, 4-amino-3-chloro-5-fluoro-6-(7-fluoro-1H-indol-6-yl)pyridine-2-carboxylic acid, benzyl 4-amino-3-chloro-5-fluoro-6-(7-fluoro-1H-indol-6-yl)pyridine-2-carboxylate, ethyl 4-amino-3-chloro-5-fluoro-6-(7-fluoro-1H-indol-6-yl)pyridine-2-carboxylate, methyl 4-amino-3-chloro-5-fluoro-6-(7-fluoro-1-isobutyryl-1H-indol-6-yl)pyridine-2-carboxylate, methyl 6-(1-acetyl-7-fluoro-1H-indol-6-yl)-4-amino-3-chloro-5-fluoropyridine-2-carboxylate, methyl 4-amino-3-chloro-6-[1-(2,2-dimethylpropanoyl)-7-fluoro-1H-indol-6-yl]-5-fluoropyridine-2-carboxylate, methyl 4-amino-3-chloro-5-fluoro-6-[7-fluoro-1-(methoxyacetyl)-1H-indol-6-yl]pyridine-2-carboxylate, potassium 4-amino-3-chloro-5-fluoro-6-(7-fluoro-1H-indol-6-yl)pyridine-2-carboxylate, sodium 4-amino-3-chloro-5-fluoro-6-(7-fluoro-1H-indol-6-yl)pyridine-2-carboxylate, butyl 4-amino-3-chloro-5-fluoro-6-(7-fluoro-1H-indol-6-yl)pyridine-2-carboxylate, 4-hydroxy-1-methyl-3-[4-(trifluoromethyl)pyridin-2-yl]imidazolidin-2-one, 3-(5-tert-butyl-1,2-oxazol-3-yl)-4-hydroxy-1-methylimidazolidin-2-one, 3-[5-chloro-4-(trifluormethyl)pyridin-2-yl]-4-hydroxy-1-methylimidazolidin-2-one,4-hydroxy-1-methoxy-5-methyl-3-[4-(trifluormethyl)pyridin-2-yl]imidazolidin-2-one, 6-[(2-hydroxy-6-oxocyclohex-1-en-1-yl)carbonyl]-1,5-dimethyl-3-(2-methylphenyl)quinazolin-2,4(1H,3H)-dione, 3-(2,6-dimethylphenyl)-6-[(2-hydroxy-6-oxocyclohex-1-en-1-yl)carbonyl]-1-methylquinazolin-2,4(1H,3H)-dione, 2-[2-chloro-4-(methylsulfonyl)-3-(morpholin-4-ylmethyl)benzoyl]-3-hydroxycyclohex-2-en-1-one, 1-(2-carboxyethyl)-4-(pyrimidin-2-yl)pyridazin-1-ium salt (with anions such as chloride, acetate or trifluoroacetate), 1-(2-carboxyethyl)-4-(pyridazin-3-yl)pyridazin-1-ium salt (with anions such as chloride, acetate or trifluoroacetate), 4-(pyrimidin-2-yl)-1-(2-sulfoethyl)pyridazin-1-ium salt (with anions such as chloride, acetate or trifluoroacetate), 4-(pyridazin-3-yl)-1-(2-sulfoethyl)pyridazin-1-ium salt (with anions such as chloride, acetate or trifluoroacetate), 1-(2-Carboxyethyl)-4-(1,3-thiazol-2-yl)pyridazin-1-ium salt (with anions such as chloride, acetate or trifluoroacetate), 1-(2-Carboxyethyl)-4-(1,3-thiazol-2-yl)pyridazin-1-ium salt (with anions such as chloride, acetate or trifluoroacetate).

If the respective common name encompasses more than one form of the active ingredient, the name preferably defines the commercially available form.

Each of the further active ingredients mentioned (= active ingredients (C*), (C1*), (C2*) etc.) may then preferably be combined with a binary or ternary combination according to the present invention, according to the scheme (A) + (B1 and/or B2) + (C*) or else according to the scheme (A) + (B1 and/or B2) + (C1*) + (C2*) etc.

The stated amounts are application rates (g a.i./ha = grams of active substance per hectare) and hence also define the ratios in a co-formulation, a premix, a tankmix or a sequential application of the combined active ingredients.

The combinations can be applied both by the pre-emergence method and by the post-emergence method. This applies both to pre- and post-emergence with respect to the harmful plants and, in the case of selective control of the harmful plants, to pre- or post-emergence of the crop plants. Mixed forms are also possible, for example control of the harmful plants at their pre- or post-emergence stage after emergence of the crop plants.

Of particular interest is the selective control of harmful plants in crops of useful plants and ornamentals. Although the herbicides (A) and (B) have already demonstrated very good to adequate selectivity in a large number of crops, it is possible in principle for phytotoxicities on the crop plants to occur in some crops, and in particular also in the case of mixtures with other, less selective herbicides. In this respect, combinations of herbicides (A) and (B) comprising the active herbicidal ingredients combined in accordance with the invention and one or more safeners are of particular interest. The safeners, which are used in an antidotically effective amount, reduce the phytotoxic side effects of the herbicides/pesticides employed, for example in economically important crops, such as cereals (wheat, barley, rye, maize, rice, millet), sugarbeet, sugarcane, oilseed rape, cotton and soybeans, preferably cereals.

Examples of useful combination partners for the herbicide combinations of the invention include the following safeners:

S1) Compounds from the group of heterocyclic carboxylic acid derivatives (formula S1)

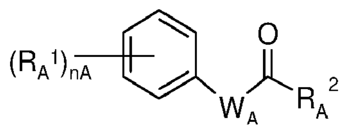

**(S1)**

wherein symbols and indices are defined as follows:

| | |
|---|---|
| $n_A$ | is an integer value in the range of 0 to 5, preferably 0 to 3; |
| $R_A^1$ | is halogen, $(C_1-C_4)$-alkyl, $(C_1-C_4)$-alkoxy, nitro or $(C_1-C_4)$-haloalkyl; |
| $W_A$ | is an unsubstituted or substituted divalent heterocyclic moiety selected from the group of partially unsaturated or aromatic five-membered heterocycles carrying 1 to 3 hetero ring atoms selected from the group of nitrogen (N) und oxygen (O), and carrying at least one N-atom and not more than one O-atom in the ring, preferably a five-membered heterocyclic moiety selected from the group $(W_A^1)$ to $(W_A^4)$, |

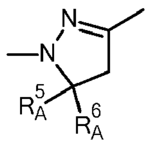 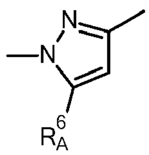 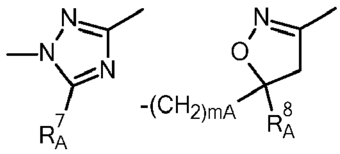 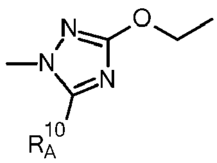

**($W_A$1)** **($W_A$2)** **($W_A$3)** **($W_A$4)** **($W_A$5)**

| | |
|---|---|
| $m_A$ | is 0 or 1; |
| $R_A{}^2$ | is $OR_A{}^3$, $SR_A{}^3$ or $NR_A{}^3R_A{}^4$ or a saturated or unsaturated 3- to 7-membered heterocycle containing at least one N-atom and up to 3 heteroatoms, preferably combined with other heteroatoms from the group of O (oxygen) and S (sulfur), and which is linked to the carbonyl group in (S1) via a nitrogen atom, and which ist unsubstituted or substituted by moieties selected from the group of ($C_1$-$C_4$)-alkyl, ($C_1$-$C_4$)-alkoxy or possibly substituted phenyl, preferably $OR_A{}^3$, $NHR_A{}^4$ oder $N(CH_3)_2$, particularly $OR_A{}^3$ |
| $R_A{}^3$ | is hydrogen or an unsubstituted or substituted aliphatic hydrocarbon moiety, preferably containing 1 to 18 C-atoms; |
| $R_A{}^4$ | is hydrogen, ($C_1$-$C_6$)-alkyl, ($C_1$-$C_6$)-alkoxy or substituted or unsubstituted phenyl; |
| $R_A{}^5$ | is hydrogen, ($C_1$-$C_8$)-alkyl, ($C_1$-$C_8$)-haloalkyl, ($C_1$-$C_4$)-alkoxy-($C_1$-$C_8$)-alkyl, cyano or $COOR_A{}^9$, wherein $R_A{}^9$ is hydrogen, ($C_1$-$C_8$)-alkyl, ($C_1$-$C_8$)-haloalkyl, ($C_1$-$C_4$)-alkoxy-($C_1$-$C_4$)-alkyl, ($C_1$-$C_6$)-hydroxyalkyl, ($C_3$-$C_{12}$)-cycloalkyl oder tris-($C_1$-$C_4$)-alkylsilyl; |
| $R_A{}^6$, $R_A{}^7$, $R_A{}^8$ | are independently hydrogen, ($C_1$-$C_8$)-alkyl, ($C_1$-$C_8$)-haloalkyl, ($C_3$-$C_{12}$)-cycloalkyl or substituted or unsubstituted phenyl; |
| $R_A{}^{10}$ | is hydrogen, ($C_3$-$C_{12}$)-cycloalkyl, substituted or unsubstituted phenyl, or substituted or unsubstituted heteroaryl; |

$S1^a$) Compounds of the dichlorophenylpyrazoline-3-carboxylic acid type ($S1^a$), preferably compounds such as 1-(2,4-dichlorophenyl)-5-(ethoxycarbonyl)-5-methyl-2-pyrazoline-3-carboxylic acid, ethyl 1-(2,4-dichlorophenyl)-5-(ethoxycarbonyl)-5-methyl-2-pyrazoline-3-carboxylate (S1-1) ("mefenpyr-diethyl"), and related compounds as described in WO-A-91/07874;

$S1^b$) Derivatives of dichlorophenylpyrazolecarboxylic acid ($S1^b$), preferably compounds such as ethyl 1-(2,4-dichlorophenyl)-5-methylpyrazole-3-carboxylate (S1-2), ethyl 1-(2,4-dichlorophenyl)-5-isopropylpyrazole-3-carboxylate (S1-3), ethyl 1-(2,4-dichlorophenyl)-5-(1,1-dimethylethyl)pyrazole-3-carboxylate (S1-4) and related compounds as described in EP-A-333131 and EP-A-269806;

$S1^c$) Derivatives of 1,5-diphenylpyrazole-3-carboxylic acid ($S1^c$), preferably compounds such as ethyl 1-(2,4-dichlorophenyl)-5-phenylpyrazole-3-carboxylate (S1-5), methyl 1-(2-chlorophenyl)-5-phenylpyrazole-3-carboxylate (S1-6) and related compounds as described, for example, in EP-A-268554;

$S1^d$) Compounds of the triazolecarboxylic acid type ($S1^d$), preferably compounds such as fenchlorazole(-ethyl ester), i.e. ethyl 1-(2,4-dichlorophenyl)-5-trichloromethyl-1H-1,2,4-triazole-3-carboxylate (S1-7), and related compounds, as described in EP-A-174562 and EP-A-346620;

$S1^e$) Compounds of the 5-benzyl- or 5-phenyl-2-isoxazoline-3-carboxylic acid or of the 5,5-diphenyl-2-isoxazoline-3-carboxylic acid type ($S1^e$), preferably compounds such as ethyl 5-(2,4-dichlorobenzyl)-2-isoxazoline-3-carboxylate (S1-8) or ethyl 5-phenyl-2-isoxazoline-3-carboxylate (S1-9) and related compounds as described in WO-A-91/08202, or 5,5-diphenyl-2-isoxazolinecarboxylic acid (S1-10) or ethyl 5,5-diphenyl-2-isoxazoline-3-carboxylate (S1-11) ("isoxadifen-ethyl") or n-propyl 5,5-diphenyl-2-isoxazoline-3-carboxylate (S1-12) or ethyl 5-(4-fluorophenyl)-5-phenyl-2-isoxazoline-3-carboxylate (S1-13) as described in patent application WO-A-95/07897.

$S1^f$) compounds of the triazolyloxy acetic acid type ($S1^f$), preferably compounds such as methyl{[1,5-bis(4-chloro-2-fluorophenyl)-1H-1,2,4-triazol-3-yl]oxy}acetate (S1-14) or {[1,5-Bis(4-chloro-2-fluorophenyl)-1H-1,2,4-triazol-3-yl]oxy}acetic acid (S1-15) or methyl-{[5-(4-chloro-2-fluorophenyl)-1-(2,4-difluorophenyl)-1H-1,2,4-triazol-3-yl]oxy}acetate (S1-16) or {[5-(4-chloro-2-fluorphenyl)-1-(2,4-difluorophenyl)-1H-1,2,4-triazol-3-yl]oxy}acetic acid (S1-17) or methyl- {[1-(4-chloro-2-fluorophenyl)-5-(2,4-difluorophenyl)-1H-1,2,4-triazol-3-yl]oxy} acetate (S1-18) or {[1-(4-chloro-2-fluorophenyl)-5-(2,4-difluorophenyl)-1H-1,2,4-triazol-3-yl]oxy}acetic acid (S1-19), as described in patent application WO2021105101.

S2) Compounds from the group of the 8-quinolinoxy derivatives (S2):

S2[a]) Compounds of the 8-quinolinoxyacetic acid type (S2[a]), preferably 1-methylhexyl (5-chloro-8-quinolinoxy)acetate ("cloquintocet-mexyl") (S2-1), 1,3-dimethylbut-1-yl (5-chloro-8-quinolinoxy)acetate (S2-2), 4-allyloxybutyl (5-chloro-8-quinolinoxy)acetate (S2-3), 1-allyloxyprop-2-yl (5-chloro-8-quinolinoxy)acetate (S2-4), ethyl (5-chloro-8-quinolinoxy)acetate (S2-5), methyl (5-chloro-8-quinolinoxy)acetate (S2-6), allyl (5-chloro-8-quinolinoxy)acetate (S2-7), 2-(2-propylideneiminoxy)-1-ethyl (5-chloro-8-quinolinoxy)acetate (S2-8), 2-oxoprop-1-yl (5-chloro-8-quinolinoxy)acetate (S2-9) and related compounds, as described in EP-A-86750, EP-A-94349 and EP-A-191736 or EP-A-0 492 366, and also (5-chloro-8-quinolinoxy)acetic acid (S2-10), hydrates and salts thereof, for example the lithium, sodium, potassium, calcium, magnesium, aluminium, iron, ammonium, quaternary ammonium, sulfonium or phosphonium salts thereof, as described in WO-A-2002/34048;

S2[b]) Compounds of the (5-chloro-8-quinolinoxy)malonic acid type (S2[b]), preferably compounds such as diethyl (5-chloro-8-quinolinoxy)malonate, diallyl (5-chloro-8-quinolinoxy)malonate, methyl ethyl (5-chloro-8-quinolinoxy)malonate and related compounds, as described in EP-A-0 582 198.

S3) Active ingredients of the dichloroacetamide type (S3), which are frequently used as pre-emergence safeners (soil-acting safeners), for example

"dichlormid" (N,N-diallyl-2,2-dichloroacetamide) (S3-1),

"R-29148" (3-dichloroacetyl-2,2,5-trimethyl-1,3-oxazolidine) from Stauffer (S3-2),

"R-28725" (3-dichloroacetyl-2,2-dimethyl-1,3-oxazolidine) from Stauffer (S3-3),

"benoxacor" (4-dichloroacetyl-3,4-dihydro-3-methyl-2H-1,4-benzoxazine) (S3-4),

"PPG-1292" (N-allyl-N-[(1,3-dioxolan-2-yl)methyl]dichloroacetamide) from PPG Industries (S3-5),

"DKA-24" (N-allyl-N-[(allylaminocarbonyl)methyl]dichloroacetamide) from Sagro-Chem (S3-6),

"AD-67" or "MON 4660" (3-dichloroacetyl-1-oxa-3-azaspiro[4.5]decane) from Nitrokemia or Monsanto (S3-7),

"TI-35" (1-dichloroacetylazepane) from TRI-Chemical RT (S3-8),

"diclonon" (dicyclonon) or "BAS145138" or "LAB145138" (S3-9)

((RS)-1-dichloroacetyl-3,3,8a-trimethylperhydropyrrolo[1,2-a]pyrimidin-6-one) from BASF,

"furilazole" or "MON 13900" ((RS)-3-dichloroacetyl-5-(2-furyl)-2,2-dimethyloxazolidine) (S3-10), and the (R) isomer thereof (S3-11).

S4) Compounds from the class of the acylsulfonamides (S4):

S4[a]) N-Acylsulfonamides of the formula (S4[a]) and salts thereof, as described in WO-A-97/45016,

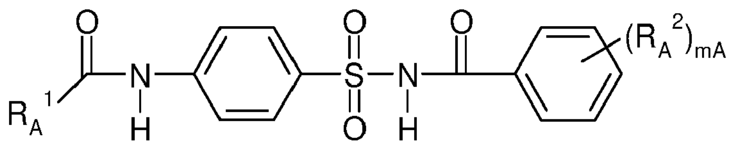

**(S4[a])**

in which

$R_A^1$ is ($C_1$-$C_6$)-alkyl, ($C_3$-$C_6$)-cycloalkyl, where the 2 latter radicals are substituted by $v_A$ substituents from the group of halogen, ($C_1$-$C_4$)-alkoxy, ($C_1$-$C_6$)-haloalkoxy and ($C_1$-$C_4$)-alkylthio and, in the case of cyclic radicals, also by ($C_1$-$C_4$)-alkyl and ($C_1$-$C_4$)-haloalkyl;

$R_A^2$ is halogen, ($C_1$-$C_4$)-alkyl, ($C_1$-$C_4$)-alkoxy, $CF_3$;

$m_A$ is 1 or 2;

$v_A$ is 0, 1, 2 or 3;

$S4^b$) Compounds of the 4-(benzoylsulfamoyl)benzamide type of the formula ($S4^b$) and salts thereof, as described in WO-A-99/16744,

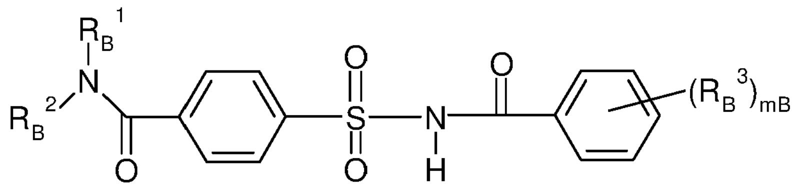

**($S4^b$)**

in which

$R_B^1$, $R_B^2$ are independently hydrogen, ($C_1$-$C_6$)-alkyl, ($C_3$-$C_6$)-cycloalkyl, ($C_3$-$C_6$)-alkenyl, ($C_3$-$C_6$)-alkynyl,
$R_B^3$ is halogen, ($C_1$-$C_4$)-alkyl, ($C_1$-$C_4$)-haloalkyl or ($C_1$-$C_4$)-alkoxy and
$m_B$ is 1 or 2,

e.g. those in which

$R_B^1$ = cyclopropyl, $R_B^2$ = hydrogen and ($R_B^3$) = 2-OMe ("cyprosulfamide", S4-1),
$R_B^1$ = cyclopropyl, $R_B^2$ = hydrogen and ($R_B^3$) = 5-Cl-2-OMe (S4-2),
$R_B^1$ = ethyl, $R_B^2$ = hydrogen and ($R_B^3$) = 2-OMe (S4-3),
$R_B^1$ = isopropyl, $R_B^2$ = hydrogen and ($R_B^3$) = 5-Cl-2-OMe (S4-4) and
$R_B^1$ = isopropyl, $R_B^2$ = hydrogen and ($R_B^3$) = 2-OMe (S4-5);

$S4^c$) Compounds from the class of the benzoylsulfamoylphenylureas of the formula ($S4^c$), as described in EP-A-365484,

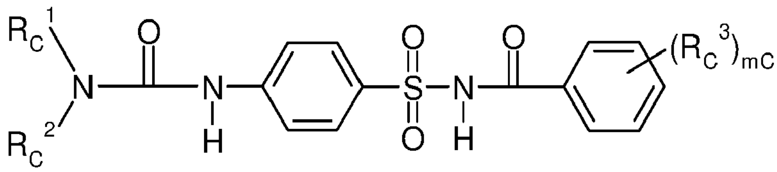

**($S4^c$)**

in which

$R_C^1$, $R_C^2$ are independently hydrogen, ($C_1$-$C_8$)-alkyl, ($C_3$-$C_8$)-cycloalkyl, ($C_3$-$C_6$)-alkenyl, ($C_3$-$C_6$)-alkynyl,
$R_C^3$ is halogen, ($C_1$-$C_4$)-alkyl, ($C_1$-$C_4$)-alkoxy, $CF_3$, and
$m_C$ is 1 or 2;

for example

1-[4-(N-2-methoxybenzoylsulfamoyl)phenyl]-3-methylurea,

1-[4-(N-2-methoxybenzoylsulfamoyl)phenyl]-3,3-dimethylurea,

1-[4-(N-4,5-dimethylbenzoylsulfamoyl)phenyl]-3-methylurea;

S4[d]) Compounds of the N-phenylsulfonylterephthalamide type of the formula (S4[d]) and salts thereof, which are known, for example, from CN 101838227,

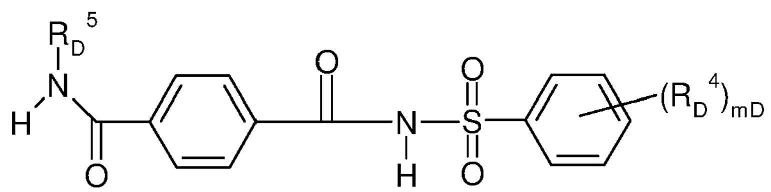

**(S4[d])**

in which

$R_D^4$ is halogen, ($C_1$-$C_4$)-alkyl, ($C_1$-$C_4$)-alkoxy, $CF_3$;

$m_D$ is 1 or 2;

$R_D^5$ is hydrogen, ($C_1$-$C_6$)-alkyl, ($C_3$-$C_6$)-cycloalkyl, ($C_2$-$C_6$)-alkenyl, ($C_2$-$C_6$)-alkynyl, ($C_5$-$C_6$)-cycloalkenyl.

S5) Active ingredients from the class of the hydroxyaromatics and the aromatic-aliphatic carboxylic acid derivatives (S5), for example ethyl 3,4,5-triacetoxybenzoate, 3,5-dimethoxy-4-hydroxybenzoic acid, 3,5-dihydroxybenzoic acid, 4-hydroxysalicylic acid, 4-fluorosalicylic acid, 2-hydroxycinnamic acid, 2,4-dichlorocinnamic acid, as described in WO-A-2004/084631, WO-A-2005/015994, WO-A-2005/016001.

S6) Active ingredients from the class of the 1,2-dihydroquinoxalin-2-ones (S6), for example 1-methyl-3-(2-thienyl)-1,2-dihydroquinoxalin-2-one, 1-methyl-3-(2-thienyl)-1,2-dihydroquinoxaline-2-thione, 1-(2-aminoethyl)-3-(2-thienyl)-1,2-dihydroquinoxalin-2-one hydrochloride, 1-(2-methylsulfonylaminoethyl)-3-(2-thienyl)-1,2-dihydroquinoxalin-2-one, as described in WO-A-2005/112630.

S7) Compounds from the class of the diphenylmethoxyacetic acid derivatives (S7), e.g. methyl diphenylmethoxyacetate (CAS Reg. No. 41858-19-9) (S7-1), ethyl diphenylmethoxyacetate or diphenylmethoxyacetic acid, as described in WO-A-98/38856.

S8) Compounds of the formula (S8), as described in WO-A-98/27049,

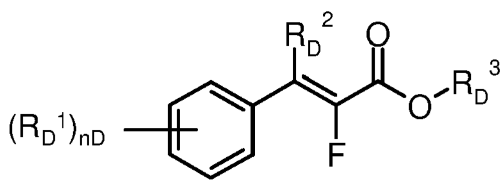

**(S8)**

in which the symbols and indices are defined as follows:

$R_D^1$ is halogen, ($C_1$-$C_4$)-alkyl, ($C_1$-$C_4$)-haloalkyl, ($C_1$-$C_4$)-alkoxy, ($C_1$-$C_4$)-haloalkoxy,
$R_D^2$ is hydrogen or ($C_1$-$C_4$)-alkyl,
$R_D^3$ is hydrogen, ($C_1$-$C_8$)-alkyl, ($C_2$-$C_4$)-alkenyl, ($C_2$-$C_4$)-alkynyl or aryl, where each of the aforementioned carbon-containing radicals is unsubstituted or substituted by one or more, preferably up to three, identical or different radicals from the group consisting of halogen and alkoxy; or salts thereof,
$n_D$ is an integer from 0 to 2.

S9) Active ingredients from the class of the 3-(5-tetrazolylcarbonyl)-2-quinolones (S9), for example 1,2-dihydro-4-hydroxy-1-ethyl-3-(5-tetrazolylcarbonyl)-2-quinolone (CAS Reg. No.: 219479-18-2), 1,2-dihydro-4-hydroxy-1-methyl-3-(5-tetrazolylcarbonyl)-2-quinolone (CAS Reg. No. 95855-00-8), as described in WO-A-1999/000020.

S10) Compounds of the formulae (S10[a]) or (S10[b]) as described in WO-A-2007/023719 and WO-A-2007/023764

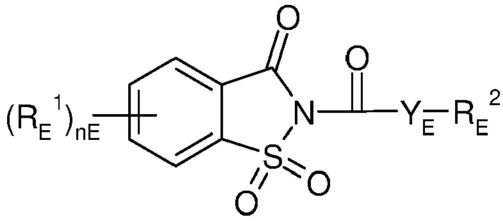 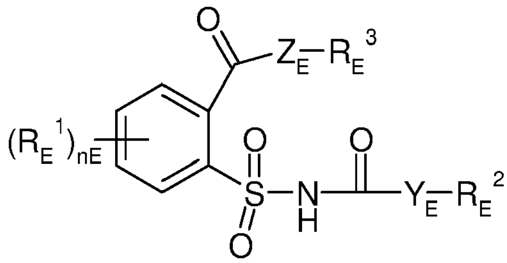

**(S10^a)** **(S10^b)**

in which

$R_E^1$ is halogen, $(C_1-C_4)$-alkyl, methoxy, nitro, cyano, $CF_3$, $OCF_3$,

$Y_E$, $Z_E$ are independently O or S,

$n_E$ is an integer from 0 to 4,

$R_E^2$ is $(C_1-C_{16})$-alkyl, $(C_2-C_6)$-alkenyl, $(C_3-C_6)$-cycloalkyl, aryl; benzyl, halobenzyl,

$R_E^3$ is hydrogen or $(C_1-C_6)$-alkyl.

S11) Active ingredients of the oxyimino compounds type (S11), which are known as seed-dressing agents, for example

"oxabetrinil" ((Z)-1,3-dioxolan-2-ylmethoxyimino(phenyl)acetonitrile) (S11-1), which is known as a seed-dressing safener for millet/sorghum against metolachlor damage,

"fluxofenim" (1-(4-chlorophenyl)-2,2,2-trifluoro-1-ethanone O-(1,3-dioxolan-2-ylmethyl)-oxime) (S11-2), which is known as a seed-dressing safener for millet/sorghum against metolachlor damage, and

"cyometrinil" or "CGA-43089" ((Z)-cyanomethoxyimino(phenyl)acetonitrile) (S11-3), which is known as a seed-dressing safener for millet/sorghum against metolachlor damage.

S12) Active ingredients from the class of the isothiochromanones (S12), for example methyl [(3-oxo-1H-2-benzothiopyran-4(3H)-ylidene)methoxy]acetate (CAS Reg. No. 205121-04-6) (S12-1) and related compounds from WO-A-1998/13361.

S13) One or more compounds from group (S13):

"naphthalic anhydride" (1,8-naphthalenedicarboxylic anhydride) (S13-1), which is known as a seed-dressing safener for maize against thiocarbamate herbicide damage,

"fenclorim" (4,6-dichloro-2-phenylpyrimidine) (S13-2), which is known as a safener for pretilachlor in sown rice,

"flurazole" (benzyl 2-chloro-4-trifluoromethyl-1,3-thiazole-5-carboxylate) (S13-3), which is known as a seed-dressing safener for millet/sorghum against alachlor and metolachlor damage,

"CL 304415" (CAS Reg. No. 31541-57-8)

(4-carboxy-3,4-dihydro-2H-1-benzopyran-4-acetic acid) (S13-4) from American Cyanamid, which is known as a safener for maize against damage by imidazolinones,

"MG 191" (CAS Reg. No. 96420-72-3) (2-dichloromethyl-2-methyl-1,3-dioxolane) (S13-5) from Nitrokemia, which is known as a safener for maize,

"MG 838" (CAS Reg. No. 133993-74-5)

(2-propenyl 1-oxa-4-azaspiro[4.5]decane-4-carbodithioate) (S13-6) from Nitrokemia

"disulfoton" (O,O-diethyl S-2-ethylthioethyl phosphorodithioate) (S13-7),

"dietholate" (O,O-diethyl O-phenyl phosphorothioate) (S13-8),

"mephenate" (4-chlorophenyl methylcarbamate) (S13-9).

S14) Active ingredients which, in addition to herbicidal action against harmful plants, also have safener action on crop plants such as rice, for example

"dimepiperate" or "MY-93" (*S*-1-methyl 1-phenylethylpiperidine-1-carbothioate), which is known as a safener for rice against damage by the herbicide molinate,

"daimuron" or "SK 23" (1-(1-methyl-1-phenylethyl)-3-p-tolylurea), which is known as a safener for rice against damage by the herbicide imazosulfuron,

"cumyluron" = "JC-940" (3-(2-chlorophenylmethyl)-1-(1-methyl-1-phenylethyl)urea, see JP-A-60087254), which is known as a safener for rice against damage by some herbicides,

"methoxyphenone" or "NK 049" (3,3'-dimethyl-4-methoxybenzophenone), which is known as a safener for rice against damage by some herbicides,

"CSB" (1-bromo-4-(chloromethylsulfonyl)benzene) from Kumiai, (CAS Reg. No. 54091-06-4), which is known as a safener against damage by some herbicides in rice.

S15) Compounds of the formula (S15) or tautomers thereof

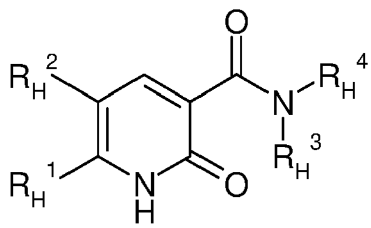

**(S15)**

as described in WO-A-2008/131861 and WO-A-2008/131860
in which

$R_H^1$ is a ($C_1$-$C_6$)-haloalkyl radical and

$R_H^2$ is hydrogen or halogen and

$R_H^3$, $R_H^4$ are independently hydrogen, ($C_1$-$C_{16}$)-alkyl, ($C_2$-$C_{16}$)-alkenyl or ($C_2$-$C_{16}$)-alkynyl, where each of the 3 latter radicals is unsubstituted or substituted by one or more radicals from the group of halogen, hydroxyl, cyano, ($C_1$-$C_4$)-alkoxy, ($C_1$-$C_4$)-haloalkoxy, ($C_1$-$C_4$)-alkylthio, ($C_1$-$C_4$)-alkylamino, di[($C_1$-$C_4$)-alkyl]amino, [($C_1$-$C_4$)-alkoxy]carbonyl, [($C_1$-$C_4$)-haloalkoxy]carbonyl, ($C_3$-$C_6$)-cycloalkyl which is unsubstituted or substituted, phenyl which is unsubstituted or substituted, and heterocyclyl which is unsubstituted or substituted,

or ($C_3$-$C_6$)-cycloalkyl, ($C_4$-$C_6$)-cycloalkenyl, ($C_3$-$C_6$)-cycloalkyl fused on one side of the ring to a 4 to 6-membered saturated or unsaturated carbocyclic ring, or ($C_4$-$C_6$)-cycloalkenyl fused on one side of the ring to a 4 to 6-membered saturated or unsaturated carbocyclic ring, and

where each of the 4 latter radicals is unsubstituted or substituted by one or more radicals from the

group of halogen, hydroxyl, cyano, ($C_1$-$C_4$)-alkyl, ($C_1$-$C_4$)-haloalkyl, ($C_1$-$C_4$)-alkoxy, ($C_1$-$C_4$)-haloalkoxy, ($C_1$-$C_4$)-alkylthio, ($C_1$-$C_4$)-alkylamino, di[($C_1$-$C_4$)-alkyl]amino, [($C_1$-$C_4$)-alkoxy]carbonyl, [($C_1$-$C_4$)-haloalkoxy]carbonyl, ($C_3$-$C_6$)-cycloalkyl which is unsubstituted or substituted, phenyl which is unsubstituted or substituted, and heterocyclyl which is unsubstituted or substituted,

or

$R_H{}^3$ is ($C_1$-$C_4$)-alkoxy, ($C_2$-$C_4$)-alkenyloxy, ($C_2$-$C_6$)-alkynyloxy or ($C_2$-$C_4$)-haloalkoxy and

$R_H{}^4$ is hydrogen or ($C_1$-$C_4$)-alkyl or

$R_H{}^3$ and $R_H{}^4$ together with the directly attached nitrogen atom represent a four- to eight-membered heterocyclic ring which, as well as the nitrogen atom, may also contain further ring heteroatoms, preferably up to two further ring heteroatoms from the group of N, O and S, and which is unsubstituted or substituted by one or more radicals from the group of halogen, cyano, nitro, ($C_1$-$C_4$)-alkyl, ($C_1$-$C_4$)-haloalkyl, ($C_1$-$C_4$)-alkoxy, ($C_1$-$C_4$)-haloalkoxy and ($C_1$-$C_4$)-alkylthio.

S16) Active ingredients which are used primarily as herbicides but also have safener action on crop plants, for example

(2,4-dichlorophenoxy)acetic acid (2,4-D),

(4-chlorophenoxy)acetic acid,

(R,S)-2-(4-chloro-o-tolyloxy)propionic acid (mecoprop),

4-(2,4-dichlorophenoxy)butyric acid (2,4-DB),

(4-chloro-o-tolyloxy)acetic acid (MCPA),

4-(4-chloro-o-tolyloxy)butyric acid,

4-(4-chlorophenoxy)butyric acid,

3,6-dichloro-2-methoxybenzoic acid (dicamba),

1-(ethoxycarbonyl)ethyl 3,6-dichloro-2-methoxybenzoate (lactidichlor-ethyl).

Preferred safeners in combination with the herbicide combinations of the invention are: cloquintocet-mexyl, cyprosulfamide, fenchlorazole ethyl ester, isoxadifen-ethyl, mefenpyr-diethyl, fenclorim, cumyluron, S4-1 and S4-5, and particularly preferred safeners are: cloquintocet-mexyl, cyprosulfamide, isoxadifen-ethyl and mefenpyr-diethyl.

The herbicide combinations of the invention may comprise further components, for example plant growth regulators, plant stimulants or other active ingredients against harmful organisms such as harmful plants, plant-damaging animals or plant-damaging fungi, in this case especially active ingredients from the group of herbicides, fungicides, insecticides, acaricides, nematicides, miticides and related substances.

Examples of plant growth regulators and plant stimulants as possible mixing partners are:
Abscisic acid and related analogs [e.g. (2Z,4E)-5-[6-Ethynyl-1-hydroxy-2,6-dimethyl-4-oxocyclohex-2-en-1-yl]-3-methylpenta-2,4-dienoic acid, methyl-(2Z,4E)-5-[6-ethynyl-1-hydroxy-2,6-dimethyl-4-oxocyclohex-2-en-1-yl]-3-methylpenta-2,4-dienoate, (2Z,4E)-3-ethyl-5-(1-hydroxy-2,6,6-trimethyl-4-oxocyclohex-2-en-1-yl)penta-2,4-dienoic acid, (2E,4E)-5-(1-hydroxy-2,6,6-trimethyl-4-oxocyclohex-2-en-1-yl)-3-(trifluoromethyl)penta-2,4-dienoic acid, methyl (2E,4E)-5-(1-hydroxy-2,6,6-trimethyl-4-oxocyclohex-2-en-1-yl)-3-(trifluoromethyl)penta-2,4-dienoate, (2Z,4E)-5-(2-hydroxy-1,3-dimethyl-5-oxobicyclo[4.1.0]hept-3-en-2-yl)-3-methylpenta-2,4-dienoic acid], acibenzolar, acibenzolar-S-methyl, S-adenosylhomocysteine, allantoin, 2-Aminoethoxyvinylglycine (AVG), aminooxyacetic acid and related esters [e.g. (Isopropylidene)-aminooxyacetic acid-2-(methoxy)-2-oxoethylester, (Isopropylidene)-aminooxyacetic acid-2-(hexyloxy)-2-oxoethylester, (Cyclohexylidene)-aminooxyacetic acid-2-(isopropyloxy)-2-oxoethylester], 1-aminocycloprop-1-yl carboxylic acid and derivatives thereof, e.g. disclosed in DE3335514, EP30287, DE2906507 or US5123951, 5-aminolevulinic acid, ancymidol, 6-benzylaminopurine, bikinin, brassinolide, brassinolide-ethyl, L-canaline, catechin and catechines (e.g. (2S,3R)-2-(3,4-Dihydroxyphenyl)-3,4-dihydro-2H-chromen-3,5,7-triol), chitooligosaccharides (CO; COs differ from LCOs

in that they lack the pendant fatty acid chain that is characteristic of LCOs. COs, sometimes referred to as N-acetylchitooligosaccharides, are also composed of GlcNAc residues but have side chain decorations that make them different from chitin molecules [$(C_8H_{13}NO_5)_n$, CAS No. 1398-61-4] and chitosan molecules [$(C_5H_{11}NO_4)_n$ CAS No. 9012-76-4]), chitinous compounds, chlormequat chloride, cloprop, cyclanilide, 3-(Cycloprop-1-enyl)propionic acid, 1-[2-(4-cyano-3,5-dicyclopropylphenyl)acetamido]cyclohexanecarboxylic acid, 1-[2-(4-cyano-3-cyclopropylphenyl)acetamido]cyclohexanecarboxylic acid, daminozide, dazomet, dazomet-sodium, n-decanol, dikegulac, dikegulac-sodium, endothal, endothal-dipotassium, -disodium, and mono(N,N-dimethylalkylammonium), ethephon, flumetralin, flurenol, flurenol-butyl, flurenol-methyl, flurprimidol, forchlorfenuron, gibberellic acid, inabenfide, indol-3-acetic acid (IAA), 4-indol-3-ylbutyric acid, isoprothiolane, probenazole, jasmonic acid, Jasmonic acid or derivatives thereof (e.g. jasmonic acid methyl ester, jasmonic acid ethyl ester), lipo-chitooligosaccharides (LCO, sometimes referred to as symbiotic nodulation (Nod) signals (or Nod factors) or as Myc factors, consist of an oligosaccharide backbone of β-1,4-linked *N*-acetyl-D-glucosamine ("GlcNAc") residues with an N-linked fatty acyl chain condensed at the non-reducing end. As understood in the art, LCOs differ in the number of GlcNAc residues in the backbone, in the length and degree of saturation of the fatty acyl chain and in the substitutions of reducing and non-reducing sugar residues), linoleic acid or derivatives thereof, linolenic acid or derivatives thereof, maleic hydrazide, mepiquat chloride, mepiquat pentaborate, 1-methylcyclopropene, 3-methylcyclopropene, 1-ethylcyclopropene, 1-n-propylcyclopropene, 1-cyclopropenylmethanol, methoxyvinylglycin (MVG), 3'-methyl abscisic acid, 1-(4-methylphenyl)-N-(2-oxo-1-propyl-1,2,3,4-tetrahydroquinolin-6-yl)methanesulfonamide and related substituted tetrahydroquinolin-6-yl)methanesulfonamides, (3E,3aR,8bS)-3-({ [(2R)-4-Methyl-5-oxo-2,5-dihydrofuran-2-yl]oxy}methylen)-3,3a,4,8b-tetrahydro-2H-indeno[1,2-b]furan-2-one and related lactones as outlined in EP2248421, 2-(1-naphthyl)acetamide, 1-naphthylacetic acid, 2-naphthyloxyacetic acid, nitrophenolate-mixture, 4-Oxo-4[(2-phenylethyl)amino]butyric acid, paclobutrazol, 4-phenylbutyric acid and its related salts (e.g. sodium-4-phenylbutanoate, potassium-4-phenylbutanoate), phenylalanine, N-phenylphthalamic acid, prohexadione, prohexadione-calcium, putrescine, prohydrojasmon, rhizobitoxin, salicylic acid, salicylic acid methyl ester, sarcosine, sodium cycloprop-1-en-1-yl acetate, sodium cycloprop-2-en-1-yl acetate, sodium-3-(cycloprop-2-en-1-yl)propanoate, sodium-3-(cycloprop-1-en-1-yl) propanoate, sidefungin, spermidine, spermine, strigolactone, tecnazene, thidiazuron, triacontanol, trinexapac, trinexapac-ethyl, tryptophan, tsitodef, uniconazole, uniconazole-P, 2-fluoro-N-(3-methoxyphenyl)-9*H*-purin-6-amine.

Fungicidally active compounds that can be used in combination with the herbicide combinations of the invention are preferably standard commercial active ingredients, for example (analogously to the herbicides, the compounds are generally named by their common names):

1) Ergosterol biosynthesis inhibitors, for example (1.001) cyproconazole, (1.002) difenoconazole, (1.003) epoxiconazole, (1.004) fenhexamid, (1.005) fenpropidin, (1.006) fenpropimorph, (1.007) fenpyrazamine, (1.008) fluquinconazole, (1.009) flutriafol, (1.010) imazalil, (1.011) imazalil sulfate, (1.012) ipconazole, (1.013) metconazole, (1.014) myclobutanil, (1.015) paclobutrazole, (1.016) prochloraz, (1.017) propiconazole, (1.018) prothioconazole, (1.019) pyrisoxazole, (1.020) spiroxamine, (1.021) tebuconazole, (1.022) tetraconazole, (1.023) triadimenol, (1.024) tridemorph, (1.025) triticonazole, (1.026) (1R,2S,5S)-5-(4-chlorobenzyl)-2-(chloromethyl)-2-methyl-1-(1H-1,2,4-triazol-1-ylmethyl)cyclopentanol, (1.027) (1S,2R,5R)-5-(4-chlorobenzyl)-2-(chloromethyl)-2-methyl-1-(1H-1,2,4-triazol-1-ylmethyl)cyclopentanol, (1.028) (2R)-2-(1-chlorocyclopropyl)-4-[(1R)-2,2-dichlorocyclopropyl]-1-(1H-1,2,4-triazol-1-yl)butan-2-ol, (1.029) (2R)-2-(1-chlorocyclopropyl)-4-[(1S)-2,2-dichlorocyclopropyl]-1-(1H-1,2,4-triazol-1-yl)butan-2-ol, (1.030) (2R)-2- [4-(4-chlorophenoxy)-2-(trifluoromethyl)phenyl]-1-(1H-1,2,4-triazol-1-yl)propan-2-ol, (1.031) (2S)-2-(1-chlorocyclopropyl)-4-[(1R)-2,2-dichlorocyclopropyl]-1-(1H-1,2,4-triazol-1-yl)butan-2-ol, (1.032) (2S)-2-(1-chlorocyclopropyl)-4-[(1S)-2,2-dichlorocyclopropyl]-1-(1H-1,2,4-triazol-1-yl)butan-2-ol, (1.033) (2S)-2-[4-(4-chlorophenoxy)-2-(trifluoromethyl)phenyl]-1-(1H-1,2,4-triazol-1-yl)propan-2-ol, (1.034) (R)-[3-(4-chloro-2-fluorophenyl)-5-(2,4-difluorophenyl)-1,2-oxazol-4-yl](pyridin-3-yl)methanol, (1.035) (S)-[3-(4-chloro-2-fluorophenyl)-5-(2,4-difluorophenyl)-1,2-oxazol-4-yl](pyridin-3-yl)methanol, (1.036) [3-(4-chloro-2-fluorophenyl)-5-(2,4-difluorophenyl)-1,2-oxazol-4-yl](pyridin-3-yl)methanol, (1.037) 1-({(2R,4S)-2-[2-chloro-4-(4-chlorophenoxy)phenyl]-4-methyl-1,3-dioxolan-2-yl}methyl)-1H-1,2,4-triazole, (1.038) 1-({(2S,4S)-2-[2-chloro-4-(4-chlorophenoxy)phenyl]-4-methyl-1,3-dioxolan-2-yl}methyl)-1H-1,2,4-triazole, (1.039) 1-{[3-(2-chlorophenyl)-2-(2,4-difluorophenyl)oxiran-2-yl]methyl}-1H-1,2,4-triazol-5-yl thiocyanate, (1.040) 1-{ [rel(2R,3R)-3-(2-chlorophenyl)-2-(2,4-difluorophenyl)oxiran-2-yl]methyl}-1H-1,2,4-triazol-5-yl thiocyanate, (1.041) 1-{ [rel(2R,3S)-3-(2-chlorophenyl)-2-(2,4-difluorophenyl)oxiran-2-yl]methyl}-1H-1,2,4-triazol-5-yl thiocyanate, (1.042) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.043) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.044) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.045) 2-[(2R,4S,5S)-1-(2,4-dichlorophenyl)-5-hydroxy-2,6,6-trimethylheptan-4-yl]-2,4-dihydro-3H-1,2,4-triazole-3-thione, (1.046) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.047) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.048) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.049) 2-[(2S,4S,5S)-1-(2,4-dichlorophenyl)-5-hydroxy-2,6,6-trimethylheptan-4-yl]-2,4-dihydro-3H-1,2,4-triazole-3-thione, (1.050) 2-[1-(2,4-dichlorophenyl)-5-hydroxy-2,6,6-trimethylheptan-4-yl]-2,4-dihydro-3H-1,2,4-triazole-3-thione, (1.051) 2-[2-chloro-4-(2,4-dichlorophenoxy)phenyl]-1-(1H-1,2,4-triazol-1-yl)propan-2-ol, (1.052) 2-[2-chloro-4-(4-chlorophenoxy)phenyl]-1-(1H-1,2,4-triazol-1-yl)butan-2-ol, (1.053) 2-[4-(4-chlorophenoxy)-2-(trifluoromethyl)phenyl]-1-(1H-1,2,4-triazol-1-yl)butan-2-ol, (1.054) 2-[4-(4-chlorophenoxy)-2-(trifluoromethyl)phenyl]-1-(1H-1,2,4-triazol-1-yl)pentan-2-ol, (1.055) 2-[4-(4-chlorophenoxy)-2-(trifluoromethyl)phenyl]-1-(1H-1,2,4-triazol-1-yl)propan-2-ol, (1.056) 2-{[3-(2-chlorophenyl)-2-(2,4-difluorophenyl)oxiran-2-yl]methyl}-2,4-dihydro-3H-1,2,4-triazole-3-thione, (1.057)2-{[rel(2R,3R)-3-(2-chlorophenyl)-2-(2,4-difluorophenyl)oxiran-2-yl]methyl}-2,4-dihydro-3H-1,2,4-triazole-3-thione, (1.058) 2-{ [rel(2R,3S)-3-(2-chlorophenyl)-2-(2,4-difluorophenyl)oxiran-2-yl]methyl}-2,4-dihydro-3H-1,2,4-triazole-3-thione, (1.059) 5-(4-chlorobenzyl)-2-(chloromethyl)-2-methyl-1-(1H-1,2,4-triazol-1-ylmethyl)cyclopentanol, (1.060) 5-(allylsulfanyl)-1-{[3-(2-chlorophenyl)-2-(2,4-difluorophenyl)oxiran-2-yl]methyl}-1H-1,2,4-triazole, (1.061) 5-(allylsulfanyl)-1-{[rel(2R,3R)-3-(2-chlorophenyl)-2-(2,4-difluorophenyl)oxiran-2-yl]methyl}-1H-1,2,4-triazole, (1.062) 5-(allylsulfanyl)-1-{[rel(2R,3S)-3-(2-chlorophenyl)-2-(2,4-difluorophenyl)oxiran-2-yl]methyl}-1H-1,2,4-triazole, (1.063) N'-(2,5-dimethyl-4- {[3-(1,1,2,2-tetrafluoroethoxy)phenyl]sulfanyl}phenyl)-N-ethyl-N-methylimidoformamide, (1.064) N'-(2,5-dimethyl-4-{[3-(2,2,2-trifluoroethoxy)phenyl]sulfanyl}phenyl)-N-ethyl-N-methylimidoformamide, (1.065) N'-(2,5-dimethyl-4-{ [3-(2,2,3,3-tetrafluoropropoxy)phenyl]sulfanyl}phenyl)-N-ethyl-N-methylimidoformamide, (1.066) N'-(2,5-dimethyl-4-{[3-(pentafluoroethoxy)phenyl]sulfanyl}phenyl)-N-ethyl-N-methylimidoformamide, (1.067) N'-(2,5-dimethyl-4-{3-[(1,1,2,2-tetrafluoroethyl)sulfanyl]phenoxy}phenyl)-N-ethyl-N-methylimidoformamide, (1.068) N'-(2,5-dimethyl-4-{3-[(2,2,2-trifluoroethyl)sulfanyl]phenoxy}phenyl)-N-ethyl-N-methylimidoformamide, (1.069) N'-(2,5-dimethyl-4-{3-[(2,2,3,3-tetrafluoropropyl)sulfanyl]phenoxy}phenyl)-N-ethyl-N-methylimidoformamide, (1.070) N'-(2,5-dimethyl-4-{3-[(pentafluoroethyl)sulfanyl]phenoxy }phenyl)-N-ethyl-N-methylimidoformamide, (1.071) N'-(2,5-dimethyl-4-phenoxyphenyl)-N-ethyl-N-methylimidoformamide, (1.072) N'-(4-{ [3-(difluoromethoxy)phenyl]sulfanyl}-2,5-dimethylphenyl)-N-ethyl-N-methylimidoformamide, (1.073) N'-(4-{3-[(difluoromethyl)sulfanyl]phenoxy}-2,5-dimethylphenyl)-N-ethyl-N-methylimidoformamide, (1.074) N'-[5-bromo-6-(2,3-dihydro-1H-inden-2-yloxy)-2-methylpyridin-3-yl]-N-ethyl-N-methylimidoformamide, (1.075) N'-{4-[(4,5-dichloro-1,3-thiazol-2-yl)oxy]-2,5-dimethylphenyl}-N-ethyl-N-methylimidoformamide, (1.076) N'-{5-bromo-6-[(1R)-1-(3,5-difluorophenyl)ethoxy]-2-methylpyridin-3-yl}-N-ethyl-N-methylimidoformamide, (1.077) N'-{5-bromo-6-[(1S)-1-(3,5-difluorophenyl)ethoxy]-2-methylpyridin-3-yl}-N-ethyl-N-methylimidoformamide, (1.078) N'-{5-bromo-6-[(cis-4-isopropylcyclohexyl)oxy]-2-methylpyridin-3-yl}-N-ethyl-N-methylimidoformamide, (1.079) N'-{5-bromo-6-[(trans-4-isopropylcyclohexyl)oxy]-2-methylpyridin-3-yl}-N-ethyl-N-methylimidoformamide, (1.080) N'-{5-bromo-6-[1-(3,5-difluorophenyl)ethoxy]-2-methylpyridin-3-yl}-N-ethyl-N-methylimidoformamide, (1.081) mefentrifluconazole, (1.082) ipfentrifluconazole.

2) Inhibitors of the respiratory chain in complex I or II, for example (2.001) benzovindiflupyr, (2.002) bixafen, (2.003) boscalid, (2.004) carboxin, (2.005) fluopyram, (2.006) flutolanil, (2.007) fluxapyroxad, (2.008) furametpyr, (2.009) isofetamid, (2.010) isopyrazam (anti-epimeric enantiomer 1R,4S,9S), (2.011) isopyrazam (anti-epimeric enantiomer 1S,4R,9R), (2.012) isopyrazam (anti-epimeric racemate 1RS,4SR,9SR), (2.013) isopyrazam (mixture of the syn-epimeric racemate 1RS,4SR,9RS and the anti-epimeric racemate 1RS,4SR,9SR), (2.014) isopyrazam (syn-epimeric enantiomer 1R,4S,9R), (2.015) isopyrazam (syn-epimeric enantiomer 1S,4R,9S), (2.016) isopyrazam (syn-epimeric racemate 1RS,4SR,9RS), (2.017) penflufen, (2.018) penthiopyrad, (2.019) pydiflumetofen, (2.020) pyraziflumid, (2.021) sedaxane, (2.022) 1,3-dimethyl-N-(1,1,3-trimethyl-2,3-dihydro-1H-inden-4-yl)-1H-pyrazole-4-carboxamide, (2.023) 1,3-dimethyl-N-[(3R)-1,1,3-trimethyl-2,3-dihydro-1H-inden-4-yl]-1H-pyrazole-4-carboxamide, (2.024) 1,3-dimethyl-N-[(3S)-1,1,3-trimethyl-2,3-dihydro-1H-inden-4-yl]-1H-pyrazole-4-carboxamide, (2.025) 1-methyl-3-(trifluoromethyl)-N-[2'-(trifluoromethyl)biphenyl-2-yl]-1H-pyrazole-4-carboxamide, (2.026) 2-fluoro-6-(trifluoromethyl)-N-(1,1,3-trimethyl-2,3-dihydro-1H-inden-4-yl)benzamide, (2.027) 3-(difluoromethyl)-1-methyl-N-(1,1,3-trimethyl-2,3-dihydro-1H-inden-4-yl)-1H-pyrazole-4-carboxamide, (2.028) 3-(difluoromethyl)-1-methyl-N-[(3R)-1,1,3-trimethyl-2,3-dihydro-1H-inden-4-yl]-1H-pyrazole-4-carboxamide, (2.029) 3-(difluoromethyl)-1-methyl-N-[(3S)-1,1,3-trimethyl-2,3-dihydro-1H-inden-4-yl]-1H-pyrazole-4-carboxamide, (2.030) 3-(difluoromethyl)-N-(7-fluoro-1,1,3-trimethyl-2,3-dihydro-1H-inden-4-yl)-1-methyl-1H-pyrazole-4-carboxamide, (2.031) 3-(difluoromethyl)-N-[(3R)-7-fluoro-1,1,3-trimethyl-2,3-dihydro-1H-inden-4-yl]-1-methyl-1H-pyrazole-4-carboxamide, (2.032) 3-(difluoromethyl)-N-[(3S)-7-fluoro-1,1,3-trimethyl-2,3-dihydro-1H-inden-4-yl]-1-methyl-1H-pyrazole-4-carboxamide, (2.033) 5,8-difluoro-N-[2-(2-fluoro-4-{ [4-(trifluoromethyl)pyridin-2-yl]oxy}phenyl)ethyl]quinazolin-4-amine, (2.034) N-(2-cyclopentyl-5-fluorobenzyl)-N-cyclopropyl-3-(difluoromethyl)-5-fluoro-1-methyl-1H-pyrazole-4-carboxamide, (2.035) N-(2-tert-butyl-5-methylbenzyl)-N-cyclopropyl-3-(difluoromethyl)-5-fluoro-1-methyl-1H-pyrazole-4-carboxamide, (2.036) N-(2-tert-butylbenzyl)-N-cyclopropyl-3-(difluoromethyl)-5-fluoro-1-methyl-1H-pyrazole-4-carboxamide, (2.037) N-(5-chloro-2-ethylbenzyl)-N-cyclopropyl-3-(difluoromethyl)-5-fluoro-1-methyl-1H-pyrazole-4-carboxamide, (2.038) N-(5-chloro-2-isopropylbenzyl)-N-cyclopropyl-3-(difluoromethyl)-5-fluoro-1-methyl-1H-pyrazole-4-carboxamide, (2.039) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.040) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.041) N-[1-(2,4-dichlorophenyl)-1-methoxypropan-2-yl]-3-(difluoromethyl)-1-methyl-1H-pyrazole-4-carboxamide, (2.042) N-[2-chloro-6-(trifluoromethyl)benzyl]-N-cyclopropyl-3-(difluoromethyl)-5-fluoro-1-methyl-1H-pyrazole-4-carboxamide, (2.043) N-[3-chloro-2-fluoro-6-(trifluoromethyl)benzyl]-N-cyclopropyl-3-(difluoromethyl)-5-fluoro-1-methyl-1H-pyrazole-4-carboxamide, (2.044) N-[5-chloro-2-(trifluoromethyl)benzyl]-N-cyclopropyl-3-(difluoromethyl)-5-fluoro-1-methyl-1H-pyrazole-4-carboxamide, (2.045) N-cyclopropyl-3-(difluoromethyl)-5-fluoro-1-methyl-N-[5-methyl-2-(trifluoromethyl)benzyl]-1H-pyrazole-4-carboxamide, (2.046) N-cyclopropyl-3-(difluoromethyl)-5-fluoro-N-(2-fluoro-6-isopropylbenzyl)-1-methyl-1H-pyrazole-4-carboxamide, (2.047) N-cyclopropyl-3-(difluoromethyl)-5-fluoro-N-(2-isopropyl-5-methylbenzyl)-1-methyl-1H-pyrazole-4-carboxamide, (2.048) N-cyclopropyl-3-(difluoromethyl)-5-fluoro-N-(2-isopropylbenzyl)-1-methyl-1H-pyrazole-4-carbothioamide, (2.049) N-cyclopropyl-3-(difluoromethyl)-5-fluoro-N-(2-isopropylbenzyl)-1-methyl-1H-pyrazole-4-carboxamide, (2.050) N-cyclopropyl-3-(difluoromethyl)-5-fluoro-N-(5-fluoro-2-isopropylbenzyl)-1-methyl-1H-pyrazole-4-carboxamide, (2.051) N-cyclopropyl-3-(difluoromethyl)-N-(2-ethyl-4,5-dimethylbenzyl)-5-fluoro-1-methyl-1H-pyrazole-4-carboxamide, (2.052) N-cyclopropyl-3-(difluoromethyl)-N-(2-ethyl-5-fluorobenzyl)-5-fluoro-1-methyl-1H-pyrazole-4-carboxamide, (2.053) N-cyclopropyl-3-(difluoromethyl)-N-(2-ethyl-5-methylbenzyl)-5-fluoro-1-methyl-1H-pyrazole-4-carboxamide, (2.054) N-cyclopropyl-N-(2-cyclopropyl-5-fluorobenzyl)-3-(difluoromethyl)-5-fluoro-1-methyl-1H-pyrazole-4-carboxamide, (2.055) N-cyclopropyl-N-(2-cyclopropyl-5-methylbenzyl)-3-(difluoromethyl)-5-fluoro-1-methyl-1H-pyrazole-4-carboxamide, (2.056) N-cyclopropyl-N-(2-cyclopropylbenzyl)-3-(difluoromethyl)-5-fluoro-1-methyl-1H-pyrazole-4-carboxamide.

3) Respiratory chain inhibitors acting on complex III, for example (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadon, (3.010) fenamidon, (3.011) flufenoxystrobin, (3.012) fluoxastrobin, (3.013) kresoxim-methyl, (3.014) metominostrobin, (3.015) orysastrobin, (3.016) picoxystrobin, (3.017) pyraclostrobin, (3.018) pyrametostrobin, (3.019) pyraoxystrobin, (3.020) trifloxystrobin, (3.021) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.022) (2E,3Z)-5-{[1-(4-chlorophenyl)-1H-pyrazol-3-yl]oxy}-2-(methoxyimino)-N,3-dimethylpent-3-enamide, (3.023) (2R)-2-{2-[(2,5-dimethylphenoxy)methyl]phenyl}-2-methoxy-N-methylacetamide, (3.024) (2S)-2-{2-[(2,5-dimethylphenoxy)methyl]phenyl}-2-methoxy-N-methylacetamide, (3.025) (3S,6S,7R,8R)-8-benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoate, (3.026) 2-{2-[(2,5-dimethylphenoxy)methyl]phenyl}-2-methoxy-N-methylacetamide, (3.027) N-(3-ethyl-3,5,5-trimethylcyclohexyl)-3-formamido-2-hydroxybenzamide, (3.028) (2E,3Z)-5-{ [1-(4-chloro-2-fluorophenyl)-1H-pyrazol-3-yl]oxy}-2-(methoxyimino)-N,3-dimethylpent-3-enamide, (3.029) methyl {5-[3-(2,4-dimethylphenyl)-1H-pyrazol-1-yl]-2-methylbenzyl}carbamate.

4) Mitosis and cell division inhibitors, for example (4.001) carbendazim, (4.002) diethofencarb, (4.003) ethaboxam, (4.004) fluopicolid, (4.005) pencycuron, (4.006) thiabendazole, (4.007) thiophanate-methyl, (4.008) zoxamide, (4.009) 3-chloro-4-(2,6-difluorophenyl)-6-methyl-5-phenylpyridazine, (4.010) 3-chloro-5-(4-chlorophenyl)-4-(2,6-difluorophenyl)-6-methylpyridazine, (4.011) 3-chloro-5-(6-chloropyridin-3-yl)-6-methyl-4-(2,4,6-trifluorophenyl)pyridazine, (4.012) 4-(2-bromo-4-fluorophenyl)-N-(2,6-difluorophenyl)-1,3-dimethyl-1H-pyrazol-5-amine, (4.013) 4-(2-bromo-4-fluorophenyl)-N-(2-bromo-6-fluorophenyl)-1,3-dimethyl-1H-pyrazol-5-amine, (4.014) 4-(2-bromo-4-fluorophenyl)-N-(2-bromophenyl)-1,3-dimethyl-1H-pyrazol-5-amine, (4.015) 4-(2-bromo-4-fluorophenyl)-N-(2-chloro-6-fluorophenyl)-1,3-dimethyl-1H-pyrazol-5-amine, (4.016) 4-(2-bromo-4-fluorophenyl)-N-(2-chlorophenyl)-1,3-dimethyl-1H-pyrazol-5-amine, (4.017) 4-(2-bromo-4-fluorophenyl)-N-(2-fluorophenyl)-1,3-dimethyl-1H-pyrazol-5-amine, (4.018) 4-(2-chloro-4-fluorophenyl)-N-(2,6-difluorophenyl)-1,3-dimethyl-1H-pyrazol-5-amine, (4.019) 4-(2-chloro-4-fluorophenyl)-N-(2-chloro-6-fluorophenyl)-1,3-dimethyl-1H-pyrazol-5-amine, (4.020) 4-(2-chloro-4-fluorophenyl)-N-(2-chlorophenyl)-1,3-dimethyl-1H-pyrazol-5-amine, (4.021) 4-(2-chloro-4-fluorophenyl)-N-(2-fluorophenyl)-1,3-dimethyl-1H-pyrazol-5-amine, (4.022) 4-(4-chlorophenyl)-5-(2,6-difluorophenyl)-3,6-dimethylpyridazine, (4.023) N-(2-bromo-6-fluorophenyl)-4-(2-chloro-4-fluorophenyl)-1,3-dimethyl-1H-pyrazol-5-amine, (4.024) N-(2-bromophenyl)-4-(2-chloro-4-fluorophenyl)-1,3-dimethyl-1H-pyrazol-5-amine, (4.025) N-(4-chloro-2,6-difluorophenyl)-4-(2-chloro-4-fluorophenyl)-1,3-dimethyl-1H-pyrazol-5-amine.

5) Compounds with multisite activity, for example (5.001) Bordeaux mixture, (5.002) captafol, (5.003) captan, (5.004) chlorthalonil, (5.005) copper hydroxide, (5.006) copper naphthenate, (5.007) copper oxide, (5.008) copper oxychloride, (5.009) copper(2+) sulfate, (5.010) dithianon, (5.011) dodine, (5.012) folpet, (5.013) mancozeb, (5.014) maneb, (5.015) metiram, (5.016) zinc metiram, (5.017) copper oxine, (5.018) propineb, (5.019) sulfur and sulfur preparations including calcium polysulfide, (5.020) thiram, (5.021) zineb, (5.022) ziram, (5.023) 6-ethyl-5,7-dioxo-6,7-dihydro-5H-pyrrolo[3',4':5,6][1,4]dithiino[2,3-c][1,2]thiazole-3-carbonitrile.

6) Compounds capable of triggering host defence, for example (6.001) acibenzolar-S-methyl, (6.002) isotianil, (6.003) probenazole, (6.004) tiadinil.

7) Amino acid and/or protein biosynthesis inhibitors, for example (7.001) cyprodinil, (7.002) kasugamycin, (7.003) kasugamycin hydrochloride hydrate, (7.004) oxytetracycline, (7.005) pyrimethanil, (7.006) 3-(5-fluoro-3,3,4,4-tetramethyl-3,4-dihydroisoquinolin-1-yl)quinoline.

8) ATP production inhibitors, for example (8.001) silthiofam.

9) Cell wall synthesis inhibitors, for example (9.001) benthiavalicarb, (9.002) dimethomorph, (9.003) flumorph, (9.004) iprovalicarb, (9.005) mandipropamid, (9.006) pyrimorph, (9.007) valifenalate, (9.008) (2E)-3-(4-tert-butylphenyl)-3-(2-chloropyridin-4-yl)-1-(morpholin-4-yl)prop-2-en-1-one, (9.009) (2Z)-3-(4-tert-butylphenyl)-3-(2-chloropyridin-4-yl)-1-(morpholin-4-yl)prop-2-en-1-one.

10) Lipid and membrane synthesis inhibitors, for example (10.001) propamocarb, (10.002) propamocarb hydrochloride, (10.003) tolclofos-methyl.

11) Melanin biosynthesis inhibitors, for example (11.001) tricyclazole, (11.002) 2,2,2-trifluoroethyl-{3-methyl-1-[(4-methylbenzoyl)amino]butan-2-yl}carbamate.

12) Nucleic acid synthesis inhibitors, for example (12.001) benalaxyl, (12.002) benalaxyl-M (kiralaxyl), (12.003) metalaxyl, (12.004) metalaxyl-M (mefenoxam).

13) Signal transduction inhibitors, for example (13.001) fludioxonil, (13.002) iprodione, (13.003) procymidone, (13.004) proquinazid, (13.005) quinoxyfen, (13.006) vinclozolin.

14) Compounds that can act as decouplers, for example (14.001) fluazinam, (14.002) meptyldinocap.

15) Further compounds, for example (15.001) abscisic acid, (15.002) benthiazole, (15.003) bethoxazin, (15.004) capsimycin, (15.005) carvone, (15.006) chinomethionat, (15.007) cufraneb, (15.008) cyflufenamid, (15.009) cymoxanil, (15.010) cyprosulfamide, (15.011) flutianil, (15.012) fosetylaluminium, (15.013) fosetyl-calcium, (15.014) fosetyl-sodium, (15.015) methyl isothiocyanate, (15.016) metrafenon, (15.017) mildiomycin, (15.018) natamycin, (15.019) nickel dimethyldithiocarbamate, (15.020) nitrothal-isopropyl, (15.021) oxamocarb, (15.022) oxathiapiprolin, (15.023) oxyfenthiin, (15.024) pentachlorophenol and salts, (15.025) phosphonic acid and salts thereof, (15.026) propamocarb-fosetylate, (15.027) pyriofenone (chlazafenone), (15.028) tebufloquin, (15.029) tecloftalam, (15.030) tolnifanide, (15.031) 1-(4-{4-[(5R)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.032) 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.033) 2-(6-benzylpyridin-2-yl)quinazoline, (15.034) 2,6-dimethyl-1H,5H-[1,4]dithiino[2,3-c:5,6-c']dipyrrole-1,3,5,7(2H,6H)-tetrone, (15.035) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, (15.036) 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, (15.037) 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, (15.038) 2-[6-(3-fluoro-4-methoxyphenyl)-5-methylpyridin-2-yl]quinazoline, (15.039) 2-{(5R)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.040) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.041) 2-{2-[(7,8-difluoro-2-methylquinolin-3-yl)oxy]-6-fluorophenyl}propan-2-ol, (15.042) 2-{2-fluoro-6-[(8-fluoro-2-methylquinolin-3-yl)oxy]phenyl}propan-2-ol, (15.043) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.044) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (15.045) 2-phenylphenol and salts thereof, (15.046) 3-(4,4,5-trifluoro-3,3-dimethyl-3,4-dihydroisoquinolin-1-yl)quinoline, (15.047) 3-(4,4-difluoro-3,3-dimethyl-3,4-dihydroisoquinolin-1-yl)quinoline, (15.048) 4-amino-5-fluoropyrimidin-2-ol (tautomeric form: 4-amino-5-fluoropyrimidin-2(1H)-one), (15.049) 4-oxo-4-[(2-phenylethyl)amino]butyric acid, (15.050) 5-amino-1,3,4-thiadiazole-2-thiol, (15.051) 5-chloro-N'-phenyl-N'-(prop-2-yn-1-yl)thiophene 2-sulfonohydrazide, (15.052) 5-fluoro-2-[(4-fluorobenzyl)oxy]pyrimidin-4-amine, (15.053) 5-fluoro-2-[(4-methylbenzyl)oxy]pyrimidin-4-amine, (15.054) 9-fluoro-2,2-dimethyl-5-(quinolin-3-yl)-2,3-dihydro-1,4-benzoxazepine, (15.055) but-3-yn-1-yl {6-[({[(Z)-(1-methyl-1H-tetrazol-5-yl)(phenyl)methylene] amino}oxy)methyl]pyridin-2-yl} carbamate, (15.056) ethyl (2Z)-3-amino-2-cyano-3-phenylacrylate, (15.057) phenazine-1-carboxylic acid, (15.058) propyl 3,4,5-trihydroxybenzoate, (15.059) quinolin-8-ol, (15.060) quinolin-8-ol sulfate (2:1), (15.061) tert-butyl {6-[({[(1-methyl-1H-tetrazol-5-yl)(phenyl)methylene]amino}oxy)methyl]pyridin-2-yl}carbamate, (15.062) 5-fluoro-4-imino-3-methyl-1)sulfonyl]-3,4-dihydropyrimidin-2(1H)-one.

Preferred fungicides are selected from the group consisting of benalaxyl, bitertanol, bromuconazole, captafol, carbendazim, carpropamid, cyazofamid, cyproconazole, diethofencarb, edifenphos, fenpropimorph, fentine, fluquinconazole, fosetyl, fluoroimide, folpet, iminoctadine, iprodionem, iprovalicarb, kasugamycin, maneb, nabam, pencycuron, prochloraz, propamocarb, propineb, pyrimethanil, spiroxamine, quintozene, tebuconazole, tolylfluanid, triadimefon, triadimenol, trifloxystrobin, zineb.

Insecticidal, acaricidal, nematicidal, miticidal and related active ingredients are, for example (analogously to the herbicides and fungicides, the compounds are, if possible, referred to by their common names):

(1) Acetylcholinesterase (AChE) inhibitors, preferably carbamates selected from alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC and xylylcarb; or organophosphates selected from acephate, azamethiphos, azinphos-ethyl, azinphos-methyl, cadusafos, chlorethoxyfos, chlorfenvinphos, chlormephos, chlorpyrifos-methyl, coumaphos, cyanophos, demeton-S-methyl, diazinon, dichlorvos/DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothiophosphoryl) salicylate, isoxathion, malathion, mecarbam, methamidophos, methidathion, mevinphos, monocrotophos, naled, omethoate, oxydemeton-methyl, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, triclorfon and vamidothion.

(2) GABA-gated chloride channel blockers, preferably cyclodiene-organochlorines selected from chlordane and endosulfan, or phenylpyrazoles (fiproles) selected from ethiprole and fipronil.

(3) Sodium channel modulators, preferably pyrethroids selected from acrinathrin, allethrin, d-cis-trans allethrin, d-trans allethrin, bifenthrin, bioallethrin, bioallethrin S-cyclopentenyl isomer, bioresmethrin, cycloprothrin, cyfluthrin, beta-cyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin [(1R)-trans isomer], deltamethrin, empenthrin [(EZ)-(1R) isomer], esfenvalerate, etofenprox, fenpropathrin, fenvalerate, flucythrinate, flumethrin, tau-fluvalinate, halfenprox, imiprothrin, kadethrin, momfluorothrin, permethrin, phenothrin [(1R)-trans isomer], prallethrin, pyrethrins (pyrethrum), resmethrin, silafluofen, tefluthrin, tetramethrin, tetramethrin [(1R) isomer], tralomethrin and transfluthrin or DDT or methoxychlor.

(4) Nicotinic acetylcholine receptor (nAChR) competitive modulators, preferably neonicotinoids selected from acetamiprid, clothianidin, dinotefuran, imidacloprid, nitenpyram, thiacloprid and thiamethoxam, or nicotine, or sulfoximines selected from sulfoxaflor, or butenolides selected from flupyradifurone.

(5) Nicotinic acetylcholine receptor (nAChR) allosteric modulators, preferably spinosyns selected from spinetoram and spinosad.

(6) Glutamate-gated chloride channel (GluCl) allosteric modulators, preferably avermectins/milbemycins selected from abamectin, emamectin benzoate, lepimectin and milbemectin.

(7) Juvenile hormone mimics, preferably juvenile hormone analogues selected from hydroprene, kinoprene and methoprene, or fenoxycarb or pyriproxyfen.

(8) Miscellaneous non-specific (multi-site) inhibitors, preferably alkyl halides selected from methyl bromide and other alkyl halides; or chloropicrin or sulfuryl fluoride or borax or tartar emetic or methyl isocyanate generators selected from diazomet and metam.

(9) Chordotonal organ TRPV channel modulators selected from pymetrozine and pyrifluquinazon.

(10) Mite growth inhibitors selected from clofentezine, hexythiazox, diflovidazin and etoxazole.

(11) Microbial disruptors of insect midgut membranes selected from *Bacillus thuringiensis* subspecies *israelensis, Bacillus sphaericus, Bacillus thuringiensis* subspecies *aizawai, Bacillus thuringiensis* subspecies *kurstaki, Bacillus thuringiensis* subspecies *tenebrionis,* and *B.t.* plant proteins selected from Cry1Ab, Cry1Ac, Cry1Fa, Cry1A.105, Cry2Ab, VIP3A, mCry3A, Cry3Ab, Cry3Bb and Cry34Ab1/35Ab1.

(12) Inhibitors of mitochondrial ATP synthase, preferably ATP disruptors selected from diafenthiuron, or organotin compounds selected from azocyclotin, cyhexatin and fenbutatin oxide, or propargite or tetradifon.

(13) Uncouplers of oxidative phosphorylation via disruption of the proton gradient selected from chlorfenapyr, DNOC and sulfluramid.

(14) Nicotinic acetylcholine receptor channel blockers selected from bensultap, cartap hydrochloride, thiocyclam, and thiosultap-sodium.

(15) Inhibitors of chitin biosynthesis, type 0, selected from bistrifluron, chlorfluazuron, diflubenzuron, flucycloxuron, flufenoxuron, hexaflumuron, lufenuron, novaluron, noviflumuron, teflubenzuron and triflumuron.

(16) Inhibitors of chitin biosynthesis, type 1, selected from buprofezin.

(17) Molting disruptors (especially in the case of Diptera) selected from cyromazine.

(18) Ecdysone receptor agonists selected from chromafenozide, halofenozide, methoxyfenozide and tebufenozide.

(19) Octopamine receptor agonists selected from amitraz.

(20) Mitochondrial complex III electron transport inhibitors selected from hydramethylnon, acequinocyl and fluacrypyrim.

(21) Mitochondrial complex I electron transport inhibitors, preferably METI acaricides selected from fenazaquin, fenpyroximate, pyrimidifen, pyridaben, tebufenpyrad and tolfenpyrad, or rotenone (Derris).

(22) Voltage-dependent sodium channel blockers selected from indoxacarb and metaflumizone.

(23) Inhibitors of acetyl-CoA carboxylase, preferably tetronic and tetramic acid derivatives selected from spirodiclofen, spiromesifen and spirotetramat.

(24) Mitochondrial complex IV electron transport inhibitors, preferably phosphines selected from aluminium phosphide, calcium phosphide, phosphine and zinc phosphide, or cyanides selected from calcium cyanide, potassium cyanide and sodium cyanide.

(25) Mitochondrial complex II electron transport inhibitors, preferably beta-keto nitrile derivatives selected from cyenopyrafen and cyflumetofen, or carboxanilides selected from pyflubumide.

(28) Ryanodine receptor modulators, preferably diamides selected from chlorantraniliprole, cyantraniliprole and flubendiamide.

(29) Chordotonal organ modulators (with undefined target structure) selected from flonicamid.

(30) Further active ingredients selected from acynonapyr, afidopyropen, afoxolaner, azadirachtin, benclothiaz, benzoximate, benzpyrimoxan, bifenazate, broflanilide, bromopropylate, chinomethionat, chloroprallethrin, cryolite, cyclaniliprole, cycloxaprid, cyhalodiamide, dicloromezotiaz, dicofol, epsilon metofluthrin, epsilon momfluthrin, flometoquin, fluazaindolizine, fluensulfone, flufenerim, flufenoxystrobin, flufiprole, fluhexafon, fluopyram, flupyrimin, fluralaner, fluxametamide, fufenozide, guadipyr, heptafluthrin, imidaclothiz, iprodione, kappa bifenthrin, kappa tefluthrin, lotilaner, meperfluthrin, oxazosulfyl, paichongding, pyridalyl, pyrifluquinazon, pyriminostrobin, spirobudiclofen, spiropidion, tetramethylfluthrin, tetraniliprole, tetrachlorantraniliprole, tigolaner, tioxazafen, thiofluoximate, triflumezopyrim and iodomethane; additionally preparations based on *Bacillus firmus* (I-1582, BioNeem, Votivo), and the following compounds: 1-{2-fluoro-4-methyl-5-[(2,2,2-trifluoroethyl)sulfinyl]phenyl}-3-(trifluoromethyl)-1H-1,2,4-triazole-5-amine (known from WO2006/043635) (CAS 885026-50-6), {1'-[(2E)-3-(4-chlorophenyl)prop-2-en-1-yl]-5-fluorospiro[indole-3,4'-piperidine]-1(2H)-yl}(2-chloropyridin-4-yl)methanone (known from WO2003/106457) (CAS 637360-23-7), 2-chloro-N-[2-{1-[(2E)-3-(4-chlorophenyl)prop-2-en-1-yl]piperidin-4-yl}-4-(trifluoromethyl)phenyl]isonicotinamide (known from WO2006/003494) (CAS 872999-66-1), 3-(4-chloro-2,6-dimethylphenyl)-4-hydroxy-8-methoxy-1,8-diazaspiro[4.5]dec-3-en-2-one (known from WO 2010052161) (CAS 1225292-17-0), 3-(4-chloro-2,6-dimethylphenyl)-8-methoxy-2-oxo-1,8-diazaspiro[4.5]dec-3-en-4-yl ethylcarbonate (known from EP 2647626) (CAS-1440516-42-6), 4-(but-2-yn-1-yloxy)-6-(3,5-dimethylpiperidin-1-yl)-5-fluoropyrimidine (known from WO2004/099160) (CAS 792914-58-0), PF1364 (known from JP2010/018586) (CAS Reg.No. 1204776-60-2), (3E)-3-[1-[(6-chloro-3-pyridyl)methyl]-2-pyridylidene]-1,1,1-trifluoropropan-2-one (known from WO2013/144213) (CAS 1461743-15-6), N-[3-(benzylcarbamoyl)-4-chlorophenyl]-1-methyl-3-(pentafluoroethyl)-4-(trifluoromethyl)-1H-pyrazole-5-carboxamide (known from WO2010/051926) (CAS 1226889-14-0), 5-bromo-4-chloro-N-[4-chloro-2-methyl-6-(methylcarbamoyl)phenyl]-2-(3-chloro-2-pyridyl)pyrazole-3-carboxamide (known from CN103232431) (CAS 1449220-44-3), 4-[5-(3,5-dichlorophenyl)-4,5-dihydro-5-(trifluoromethyl)-3-isoxazolyl]-2-methyl-N-(cis-1-oxido-3-thietanyl)benzamide, 4-[5-(3,5-dichlorophenyl)-4,5-dihydro-5-(trifluoromethyl)-3-isoxazolyl]-2-methyl-N-(trans-1-oxido-3-thietanyl)benzamide and 4-[(5S)-5-(3,5-dichlorophenyl)-4,5-dihydro-5-(trifluoromethyl)-3-isoxazolyl]-2-methyl-N-(cis-1-oxido-3-thietanyl)benzamide (known from WO 2013/050317 A1) (CAS 1332628-83-7), N-[3-chloro-1-(3-pyridinyl)-1H-pyrazol-4-yl]-N-ethyl-3-[(3,3,3-trifluoropropyl)sulfinyl]propanamide, (+)-N-[3-chloro-l-(3-pyridinyl)-1H-pyrazol-4-yl]-N-ethyl-3-[(3,3,3-trifluoropropyl)sulfinyl]propanamide and (-)-N-[3-chloro-1-(3-pyridinyl)-1H-pyrazol-4-yl]-N-ethyl-3-[(3,3,3-trifluoropropyl)sulfinyl]propanamide (known from WO 2013/162715 A2, WO 2013/162716 A2, US 2014/0213448 A1) (CAS 1477923-37-7), 5-[[(2E)-3-chloro-2-propen-1-yl] amino]-1-[2,6-dichloro-4-(trifluoromethyl)phenyl]-4-[(trifluoromethyl)sulfinyl]-1H-pyrazole-3-carbonitrile (known from CN 101337937 A) (CAS 1105672-77-2), 3-bromo-N-[4-chloro-2-methyl-6-[(methylamino)thioxomethyl]phenyl]-1-(3-chloro-2-pyridinyl)-1H-pyrazole-5-carboxamide (Liudaibenjiaxuanan, known from CN 103109816 A) (CAS 1232543-85-9); N-[4-chloro-2-[[(1,1-dimethylethyl)amino]carbonyl]-6-methylphenyl]-1-(3-chloro-2-pyridinyl)-3-(fluoromethoxy)-1H-pyrazole-5-carboxamide (known from WO 2012/034403 A1) (CAS 1268277-22-0), N-[2-(5-amino-1,3,4-thiadiazol-2-yl)-4-chloro-6-methylphenyl]-3-bromo-1-(3-chloro-2-pyridinyl)-1H-pyrazole-5-carboxamide (known from WO 2011/085575 A1) (CAS 1233882-22-8), 4-[3-[2,6-dichloro-4-[(3,3-dichloro-2-propen-1-yl)oxy]phenoxy]propoxy]-2-methoxy-6-(trifluoromethyl)pyrimidine (known from CN 101337940 A) (CAS 1108184-52-6); (2E)- and 2(Z)-2-[2-(4-cyanophenyl)-1-[3-(trifluoromethyl)phenyl]ethylidene]-N-[4-(difluoromethoxy)phenyl]hydrazinecarboxamide (known from CN 101715774 A) (CAS 1232543-85-9); cyclopropanecarboxylic acid 3-(2,2-dichloroethenyl)-2,2-dimethyl-4-(1H-benzimidazol-2-yl)phenyl ester (known from CN 103524422 A) (CAS 1542271-46-4); (4aS)-7-chloro-2,5-dihydro-2-[[(methoxycarbonyl) [4-[(trifluoromethyl)thio]phenyl]amino]carbonyl]indeno[1,2-e][1,3,4]oxadiazine-4a(3H)-carboxylic acid methyl ester (known from CN 102391261 A) (CAS 1370358-69-2); 6-deoxy-3-O-ethyl-2,4-di-O-methyl-1-[N-[4-[1-[4-(1,1,2,2,2-pentafluoroethoxy)phenyl]-1H-1,2,4-triazol-3-yl]phenyl]carbamate]-α-L-mannopyranose (known from US 2014/0275503 A1) (CAS 1181213-14-8); 8-(2-cyclopropylmethoxy-4-trifluoromethylphenoxy)-3-(6-trifluoromethylpyridazin-3-yl)-3-azabicyclo[3.2.1]octane (CAS 1253850-56-4), (8-anti)-8-(2-cyclopropylmethoxy-4-trifluoromethylphenoxy)-3-(6-trifluoromethylpyridazin-3-yl)-3-azabicyclo[3.2.1]octane (CAS 933798-27-7), (8-syn)-8-(2-cyclopropylmethoxy-4-trifluoromethylphenoxy)-3-(6-trifluoromethylpyridazin-3-yl)-3-azabicyclo[3.2.1]octane (known from WO 2007040280 A1, WO 2007040282 A1) (CAS 934001-66-8), N-[3-chloro-1-(3-pyridinyl)-1H-pyrazol-4-yl]-N-ethyl-3-[(3,3,3-trifluoropropyl)thio]propanamide (known from WO 2015/058021 A1, WO 2015/058028 A1) (CAS 1477919-27-9) and N-[4-(aminothioxomethyl)-2-methyl-6-[(methylamino)carbonyl]phenyl]-3-bromo-1-(3-chloro-2-pyridinyl)-1H-pyrazole-5-carboxamide (known from CN 103265527 A) (CAS 1452877-50-7), 5-(1,3-dioxan-2-yl)-4-[[4-(trifluoromethyl)phenyl]methoxy]pyrimidine (known from WO 2013/115391 A1) (CAS 1449021-97-9), 3-(4-chloro-2,6-dimethylphenyl)-8-methoxy-1-methyl-1,8-diazaspiro[4.5]decane-2,4-dione (known from WO 2014/187846 A1) (CAS 1638765-58-8), ethyl 3-(4-chloro-2,6-dimethylphenyl)-8-methoxy-1-methyl-2-oxo-1,8-diazaspiro[4.5]dec-3-en-4-ylcarboxylate (known from WO 2010/066780 A1, WO 2011151146 A1) (CAS 1229023-00-0), 4-[(5S)-5-(3,5-dichloro-4-fluorophenyl)-4,5-dihydro-5-(trifluoromethyl)-3-isoxazolyl]-N-[(4R)-2-ethyl-3-oxo-4-isoxazolidinyl]-2-methylbenzamide (known from WO 2011/067272, WO2013/050302) (CAS 1309959-62-3).

Insecticides that can preferably be used together with the herbicides are, for example, as follows: acetamiprid, acrinathrin, aldicarb, amitraz, acinphos-methyl, cyfluthrin, carbaryl, cypermethrin, deltamethrin, endosulfan, ethoprophos, fenamiphos, fenthion, fipronil, imidacloprid, methamidophos, methiocarb, niclosamide, oxydemeton-methyl, prothiophos, silafluofen, thiacloprid, thiodicarb, tralomethrin, triazophos, trichlorfon, triflumuron, terbufos, fonofos, phorate, chlorpyriphos, carbofuran, tefluthrin.

The active ingredient combinations of the invention are suitable for control of a broad spectrum of weeds on uncultivated land, on pathways, on railway tracks, in industrial areas ("industrial weed control") or in plantation crops, such as temperate, subtropical and tropical climates or geographies. Examples of plantation crops are oil palms, nuts (e.g. almonds, hazelnuts, walnuts, macadamia), coconut, berries, rubber trees, citrus (e.g. oranges, lemons, mandarins),

bananas, pineapples, cotton, sugarcane, tea, coffee, cacao and the like. They are likewise suitable for use in pomiculture (e.g. pomaceous fruits such as apples, pears, cherries, mangoes and kiwis) and viticulture. The compositions can also be used for preparation for seeding ("burn-down", "no-till" or "zero-till" method) or for treatment after harvesting ("chemical fallow"). The possible uses of the active ingredient combinations also extend to weed control in tree crops, for example young Christmas tree crops or eucalyptus crops, in each case before planting or after planting (including "over-top" treatment).

The compositions can also be used to control unwanted plant growth in economically important crop plants such as wheat (hard and soft wheat), maize, soya, sugarbeet, sugarcane, cotton, rice, beans (for example, bush beans and broad beans), flax, barley, oats, rye, triticale, potato and millet/sorghum, pastureland and areas of grass/lawn and plantation crops. Plantation crops are, *inter alia,* pomaceous fruit (apple, pear, quince), *Ribes* species (blackberry, raspberry), citrus, *Prunus* species (cherries, nectarines, almonds), nuts (walnut, pecan nut, hazelnut, cashew, macadamia), mango, cacao, coffee, grapevines (for eating or for making wine), palms (such as oil palms, date palms, coconut palms), eucalyptus, kaki, persimmon, caoutchouc, pineapple, banana, avocado, lychee, forest crops (Eucalypteae, Piniaceae, Piceae, Meliaceae, etc.).

The active herbicidal ingredient combinations of the invention, in the respective use forms (= herbicidal products), have synergies with regard to herbicidal action and selectivity, and favourable action with regard to the spectrum of weeds. They have excellent herbicidal efficacy against a broad spectrum of economically important monocotyledonous and dicotyledonous annual harmful plants. The active ingredients also have good control over perennial harmful plants which are difficult to control and produce shoots from rhizomes, rootstocks or other perennial organs.

For application, the active ingredient combinations can be deployed onto the plants (e.g. harmful plants such as mono- or dicotyledonous weeds or unwanted crop plants), the seed (e.g. grains, seeds or vegetative propagation organs such as tubers or parts of shoots having buds), or the area in which the plants grow (e.g. the growing area).

The substances can be deployed prior to sowing (if appropriate also by incorporation into the soil), prior to emergence or after emergence. Preference is given to use by the early post-seeding pre-emergence method or by the post-emergence method in plantation crops against harmful plants that have not yet emerged or have already emerged. The application can also be integrated into weed management systems with divided repeated applications (sequentials).

Specific examples of some representatives of the mono- and dicotyledonous weed flora which can be controlled by the active ingredient combinations according to the invention are as follows, although the enumeration is not intended to impose a restriction to particular species.

Among the monocotyledonous weed species, for example, Aegilops, Agropyron, Agrostis, Alopecurus, Apera, Avena, Brachicaria, Bromus, Cynodon, Dactyloctenium, Digitaria, Echinochloa, Eleocharis, Eleusine, Eragrostis, Eriochloa, Festuca, Fimbristylis, Imperata, Ischaemum, Heteranthera, Imperata, Leptochloa, Lolium, Monochoria, Panicum, Paspalum, Phalaris, Phleum, Poa, Rottboellia, Sagittaria, Scirpus, Setaria, Sorghum, Sphenoclea and Cyperus species are covered by the annual group.

In the case of dicotyledonous weed species, the spectrum of action extends to species such as, for example, Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura, Desmodium, Emex, Erodium, Erysimum, Euphorbia, Galeopsis, Galinsoga, Galium, Geranium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

If the active ingredient combinations of the invention are applied to the soil surface before germination, either the emergence of the weed seedlings is prevented completely or the weeds grow until they have reached the cotyledon stage, but then stop growing and ultimately die completely after three to four weeks have passed.

If the active ingredients are applied post-emergence to the green parts of the plants, growth stops after the treatment, and the harmful plants remain at the growth stage at the time of application, or they die completely after a certain time, and so this eliminates competition by the weeds, which is harmful to the crop plants, very early and in a sustained manner.

The herbicidal products of the invention are notable for a rapid onset and long duration of herbicidal action. In general, the rainfastness of the active ingredients in the combinations of the invention is favourable. A particular advantage is that the effective dosages of compounds (A) and (B) that are used in the combinations can be adjusted to such a low level that their soil action is optimally low. Therefore, the use thereof in sensitive crops is not just enabled, but groundwater contamination is also virtually prevented. The inventive combination of active ingredients allows the required application rate of the active ingredients to be reduced considerably.

The combined use of herbicides (A) and (B) achieves performance properties extending beyond what was to be expected on account of the known properties of the individual herbicides for the combination thereof. For example, the herbicidal effects for a particular harmful plant species exceed the expected value as can be estimated by standard methods, for example according to Colby or other extrapolation methods.

A synergistic effect exists whenever the effect, the herbicidal effect here, of the active ingredient combination is greater than the sum total of the effects of the active ingredients applied individually. The expected activity for a given combination of two active ingredients can be calculated according to S.R. Colby ("Calculating Synergistic and Antagonistic Responses of Herbicide Combinations", Weeds 15 (1967), 20-22) (see below).

The synergistic effects therefore permit, for example, a reduction in the application rates of the individual active ingredients, a higher efficacy at the same application rate, the control of species of harmful plants which are as yet uncovered (gaps), elevated residual action, an extended period of efficacy, an elevated speed of action, an extension of the period of application and/or a reduction in the number of individual applications required and - as a result for the user - weed control systems which are more advantageous economically and ecologically.

Even though the combinations of the invention have excellent herbicidal activity with respect to monoand dicotyledonous weeds, many economically important crop plants, depending on the structure of the respective active ingredient combinations of the invention and the application rate thereof, are damaged only insignificantly, if at all. Economically important crops here are, for example, dicotyledonous crops from the genera of Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia, or monocotyledonous crops from the genera of Allium, Ananas, Asparagus, Avena, Hordeum, Oryza, Panicum, Saccharum, Secale, Sorghum, Triticale, Triticum and Zea.

In addition, the compositions of the invention in some cases have outstanding growth-regulating properties in crop plants. They intervene in the plants' own metabolism with regulatory effect, and can thus be used for the controlled influencing of plant constituents and to facilitate harvesting, for example by triggering desiccation and stunted growth. Furthermore, they are also suitable for the general control and inhibition of unwanted vegetative growth without killing the plants in the process. Inhibition of vegetative growth plays a major role for many mono- and dicotyledonous crops since this can reduce or completely prevent lodging.

Owing to their herbicidal and plant growth-regulatory properties, the compositions can be used to control harmful plants in known plant crops or in tolerant crop plants still to be developed, modified by conventional mutagenesis or modified by genetic engineering. In general, transgenic plants feature particular advantageous properties in addition to resistances to the compositions of the invention, for example resistances to plant diseases or the organisms that cause plant diseases such as certain insects, or microorganisms such as fungi, bacteria or viruses. Other particular properties relate, for example, to the harvested material with regard to quantity, quality, storability, composition and specific constituents. For instance, there are known transgenic plants with an elevated starch content or altered starch quality, or those with a different fatty acid composition in the harvested material. Other particular properties may be tolerance or resistance to abiotic stressors, for example heat, low temperatures, drought, salinity and ultraviolet radiation.

The active ingredient combinations of the invention can preferably be used as herbicides in crops of useful plants that are resistant, or have been made resistant by genetic engineering, to the phytotoxic effects of the herbicides.

Conventional ways of producing novel plants which have modified properties in comparison to existing plants consist, for example, in traditional cultivation methods and the generation of mutants. Alternatively, novel plants with modified properties can be generated with the aid of recombinant methods (see, for example, EP-A-0221044, EP-A-0131624). For example, there have been descriptions in several cases of:

- genetic modifications of crop plants for the purpose of modifying the starch synthesized in the plants (e.g. WO 92/11376, WO 92/14827, WO 91/19806),
- transgenic crop plants which exhibit resistances to other herbicides, for example to sulfonylureas (EP-A-0257993, US-A-5013659),
- transgenic crop plants with the ability to produce
  Bacillus thuringiensis toxins (Bt toxins), which make the plants resistant to particular pests (EP-A-0142924, EP-A-0193259),
- transgenic crop plants with a modified fatty acid composition (WO 91/13972),
- genetically modified crop plants with novel constituents or secondary metabolites, for example novel phytoalexins, which bring about an increased disease resistance (EPA 309862, EPA0464461),
- genetically modified plants having reduced photorespiration, which have higher yields and higher stress tolerance (EPA 0305398),
- transgenic crop plants which produce pharmaceutically or diagnostically important proteins ("molecular pharming"),
- transgenic crop plants which feature higher yields or better quality,
- transgenic crop plants which feature a combination, for example, of the abovementioned novel properties ("gene stacking").

Numerous molecular biology techniques which can be used to produce novel transgenic plants with modified properties are known in principle; see, for example, I. Potrykus and G. Spangenberg (eds.) Gene Transfer to Plants, Springer Lab Manual (1995), Springer Verlag Berlin, Heidelberg, or Christou, "Trends in Plant Science" 1 (1996) 423-431.

For such genetic manipulations, nucleic acid molecules which allow mutagenesis or sequence alteration by recombination of DNA sequences can be introduced into plasmids. With the aid of standard methods, it is possible, for example, to undertake base exchanges, remove parts of sequences or add natural or synthetic sequences. For the connection of the DNA fragments to one another, it is possible to add adapters or linkers to the fragments; see, for example, Sambrook et al., 1989, Molecular Cloning, A Laboratory Manual, 2nd ed., Cold Spring Harbor Laboratory Press, Cold Spring Harbor, NY; or Winnacker "Gene und Klone" [Genes and Clones], VCH Weinheim, 2nd edition, 1996.

For example, the generation of plant cells with a reduced activity of a gene product can be achieved by expressing at least one corresponding antisense RNA, a sense RNA for achieving a cosuppression effect, or by expressing at least one suitably constructed ribozyme which specifically cleaves transcripts of the abovementioned gene product.

To this end, it is firstly possible to use DNA molecules which encompass the entire coding sequence of a gene product inclusive of any flanking sequences which may be present, and also DNA molecules which only encompass portions of the coding sequence, in which case it is necessary for these portions to be long enough to have an antisense effect in the cells. It is also possible to use DNA sequences which have a high degree of homology to the coding sequences of a gene product but are not completely identical to them.

When expressing nucleic acid molecules in plants, the protein synthesized may be localized in any desired compartment of the plant cell. However, to achieve localization in a particular compartment, it is possible, for example, to join the coding region to DNA sequences which ensure localization in a particular compartment. Such sequences are known to those skilled in the art (see, for example, Braun et al., EMBO J. 11 (1992), 3219-3227; Wolter et al., Proc. Natl. Acad. Sci. USA 85 (1988), 846-850; Sonnewald et al., Plant J. 1 (1991), 95-106). The nucleic acid molecules can also be expressed in the organelles of the plant cells.

The transgenic plant cells can be regenerated by known techniques to give rise to entire plants. In principle, the transgenic plants may be plants of any desired plant species, i.e. not only monocotyledonous but also dicotyledonous plants. Obtainable in this way are transgenic plants having properties altered by overexpression, suppression or inhibition of homologous (= natural) genes or gene sequences or expression of heterologous (= foreign) genes or gene sequences. The active ingredient combinations of the invention can preferably be used in transgenic crops that are tolerant or have been rendered tolerant to the active ingredients used.

The active ingredient combinations of the invention can preferably also be used in transgenic crops that are resistant to protoporphyrinogen oxidase (PPO) inhibitors and which are further resistant (a) to one or more growth regulators, for example dicamba, or (b) to herbicides which inhibit essential plant enzymes, for example acetolactate synthases (ALS), EPSP synthases, glutamine synthases (GS), hydroxyphenylpyruvate dioxygenases (HPPD), or to herbicides from the group of the sulfonylureas, the glyphosates, glufosinates or benzoylisoxazoles and analogous active ingredients.

The invention therefore also provides a method of controlling unwanted plant growth, optionally in crops of useful plants, preferably on uncultivated land or in plantation crops, characterized in that one or more herbicides of type (A) is/are applied with one or more herbicides of type (B) to the harmful plants, parts of plants or plant seeds (seed) or to the growing area.

The invention also provides for the use of the novel combinations of compounds (A)+(B) for control of harmful plants, optionally in crops of useful plants, preferably on uncultivated land and plantation crops, but also for control of harmful plants before the sowing of the subsequent useful plant, such as, in particular, for preparation for seeding ("burn-down application").

The active ingredient combinations of the invention may either take the form of mixed formulations of the two components, if appropriate with further active ingredients, additives and/or customary formulation auxiliaries, which are then applied in a customary manner diluted with water or can be prepared as what are called tankmixes by joint dilution of the separately formulated or partially separately formulated components with water.

The compounds (A) and (B) or their combinations can be formulated in various ways according to which biological and/or physicochemical parameters are required. Examples of general formulation options are: wettable powders (WP), water-soluble powders (SP), emulsifiable concentrates (EC), water-soluble concentrates, aqueous solutions (SL), emulsions (EW), such as oil-in-water and water-in-oil emulsions, sprayable solutions or emulsions, dispersions based on oil or water, oil dispersions (OD), suspoemulsions, suspension concentrates (SC), oil-miscible solutions, capsule suspensions (CS), dusting products (DP), dressings, granules for soil application or scattering, granules (GR) in the form of microgranules, spray granules, absorption and adsorption granules, water-dispersible granules (WG), water-soluble granules (SG), ULV formulations, microcapsules or waxes.

The invention therefore also provides herbicidal and plant-growth-regulating compositions containing the active ingredient combinations of the invention.

The individual formulation types are known in principle and are described, for example, in: Winnacker-Küchler, "Chemische Technologie" [Chemical Technology], Volume 7, C. Hanser Verlag Munich, 4th ed. 1986; van Valkenburg, "Pesticide Formulations", Marcel Dekker, N.Y., 1973, K. Martens, "Spray Drying" Handbook", 3rd ed. 1979, G. Goodwin Ltd. London.

The necessary formulation auxiliaries such as inert materials, surfactants, solvents and further additives are likewise known and are described, for example, in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964, Schonfeldt, "Grenzflächenaktive Äthylenoxidaddukte" ["Interface-active Ethylene Oxide Adducts"], Wiss. Verlagsgesellschaft, Stuttgart 1976, Winnacker-Küchler, "Chemische Technologie", Volume 7, C. Hanser Verlag Munich, 4th Ed. 1986.

On the basis of these formulations, it is also possible to produce combinations with other pesticidally active substances, such as other herbicides, fungicides, insecticides or other pesticides (for example acaricides, nematicides, molluscicides, rodenticides, aphicides, avicides, larvicides, ovicides, bactericides, viricides etc.), and also with safeners, fertilizers and/or growth regulators, for example in the form of a finished formulation or as a tank mix.

Wettable powders are preparations which can be dispersed uniformly in water and, in addition to the active ingredient, apart from a diluent or inert substance, also comprise surfactants of the ionic and/or nonionic type (wetting agents, dispersants), for example polyoxyethylated alkylphenols, polyoxyethylated fatty alcohols, polyoxyethylated fatty amines, fatty alcohol polyglycol ether sulfates, alkanesulfonates, alkylbenzenesulfonates, sodium lignosulfonate, sodium 2,2'-dinaphthylmethane-6,6'-disulfonate, sodium dibutylnaphthalenesulfonate or else sodium oleoylmethyltaurate. To produce the wettable powders, the active herbicidal ingredients are finely ground, for example in customary apparatuses such as hammer mills, blower mills and air-jet mills, and simultaneously or subsequently mixed with the formulation auxiliaries.

Emulsifiable concentrates are produced by dissolving the active ingredient in an organic solvent, for example butanol, cyclohexanone, dimethylformamide, xylene, or else relatively high-boiling aromatics or hydrocarbons or mixtures of the organic solvents, with addition of one or more ionic and/or nonionic surfactants (emulsifiers). Examples of emulsifiers which may be used are: calcium alkylarylsulfonate salts, such as calcium dodecylbenzenesulfonate, or nonionic emulsifiers such as fatty acid polyglycol esters, alkylaryl polyglycol ethers, fatty alcohol polyglycol ethers, propylene oxide-ethylene oxide condensation products, alkyl polyethers, sorbitan esters, for example sorbitan fatty acid esters, or for example polyoxyethylene sorbitan fatty acid esters.

Dusting products are obtained by grinding the active ingredient with finely distributed solids, for example talc, natural clays, such as kaolin, bentonite and pyrophyllite, or diatomaceous earth. Suspension concentrates may be water- or oil-based. They may be produced, for example, by wetgrinding by means of commercial bead mills and optional addition of surfactants as already listed above, for example, for the other formulation types.

Emulsions, for example oil-in-water emulsions (EW), can be produced, for example, by means of stirrers, colloid mills and/or static mixers using aqueous organic solvents and optionally surfactants as already listed above, for example, for the other formulation types.

Granules can be produced either by spraying the active ingredient onto granular inert material capable of adsorption or by applying active ingredient concentrates to the surface of carrier substances, such as sand, kaolinites or granular inert material, by means of adhesives, for example polyvinyl alcohol, sodium polyacrylate or else mineral oils. Suitable active ingredients can also be granulated in the manner customary for the production of fertilizer granules - if desired as a mixture with fertilizers.

Water-dispersible granules are produced generally by processes such as spray-drying, fluidized bed granulation, pan granulation, mixing with high-speed mixers and extrusion without solid inert material.

The agrochemical preparations generally contain 0.1 to 99 per cent by weight, especially 0.2% to 95% by weight, of active ingredients of types (A) and/or (B), the following concentrations being customary, depending on the type of formulation:
In wettable powders, the active ingredient concentration is, for example, about 10% to 95% by weight, the remainder to 100% by weight consisting of customary formulation constituents. In the case of emulsifiable concentrates, the active ingredient concentration may be about 1% to 90% by weight, preferably 5 to 80 per cent by weight.

Formulations in the form of dusts usually contain 5% to 20% by weight of active ingredient; sprayable solutions contain about 0.05 to 80, preferably 2 to 50, per cent by weight (% by weight) of active ingredient.

In the case of granules such as dispersible granules, the active ingredient content depends partly on whether the active ingredient is in liquid or solid form and on which granulation auxiliaries and fillers are used. In general, the content in the water-dispersible granules is between 1% and 95% by weight, preferably between 10% and 80% by weight.

In addition, the active ingredient formulations mentioned optionally comprise the respectively customary adhesives, wetting agents, dispersants, emulsifiers, penetrants, preservatives, antifreeze agents and solvents, fillers, colorants and carriers, antifoams, evaporation inhibitors and pH- or viscosity-modifying agents.

For application, the formulations in the commercial form are diluted if appropriate in a customary manner, for example with water in the case of wettable powders, emulsifiable concentrates, dispersions and water-dispersible granules. Dust-type preparations, granules for soil application or broadcasting and sprayable solutions are not normally

diluted further with other inert substances prior to application.

The active ingredients can be deployed onto the plants, plant parts, plant seeds or the area under cultivation (soil), preferably on the green plants and plant parts, and optionally additionally onto the soil.

One possible use is the joint application of the active ingredients in the form of tankmixes, where the optimally formulated concentrated formulations of the individual active ingredients together are mixed in a tank with water, and the spray liquor obtained is deployed.

A joint herbicidal formulation of the inventive combination of active ingredients (A) and (B) has the advantage that it can be applied more easily since the quantities of the components are already set at the correct ratio to one another. Moreover, the auxiliaries in the formulation can be adjusted optimally to one another, whereas a tank mix of different formulations may result in unwanted combinations of auxiliaries.

A. General formulation examples

a) A dusting product is obtained by mixing 10 parts by weight of an active ingredient (A) or (B) or an active ingredient mixture (A) + (B) (and optionally further active ingredient components) and/or salts thereof and 90 parts by weight of talc as inert substance, and comminuting in a beater mill.

b) A wettable powder which is readily dispersible in water is obtained by mixing 25 parts by weight of an active ingredient/active ingredient mixture, 64 parts by weight of kaolin-containing quartz as inert substance, 10 parts by weight of potassium lignosulfonate and 1 part by weight of sodium oleoylmethyltaurate as wetting agent and dispersant and grinding the mixture in a pinned-disk mill.

c) A dispersion concentrate which is readily dispersible in water is obtained by mixing 20 parts by weight of an active ingredient/active ingredient mixture with 6 parts by weight of alkylphenol polyglycol ether (Triton® X 207), 3 parts by weight of isotridecanol polyglycol ether (8 EO) and 71 parts by weight of paraffinic mineral oil (boiling range for example approximately 255 to 277°C) and grinding the mixture in a friction ball mill to a fineness of below 5 microns.

d) An emulsifiable concentrate is obtained from 15 parts by weight of an active ingredient/active ingredient mixture, 75 parts by weight of cyclohexanone as solvent and 10 parts by weight of oxyethylated nonylphenol as emulsifier.

e) Water-dispersible granules are obtained by mixing

75 parts by weight of an active ingredient/active ingredient mixture,
10 parts by weight of calcium lignosulfonate,
5 parts by weight of sodium lauryl sulfate,
3 parts by weight of polyvinyl alcohol and
7 parts by weight of kaolin,

grinding the mixture in a pinned-disk mill, and granulating the powder in a fluidized bed by spray application of water as a granulating liquid.

f) Water-dispersible granules are also obtained by homogenizing and precomminuting, in a colloid mill,

25 parts by weight of an active ingredient/active ingredient mixture,
5 parts by weight of sodium 2,2'-dinaphthylmethane-6,6'-disulfonate,
2 parts by weight of sodium oleoylmethyltaurate,
1 part by weight of polyvinyl alcohol,
17 parts by weight of calcium carbonate and
50 parts by weight of water,

then grinding the mixture in a bead mill and atomizing and drying the resulting suspension in a spray tower by means of a one-phase nozzle.

B. Biological examples

On employment of the combinations of the invention, herbicidal effects on a harmful plant species that exceed

the formal sum total of the effects of the herbicides present when applied alone were frequently observed. Alternatively, in some cases, it was possible to observe that a smaller application rate for the herbicide combination is required in order to achieve the same effect for a harmful plant species compared to the individual preparations. Such increases in action or increases in effectiveness or reductions in application rate are a strong indication of a synergistic effect.

When the observed efficacies already exceed the formal sum total of the values of the tests with individual applications, they also exceed the expected value according to Colby, which is calculated using the formula below and is likewise regarded as an indication of synergism (cf. S. R. Colby; in Weeds 15 (1967) pp. 20 to 22):

$$E^C = A+B - (A \cdot B/100)$$

where:

A = efficacy of the active ingredient (A) in % at an application rate of a [g a.i./ha];
B = efficacy of the active ingredient(s) (B) [B1 and/or B2] in % at an application rate of b [g a.i./ha];
$E^C$ = expected value of the effect of the combination (A)+(B) in % at the combined application rate a+b [g a.i./ha].

The observed values ($E^A$) from the experiments, given suitable low dosages, show an effect of the combinations exceeding the expected values according to Colby ($E^C$) (Δ).

Post-emergence action against weeds

Seeds of mono- and dicotyledonous weeds were placed in sandy loam in pots, covered with soil and grown in a greenhouse under good growth conditions (temperature, air humidity, water supply). Two to three weeks after sowing, the test plants were treated at the two- to four-leaf stage with the compositions of the invention. The compositions of the invention, formulated as spray powders or as emulsion concentrates, were sprayed onto the green parts of the plant in various dosages with an application rate equivalent to 300 1/ha of water. After the test plants had been kept in the greenhouse under optimum growth conditions for 3 weeks, the activity of the preparations was rated visually in comparison to untreated controls.

Effects of the combinations of the invention that exceed the formal sum total of the effects in the case of individual application of the herbicides were frequently observed here.

## Claims

1. Composition comprising herbicidally active compounds (A) and (B) wherein

(A) represents one or more compounds of the general formula (I) or agrochemically acceptable salts thereof,

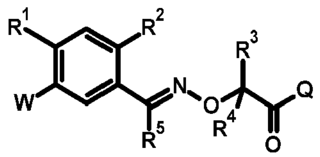

(I)

in which

W represents a group W-1 to W-3

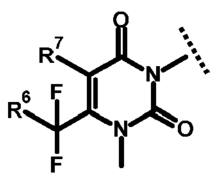

W-1

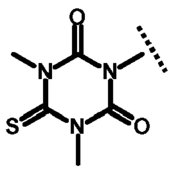

W-2

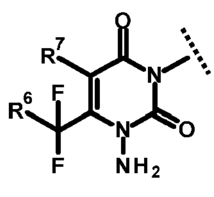

W-3

$R^1$ represents hydrogen, fluorine, chlorine, bromine, methoxy, ethoxy, prop-1-yloxy, prop-2-yloxy, but-1-yloxy, but-2-yloxy, 2-methylprop-1-yloxy, 1,1-dimethyleth-1-yloxy,
$R^2$ represents fluorine, chlorine, bromine, cyano, nitro, $C(O)NH_2$, $C(S)NH_2$, trifluoromethyl, difluoromethyl, pentafluoroethyl, ethynyl, propyn-1-yl, 1-butyn-1-yl, pentyn-1-yl, hexyn-1-yl,
$R^3$ and $R^4$ independently of each other represent hydrogen, ($C_1$-$C_8$)-alkyl, $R^{13}$O-($C_1$-$C_8$)-alkyl, ($C_3$-$C_8$)-cycloalkyl, ($C_2$-$C_8$)-alkenyl, aryl-($C_1$-$C_8$)-alkyl, heteroaryl-($C_1$-$C_8$)-alkyl, heterocyclyl-($C_1$-$C_8$)-alkyl, or
$R^3$ and $R^4$ together with the carbon atom to which they are bonded form a fully saturated or partly saturated 3- to 10-membered carbocyclic ring optionally having further substitution,
$R^5$ represents hydrogen, ($C_1$-$C_8$)-alkyl, ($C_1$-$C_8$)-haloalkyl, $R^{13}$O-($C_1$-$C_8$)-alkyl, ($C_2$-$C_8$)-alkenyl, aryl-($C_1$-$C_8$)-alkyl, heteroaryl-($C_1$-$C_8$)-alkyl, heterocyclyl-($C_1$-$C_8$)-alkyl, ($C_3$-$C_8$)-cycloalkyl, aryl, heteroaryl, heterocyclyl,
$R^6$ represents hydrogen, fluorine, chlorine, bromine, trifluoromethyl, difluoromethyl, methoxy, ethoxy, prop-1-yloxy, but-1-yloxy,
$R^7$ represents hydrogen, methyl,
Q represents hydroxy or a group Q-1, Q-2

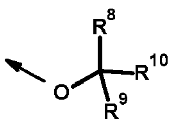
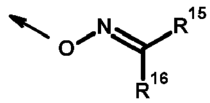

**Q-1** **Q-2**

$R^8$ represents hydrogen, ($C_1$-$C_8$)-alkyl, ($C_1$-$C_8$)-haloalkyl, aryl, aryl-($C_1$-$C_8$)-alkyl, heteroaryl, ($C_2$-$C_8$)-alkynyl, ($C_2$-$C_8$)-alkenyl, $C(O)R^{13}$, $C(O)OR^{13}$, ($C_1$-$C_8$)-alkoxy-($C_1$-$C_8$)-alkyl,
$R^9$ represents hydrogen, ($C_1$-$C_8$)-alkyl,
$R^{10}$ represents hydrogen, halogen, cyano, nitro, ($C_1C_8$)-alkyl, ($C_1C_8$)-haloalkyl, ($C_3C_8$)-cycloalkyl, ($C_3C_8$)-cycloalkyl-($C_1C_8$)-alkyl, ($C_3C_8$)-halocycloalkyl, ($C_3C_8$)-halo-cycloalkyl-($C_1C_8$)-alkyl, ($C_2C_8$)-alkenyl, ($C_2C_8$)-alkynyl, aryl, aryl-($C_1C_8$)-alkyl, heteroaryl, heteroaryl-($C_1C_8$)-alkyl, heterocyclyl, heterocyclyl-($C_1C_8$)-alkyl, $R^{11}R^{12}$N-($C_1C_8$)-alkyl, $R^{13}$O-($C_1C_8$)-alkyl, cyano-($C_1C_8$)-alkyl, ($C_1C_8$)-alkylcarbonyloxy-($C_1C_8$)-alkyl, ($C_3C_8$)-cycloalkylcarbonyloxy-($C_1C_8$)-alkyl, arylcarbonyloxy-($C_1C_8$)-alkyl, heteroarylcarbonyloxy-($C_1C_8$)-alkyl, heterocyclylcarbonyloxy-($C_1C_8$)-alkyl, $OR^{13}$, $NR^{11}R^{12}$, $SR^{14}$, $S(O)R^{14}$, $SO_2R^{14}$, $R^{14}$S-($C_1C_8$)-alkyl, $R^{14}$(O)S-($C_1C_8$)-alkyl, $R^{14}O_2$S-($C_1C_8$)-alkyl, tris-[($C_1C_8$)-alkyl]silyl-($C_1C_8$)-alkyl, bis-[($C_1C_8$)-alkyl](aryl)silyl($C_1C_8$)-alkyl, [($C_1C_8$)-alkyl]-bis-(aryl)silyl-($C_1C_8$)-alkyl, tris-[($C_1C_8$)-alkyl]silyl, bis-hydroxy-boryl-($C_1C_8$)-alkyl, bis-[($C_1C_8$)-alkoxy]boryl-($C_1C_8$)-alkyl, tetramethyl-1,3,2-Dioxaborolan-2-yl, tetramethyl-1,3,2-dioxaborolan-2-yl-($C_1C_8$)-alkyl, nitro-($C_1C_8$)-alkyl, $C(O)OR^{13}$, $C(O)R^{13}$, $C(O)NR^{11}R^{12}$, $R^{13}$O(O)C-($C_1C_8$)-alkyl, $R^{11}R^{12}$N(O)C-($C_1C_8$)-alkyl, bis-($C_1C_8$)-alkoxy-($C_1C_8$)-alkyl, or
$R^8$ and $R^{10}$ together with the carbon atom to which they are bonded form a fully saturated or partly saturated 3- to 10-membered monocyclic or bicyclic ring optionally interrupted by heteroatoms and optionally having further substitution,
$R^{11}$ and $R^{12}$ independently of each other represent hydrogen, ($C_1$-$C_8$)-alkyl, ($C_2$-$C_8$)-alkenyl, ($C_2$-$C_8$)-alkynyl, ($C_1$-$C_8$)-cyanoalkyl, ($C_1$-$C_{10}$)-haloalkyl, ($C_2$-$C_8$)-haloalkenyl, ($C_3$-$C_8$)-haloalkynyl, ($C_3$-$C_{10}$)-cycloalkyl, ($C_3$-$C_{10}$)-halocycloalkyl, ($C_4$-$C_{10}$)-cycloalkenyl, ($C_4$-$C_{10}$)-halocycloalkenyl, ($C_1$-$C_8$)-alkoxy-($C_1$-$C_8$)-alkyl, ($C_1$-$C_8$)-haloalkoxy-($C_1$-$C_8$)-alkyl, ($C_1$-$C_8$)-alkylthio-($C_1$-$C_8$)-alkyl, ($C_1$-$C_8$)-haloalkylthio-($C_1$-$C_8$)-alkyl, ($C_1$-$C_8$)-alkoxy-($C_1$-$C_8$)-haloalkyl, aryl, aryl-($C_1$-$C_8$)-alkyl, heteroaryl, heteroaryl-($C_1$-$C_8$)-alkyl, ($C_3$-$C_8$)-cycloalkyl-($C_1$-$C_8$)-alkyl, ($C_4$-$C_{10}$)-cycloalkenyl-($C_1$-$C_8$)-alkyl, $C(O)R^{13}$, $SO_2R^{14}$, heterocyclyl, ($C_1$-$C_8$)-alkoxycarbonyl, bis-[($C_1$-$C_8$)-alkyl]aminocarbonyl-($C_1$-$C_8$)-alkyl, ($C_1$-$C_8$)-alkyl-aminocarbonyl-($C_1$-$C_8$)-alkyl, aryl-($C_1$-$C_8$)-alkyl-aminocarbonyl-($C_1$-$C_8$)-alkyl, aryl-($C_1$-$C_8$)-alkoxycarbonyl, heteroaryl-($C_1$-$C_8$)-alkoxycarbonyl, ($C_2$-$C_8$)-alkenyloxycarbonyl, ($C_2$-$C_8$)-alkynyloxycarbonyl, heterocyclyl-($C_1$-$C_8$)-alkyl, or
$R^{11}$ and $R^{12}$ together with the nitrogen atom to which they are bonded form a fully saturated or partly saturated 3- to 10-membered monocyclic or bicyclic ring optionally interrupted by heteroatoms and optionally having further substitution,
$R^{13}$ represents hydrogen, ($C_1$-$C_8$)-alkyl, ($C_2$-$C_8$)-alkenyl, ($C_2$-$C_8$)-alkynyl, ($C_1$-$C_8$)-cyanoalkyl, ($C_1$-$C_{10}$)-haloalkyl, ($C_2$-$C_8$)-haloalkenyl, ($C_3$-$C_8$)-haloalkynyl, ($C_3$-$C_{10}$)-cycloalkyl, ($C_3$-$C_{10}$)-halocycloalkyl, ($C_4$-$C_{10}$)-cycloalkenyl, ($C_4$-$C_{10}$)-halocycloalkenyl, ($C_1$-$C_8$)-alkoxy-($C_1$-$C_8$)-alkyl, ($C_1$-$C_8$)-haloalkoxy-($C_1$-$C_8$)-alkyl, ($C_1$-$C_8$)-alkoxy-($C_1$-$C_8$)-haloalkyl, ($C_1$-$C_8$)-alkoxy-($C_1$-$C_8$)-alkoxy-($C_1$-$C_8$)-alkyl, ($C_1$-$C_8$)-alkoxy-($C_1$-$C_8$)-alkoxy-($C_1$-$C_8$)-alkoxy-($C_1$-$C_8$)-alkyl, ($C_1$-$C_8$)-alkoxy-($C_1$-$C_8$)-alkoxy-($C_1$-$C_8$)-alkoxy-($C_1$-$C_8$)-alkoxy-($C_1$-$C_8$)-alkyl, aryl, aryl-($C_1$-$C_8$)-alkyl, ar-

yl-($C_1$-$C_8$)-alkoxy-($C_1$-$C_8$)-alkyl, heteroaryl, heteroaryl-($C_1$-$C_8$)-alkyl, ($C_3$-$C_8$)-cycloalkyl-($C_1$-$C_8$)-alkyl, ($C_4$-$C_{10}$)-cycloalkenyl-($C_1$-$C_8$)-alkyl, bis-[($C_1$-$C_8$)-alkyl]aminocarbonyl-($C_1$-$C_8$)-alkyl, ($C_1$-$C_8$)-alkyl-aminocarbonyl-($C_1$-$C_8$)-alkyl, aryl-($C_1$-$C_8$)-alkyl-aminocarbonyl-($C_1$-$C_8$)-alkyl, bis-[($C_1$-$C_8$)-alkyl]amino-($C_2$-$C_6$)-alkyl, ($C_1$-$C_8$)-alkyl-amino-($C_2$-$C_6$)-alkyl, aryl-($C_1$-$C_8$)-alkyl-amino-($C_2$-$C_6$)-alkyl, $R^{14}S$-($C_1$-$C_8$)-alkyl, $R^{14}(O)S$-($C_1$-$C_8$)-alkyl, $R^{14}O_2S$-($C_1$-$C_8$)-alkyl, hydroxycarbonyl-($C_1$-$C_8$)-alkyl, heterocyclyl, heterocyclyl-($C_1$-$C_8$)-alkyl, tris-[($C_1$-$C_8$)-alkyl]silyl-($C_1$-$C_8$)-alkyl, bis-[($C_1$-$C_8$)-alkyl](aryl)silyl($C_1$-$C_8$)-alkyl, [($C_1$-$C_8$)-Alkyl]-bis-(aryl)silyl-($C_1$-$C_8$)-alkyl, ($C_1$-$C_8$)-alkylcarbonyloxy-($C_1$-$C_8$)-alkyl, ($C_3$-$C_8$)-cycloalkylcarbonyloxy-($C_1$-$C_8$)-alkyl, arylcarbonyloxy-($C_1$-$C_8$)-alkyl, heteroarylcarbonyloxy-($C_1$-$C_8$)-alkyl, heterocyclylcarbonyloxy-($C_1$-$C_8$)-alkyl, aryloxy-($C_1$-$C_8$)-alkyl, heteroaryloxy-($C_1$-$C_8$)-alkyl, ($C_1$-$C_8$)-alkoxycarbonyl steht,

$R^{14}$ represents hydrogen, ($C_1$-$C_8$)-alkyl, ($C_2$-$C_8$)-alkenyl, ($C_2$-$C_8$)-alkynyl, ($C_1$-$C_8$)-cyanoalkyl, ($C_1$-$C_{10}$)-haloalkyl, ($C_2$-$C_8$)-haloalkenyl, ($C_3$-$C_8$)-haloalkynyl, ($C_3$-$C_{10}$)-cycloalkyl, ($C_3$-$C_{10}$)-halocycloalkyl, ($C_4$-$C_{10}$)-cycloalkenyl, ($C_4$-$C_{10}$)-halocycloalkenyl, ($C_1$-$C_8$)-alkoxy-($C_1$-$C_8$)-alkyl, ($C_1$-$C_8$)-alkoxy-($C_1$-$C_8$)-haloalkyl, aryl, aryl-($C_1$-$C_8$)-alkyl, heteroaryl, heteroaryl-($C_1$-$C_8$)-alkyl, heterocyclyl-($C_1$-$C_8$)-alkyl, ($C_3$-$C_8$)-cycloalkyl-($C_1$-$C_8$)-alkyl, ($C_4$-$C_{10}$)-cycloalkenyl-($C_1$-$C_8$)-alkyl, bis-[($C_1$-$C_8$)-alkyl]amino, ($C_1$-$C_8$)-alkylamino, aryl-($C_1$-$C_8$)-amino, aryl-($C_1$-$C_6$)-alkylamino, aryl-[($C_1$-$C_8$)-alkyl]amino; ($C_3$-$C_8$)-cycloalkylamino, ($C_3$-$C_8$)-cycloalkyl-[($C_1$-$C_8$)-alkyl]amino; N-azetidinyl, N-pyrrolidinyl, N-piperidinyl. N-morpholinyl, and

$R^{15}$ and $R^{16}$ independently of each other represent ($C_1$-$C_8$)-alkyl, ($C_3$-$C_8$)-cycloalkyl, aryl, heteroaryl, heterocyclyl.

and

(B) represents at least one herbicide selected from flumioxazin and pyraflufen-ethyl.

**2.** Composition according to Claim 1, where the compound (A) of the general formula (I) is defined as follows:

W represents a group W-1 to W-3

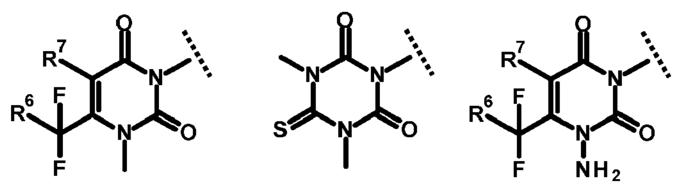

W-1 W-2 W-3

$R^1$ represents fluorine,
$R^2$ represents chlorine, bromine or cyano,
$R^3$ and $R^4$ independently of each other represent hydrogen, methyl, ethyl, or
$R^3$ and $R^4$ together with the carbon atom to which they are bonded form a fully saturated or partly saturated 3- to 6-membered carbocyclic ring optionally having further substitution,
$R^5$ represents hydrogen, methyl, ethyl, prop-1-yl,
$R^6$ represents fluorine,
$R^7$ represents hydrogen,
Q represents a group Q-1 bis Q-500 as outlined below

| | | | | |
|---|---|---|---|---|
| 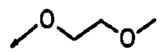 | 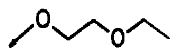 | 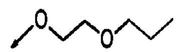 | 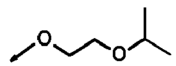 | 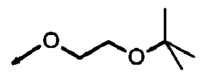 |
| Q-1 | Q-2 | Q-3 | Q-4 | Q-5 |
| | | | | |
| 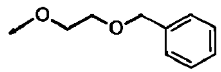 | 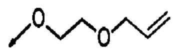 | 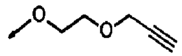 | 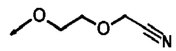 | 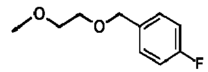 |
| Q-6 | Q-7 | Q-8 | Q-9 | Q-10 |
| | | | | |
| 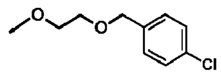 | 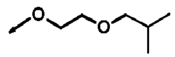 | 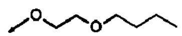 | 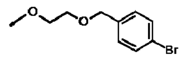 | 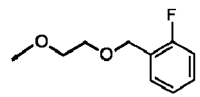 |
| Q-11 | Q-12 | Q-13 | Q-14 | Q-15 |
| | | | | |
| 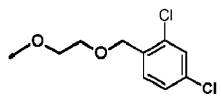 | 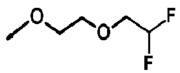 | 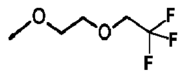 | 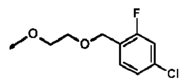 | 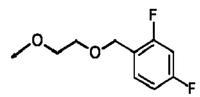 |
| Q-16 | Q-17 | Q-18 | Q-19 | Q-20 |
| | | | | |
| 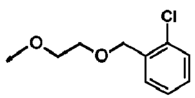 | 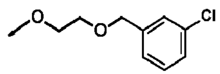 | 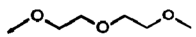 | 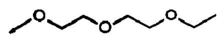 | 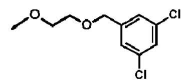 |
| Q-21 | Q-22 | Q-23 | Q-24 | Q-25 |
| | | | | |
| 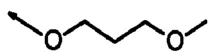 | 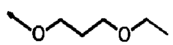 | 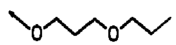 | 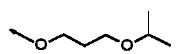 | 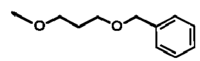 |
| Q-26 | Q-27 | Q-28 | Q-29 | Q-30 |
| | | | | |

(continued)

| | | | | |
|---|---|---|---|---|
| 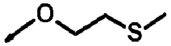 | 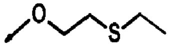 | 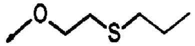 | 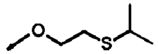 | 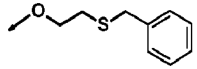 |
| Q-31 | Q-32 | Q-33 | Q-34 | Q-35 |
| | | | | |
| 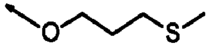 | 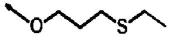 | 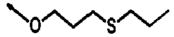 | 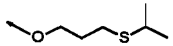 | 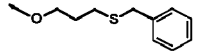 |
| Q-36 | Q-37 | Q-38 | Q-39 | Q-40 |
| | | | | |
| 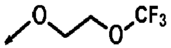 | 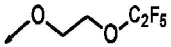 | 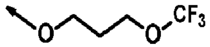 | 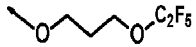 | 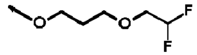 |
| Q-41 | Q-42 | Q-43 | Q-44 | Q-45 |
| 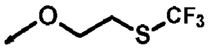 | 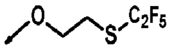 | 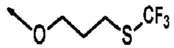 | 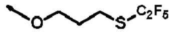 | 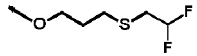 |
| Q-46 | Q-47 | Q-48 | Q-49 | Q-50 |
| | | | | |
| 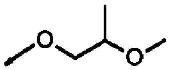 | 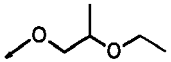 | 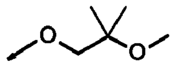 | 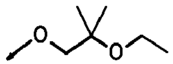 | 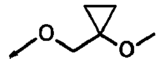 |
| Q-51 | Q-52 | Q-53 | Q-54 | Q-55 |
| | | | | |
| 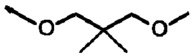 | 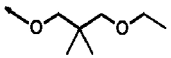 | 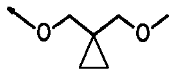 | 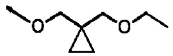 | 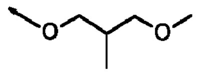 |
| Q-56 | Q-57 | Q-58 | Q-59 | Q-60 |
| | | | | |
| 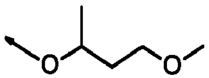 | 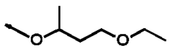 | 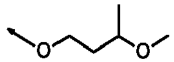 | 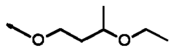 | 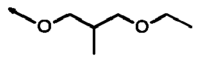 |

(continued)

| | | | | |
|---|---|---|---|---|
| Q-61 | Q-62 | Q-63 | Q-64 | Q-65 |
| | | | | |
| 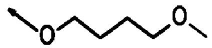 | 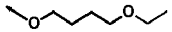 | 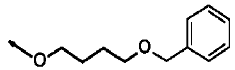 | 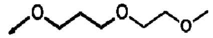 | 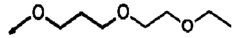 |
| Q-66 | Q-67 | Q-68 | Q-69 | Q-70 |
| | | | | |
| 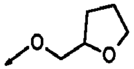 | 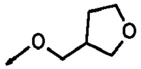 | 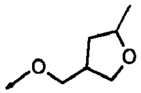 | 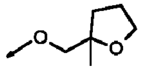 | 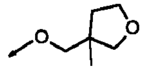 |
| Q-71 | Q-72 | Q-73 | Q-74 | Q-75 |
| | | | | |
| 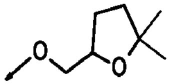 | 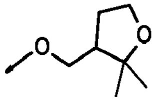 | 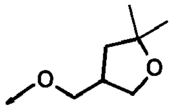 | 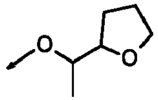 | 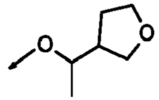 |
| Q-76 | Q-77 | Q-78 | Q-79 | Q-80 |
| | | | | |
| 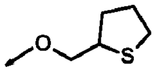 | 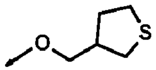 | 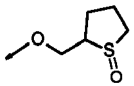 | 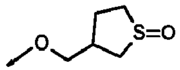 | 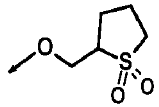 |
| Q-81 | Q-82 | Q-83 | Q-84 | Q-85 |
| 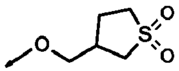 | 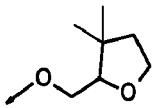 | 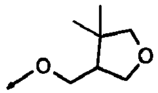 | 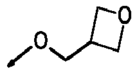 | 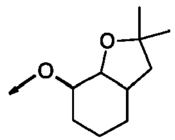 |
| Q-86 | Q-87 | Q-88 | Q-89 | Q-90 |
| | | | | |

(continued)

| | | | | |
|---|---|---|---|---|
| 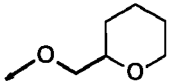 | 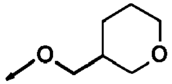 | 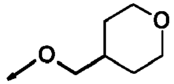 | 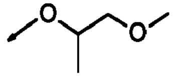 | 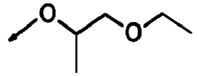 |
| Q-91 | Q-92 | Q-93 | Q-94 | Q-95 |
| | | | | |
| 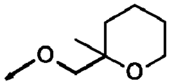 | 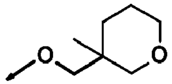 | 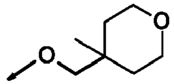 | 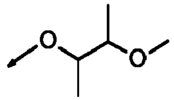 | 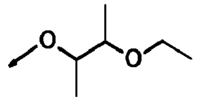 |
| Q-96 | Q-97 | Q-98 | Q-99 | Q-100 |
| | | | | |
| 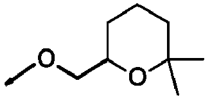 | 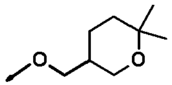 | 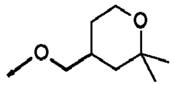 | 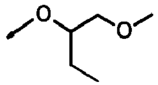 | 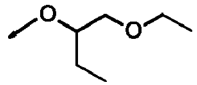 |
| Q-101 | Q-102 | Q-103 | Q-104 | Q-105 |
| | | | | |
| 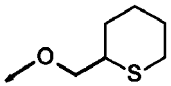 | 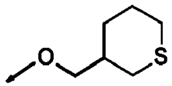 | 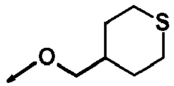 | 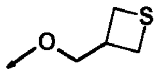 | 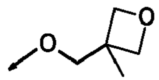 |
| Q-106 | Q-107 | Q-108 | Q-109 | Q-110 |
| | | | | |
| 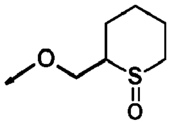 | 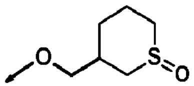 | 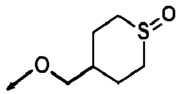 | 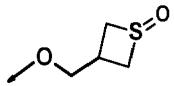 | 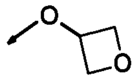 |
| Q-111 | Q-112 | Q-113 | Q-114 | Q-115 |
| | | | | |

(continued)

| | | | | |
|---|---|---|---|---|
| 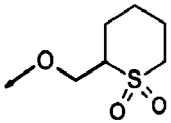 | 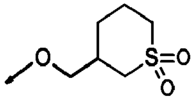 | 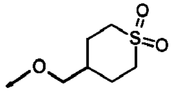 | 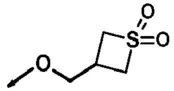 | 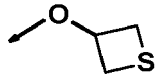 |
| Q-116 | Q-117 | Q-118 | Q-119 | Q-120 |
| 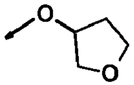 | 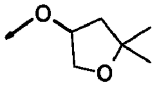 | 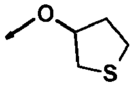 | 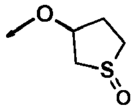 | 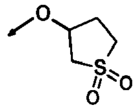 |
| Q-121 | Q-122 | Q-123 | Q-124 | Q-125 |
| | | | | |
| 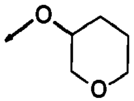 | 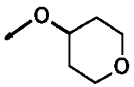 | 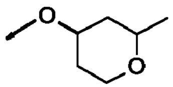 | 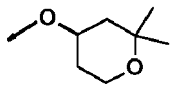 | 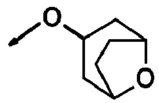 |
| Q-126 | Q-127 | Q-128 | Q-129 | Q-130 |
| | | | | |
| 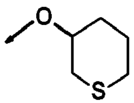 | 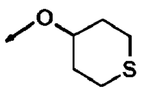 | 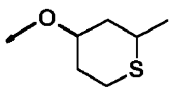 | 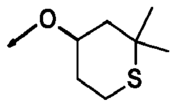 | 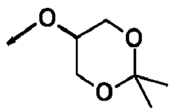 |
| Q-131 | Q-132 | Q-133 | Q-134 | Q-135 |
| | | | | |
| 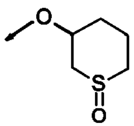 | 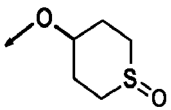 | 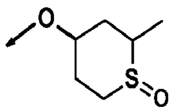 | 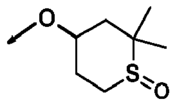 | 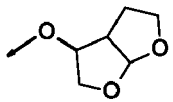 |
| Q-136 | Q-137 | Q-138 | Q-139 | Q-140 |
| | | | | |

(continued)

| | | | | |
|---|---|---|---|---|
| 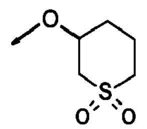 | 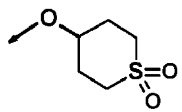 | 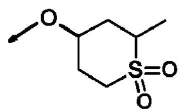 | 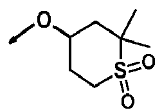 | 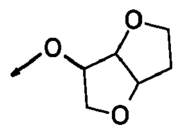 |
| Q-141 | Q-142 | Q-143 | Q-144 | Q-145 |
| 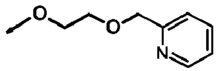 | 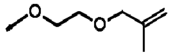 | 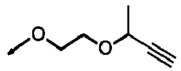 | 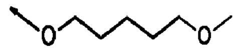 | 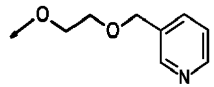 |
| Q-146 | Q-147 | Q-148 | Q-149 | Q-150 |
| 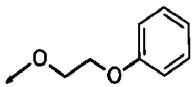 | 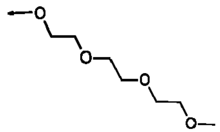 | 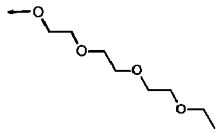 | 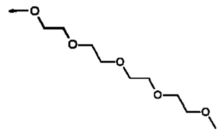 | 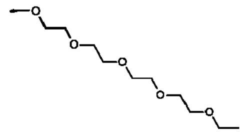 |
| Q-151 | Q-152 | Q-153 | Q-154 | Q-155 |
| 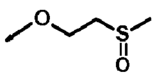 | 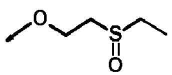 | 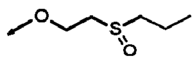 | 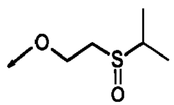 | 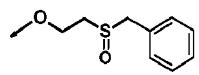 |
| Q-156 | Q-157 | Q-158 | Q-159 | Q-160 |
| 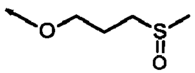 | 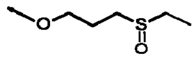 | 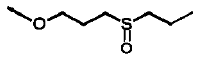 | 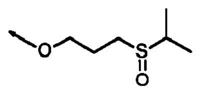 | 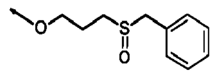 |
| Q-161 | Q-162 | Q-163 | Q-164 | Q-165 |
| 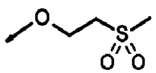 | 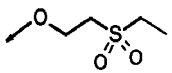 | 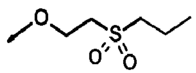 | 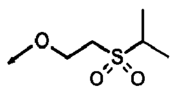 | 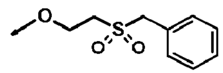 |

(continued)

| | | | | |
|---|---|---|---|---|
| Q-166 | Q-167 | Q-168 | Q-169 | Q-170 |
| | | | | |
| 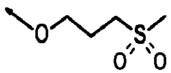 | 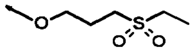 | 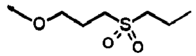 | 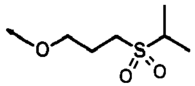 | 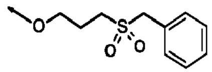 |
| Q-171 | Q-172 | Q-173 | Q-174 | Q-175 |
| | | | | |
| 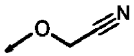 | 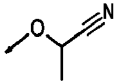 | 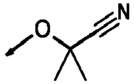 | 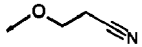 | 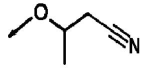 |
| Q-176 | Q-177 | Q-178 | Q-179 | Q-180 |
| | | | | |
| 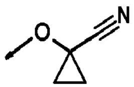 | 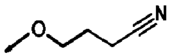 | 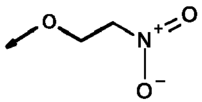 | 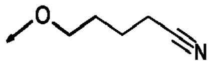 | 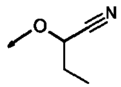 |
| Q-181 | Q-182 | Q-183 | Q-184 | Q-185 |
| | | | | |
| 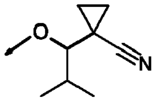 | 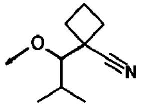 | 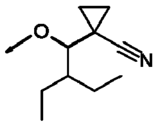 | 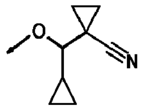 | 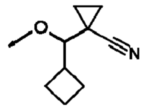 |
| Q-186 | Q-187 | Q-188 | Q-189 | Q-190 |
| | | | | |
| 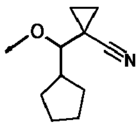 | 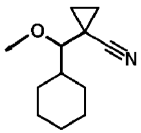 | 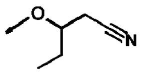 | 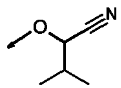 | 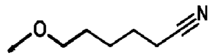 |
| Q-191 | Q-192 | Q-193 | Q-194 | Q-195 |

(continued)

| | | | | |
|---|---|---|---|---|
| 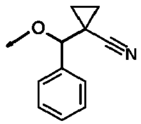 | 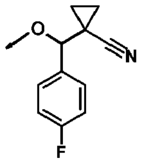 | 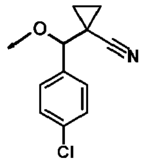 | 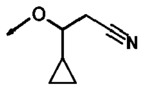 | 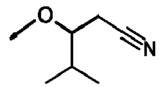 |
| Q-196 | Q-197 | Q-198 | Q-199 | Q-200 |
| | | | | |
| 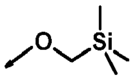 | 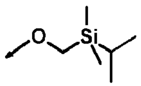 | 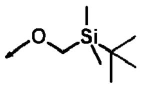 | 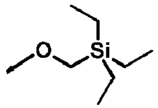 | 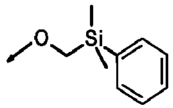 |
| Q-201 | Q-202 | Q-203 | Q-204 | Q-205 |
| | | | | |
| 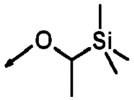 | 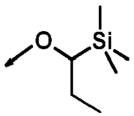 | 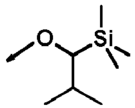 | 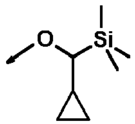 | 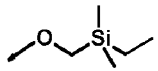 |
| Q-206 | Q-207 | Q-208 | Q-209 | Q-210 |
| | | | | |
| 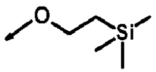 | 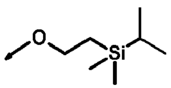 | 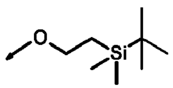 | 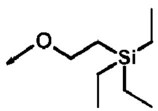 | 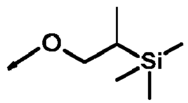 |
| Q-211 | Q-212 | Q-213 | Q-214 | Q-215 |
| | | | | |
| 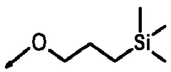 | 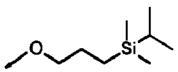 | 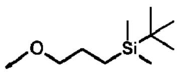 | 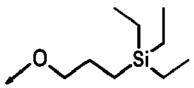 | 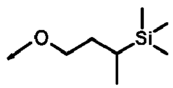 |
| Q-216 | Q-217 | Q-218 | Q-219 | Q-220 |

(continued)

| | | | | |
|---|---|---|---|---|
| 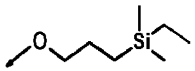 | 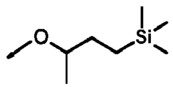 | 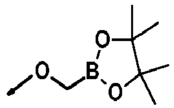 | 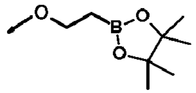 | 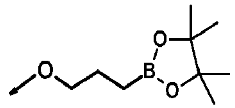 |
| Q-221 | Q-222 | Q-223 | Q-224 | Q-225 |
| | | | | |
| 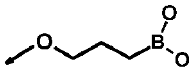 | 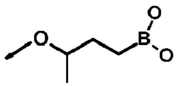 | 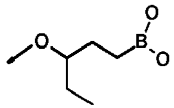 | 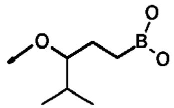 | 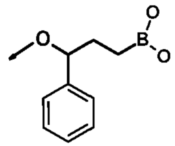 |
| Q-226 | Q-227 | Q-228 | Q-229 | Q-230 |
| | | | | |
| 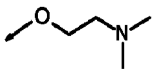 | 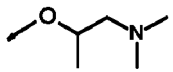 | 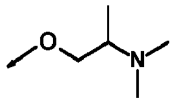 | 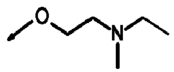 | 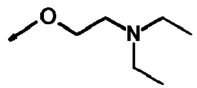 |
| Q-231 | Q-232 | Q-233 | Q-234 | Q-235 |
| 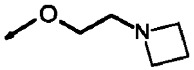 | 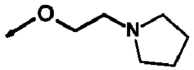 | 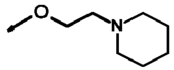 | 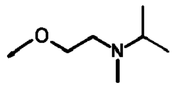 | 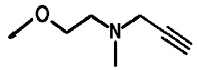 |
| Q-236 | Q-237 | Q-238 | Q-239 | Q-240 |
| | | | | |
| 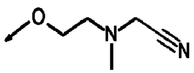 | 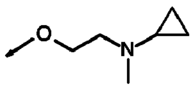 | 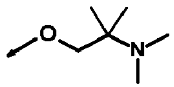 | 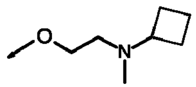 | 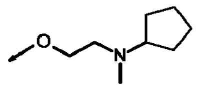 |
| Q-241 | Q-242 | Q-243 | Q-244 | Q-245 |
| | | | | |

(continued)

| | | | | |
|---|---|---|---|---|
| 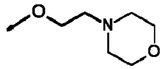 | 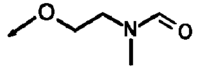 | 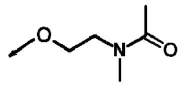 | 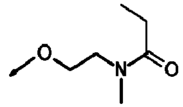 | 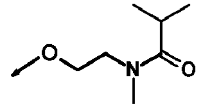 |
| Q-246 | Q-247 | Q-248 | Q-249 | Q-250 |
| | | | | |
| 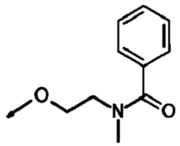 | 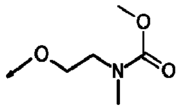 | 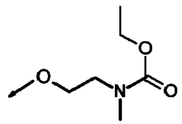 | 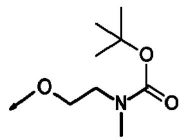 | 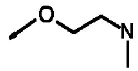 |
| Q-251 | Q-252 | Q-253 | Q-254 | Q-255 |
| | | | | |
| 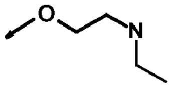 | 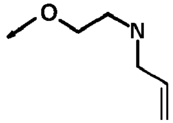 | 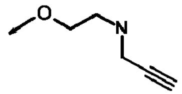 | 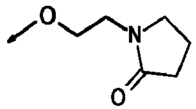 | 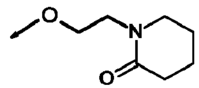 |
| Q-256 | Q-257 | Q-258 | Q-259 | Q-260 |
| | | | | |
| 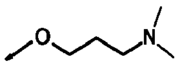 | 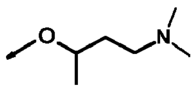 | 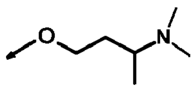 | 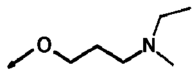 | 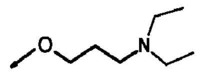 |
| Q-261 | Q-262 | Q-263 | Q-264 | Q-265 |
| | | | | |
| 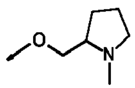 | 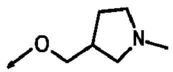 | 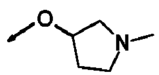 | 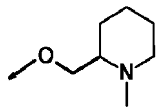 | 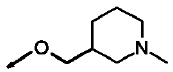 |
| Q-266 | Q-267 | Q-268 | Q-269 | Q-270 |
| | | | | |

(continued)

| | | | | |
|---|---|---|---|---|
| 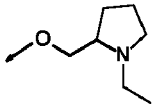 | 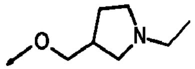 | 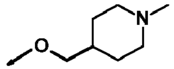 | 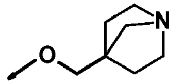 | 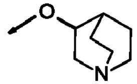 |
| Q-271 | Q-272 | Q-273 | Q-274 | Q-275 |
| | | | | |
| 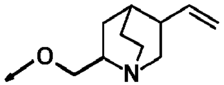 | 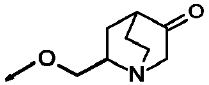 | 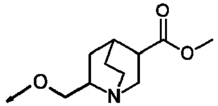 | 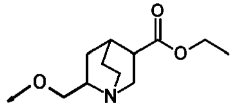 | 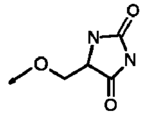 |
| Q-276 | Q-277 | Q-278 | Q-279 | Q-280 |
| | | | | |
| 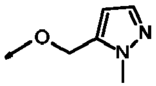 | 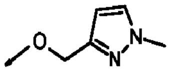 | 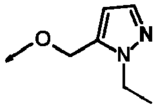 | 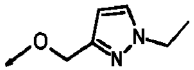 | 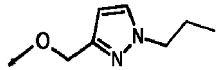 |
| Q-281 | Q-282 | Q-283 | Q-284 | Q-285 |
| | | | | |
| 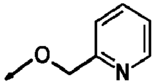 | 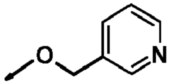 | 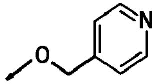 | 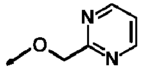 | 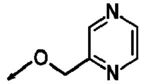 |
| Q-286 | Q-287 | Q-288 | Q-289 | Q-290 |
| | | | | |
| 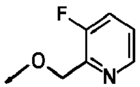 | 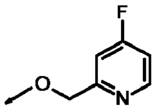 | 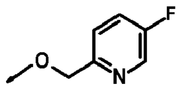 | 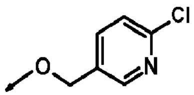 | 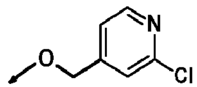 |
| Q-291 | Q-292 | Q-293 | Q-294 | Q-295 |
| | | | | |

(continued)

| | | | | |
|---|---|---|---|---|
| 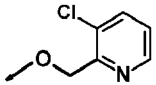 | 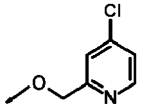 | 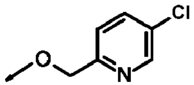 | 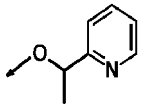 | 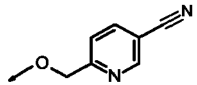 |
| Q-296 | Q-297 | Q-298 | Q-299 | Q-300 |
| | | | | |
| 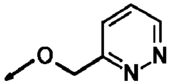 | 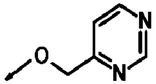 | 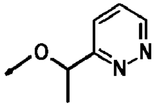 | 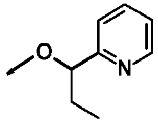 | 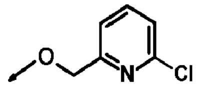 |
| Q-301 | Q-302 | Q-303 | Q-304 | Q-305 |
| | | | | |
| 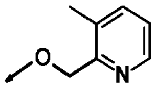 | 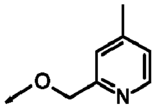 | 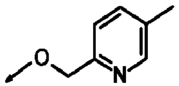 | 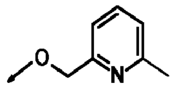 | 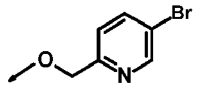 |
| Q-306 | Q-307 | Q-308 | Q-309 | Q-310 |
| 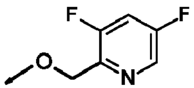 | 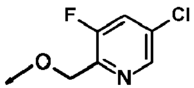 | 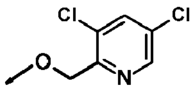 | 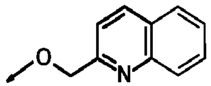 | 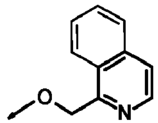 |
| Q-311 | Q-312 | Q-313 | Q-314 | Q-315 |
| | | | | |
| 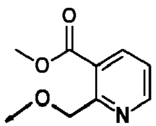 | 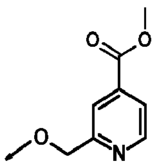 | 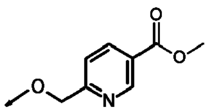 | 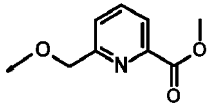 | 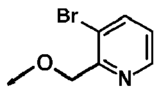 |
| Q-316 | Q-317 | Q-318 | Q-319 | Q-320 |
| | | | | |

(continued)

| | | | | |
|---|---|---|---|---|
| 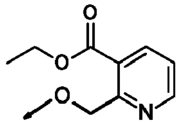 | 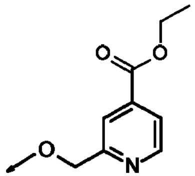 | 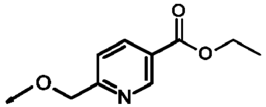 | 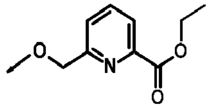 | 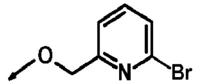 |
| Q-321 | Q-322 | Q-323 | Q-324 | Q-325 |
| | | | | |
| 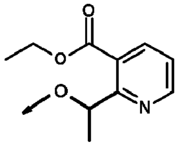 | 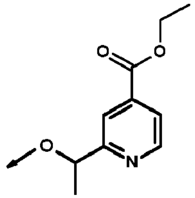 | 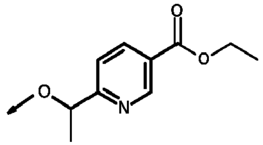 | 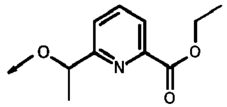 | 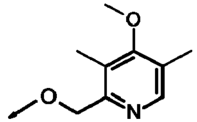 |
| Q-326 | Q-327 | Q-328 | Q-329 | Q-330 |
| | | | | |
| 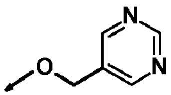 | 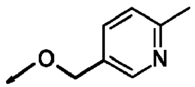 | 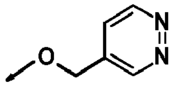 | 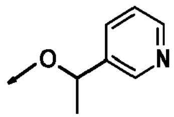 | 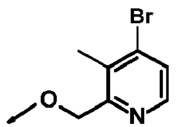 |
| Q-331 | Q-332 | Q-333 | Q-334 | Q-335 |
| | | | | |
| 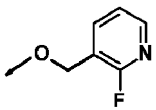 | 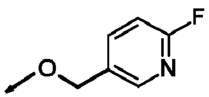 | 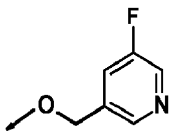 | 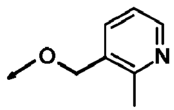 | 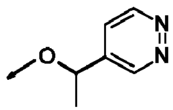 |
| Q-336 | Q-337 | Q-338 | Q-339 | Q-340 |

(continued)

| | | | | |
|---|---|---|---|---|
| 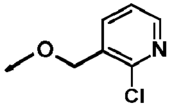 | 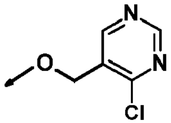 | 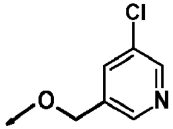 | 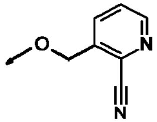 | 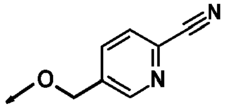 |
| Q-341 | Q-342 | Q-343 | Q-344 | Q-345 |
| 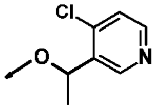 | 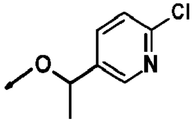 | 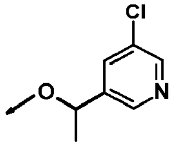 | 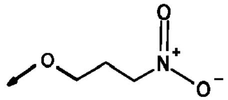 | 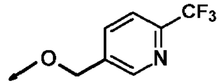 |
| Q-346 | Q-347 | Q-348 | Q-349 | Q-350 |
| | | | | |
| 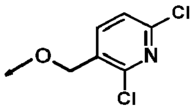 | 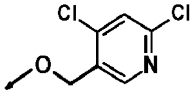 | 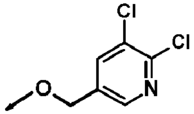 | 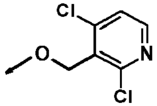 | 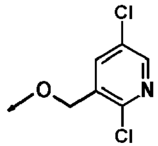 |
| Q-351 | Q-352 | Q-353 | Q-354 | Q-355 |
| | | | | |
| 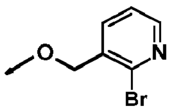 | 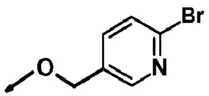 | 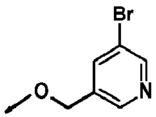 | 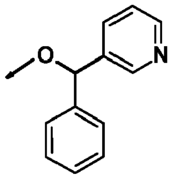 | 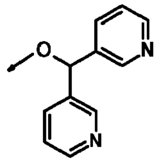 |
| Q-356 | Q-357 | Q-358 | Q-359 | Q-360 |
| | | | | |

(continued)

| | | | | |
|---|---|---|---|---|
| 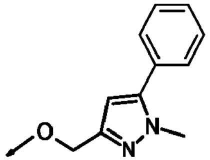 | 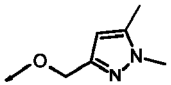 | 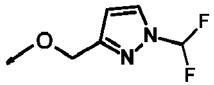 | 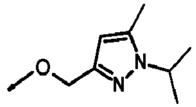 | 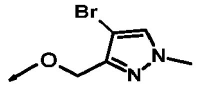 |
| Q-361 | Q-362 | Q-363 | Q-364 | Q-365 |
| | | | | |
| 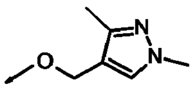 | 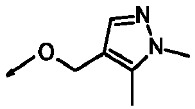 | 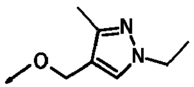 | 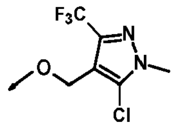 | 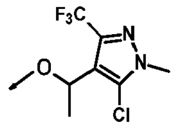 |
| Q-366 | Q-367 | Q-368 | Q-369 | Q-370 |
| | | | | |
| 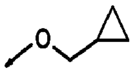 | 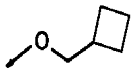 | 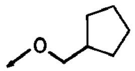 | 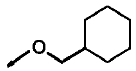 | 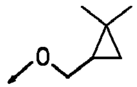 |
| Q-371 | Q-372 | Q-373 | Q-374 | Q-375 |
| 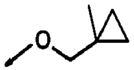 | 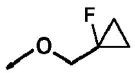 | 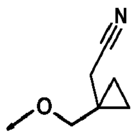 | 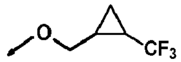 | 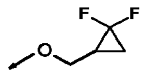 |
| Q-376 | Q-377 | Q-378 | Q-379 | Q-380 |
| | | | | |
| 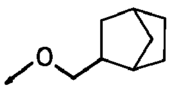 | 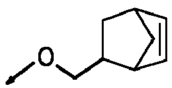 | 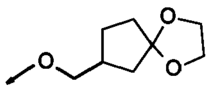 | 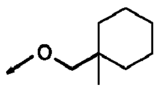 | 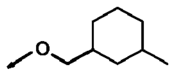 |
| Q-381 | Q-382 | Q-383 | Q-384 | Q-385 |
| | | | | |

(continued)

| | | | | |
|---|---|---|---|---|
| 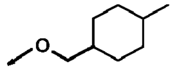 | 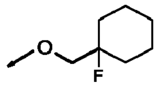 | 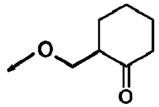 | 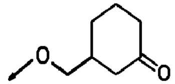 | 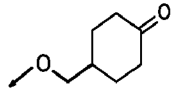 |
| Q-386 | Q-387 | Q-388 | Q-389 | Q-390 |
| | | | | |
| 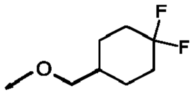 | 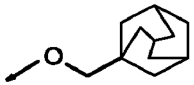 | 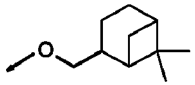 | 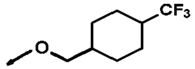 | 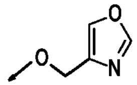 |
| Q-391 | Q-392 | Q-393 | Q-394 | Q-395 |
| | | | | |
| 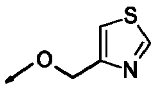 | 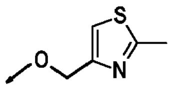 | 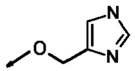 | 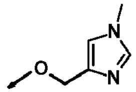 | 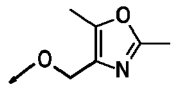 |
| Q-396 | Q-397 | Q-398 | Q-399 | Q-400 |
| | | | | |
| 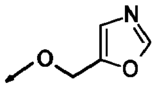 | 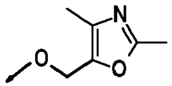 | 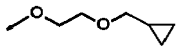 | 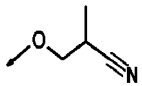 | 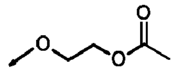 |
| Q-401 | Q-402 | Q-403 | Q-404 | Q-405 |
| | | | | |
| 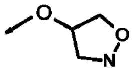 | 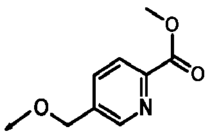 | 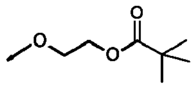 | 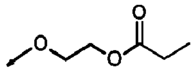 | 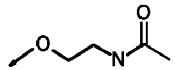 |
| Q-406 | Q-407 | Q-408 | Q-409 | Q-410 |
| | | | | |

(continued)

| | | | | |
|---|---|---|---|---|
| 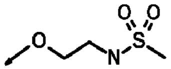 | 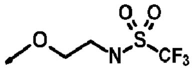 | 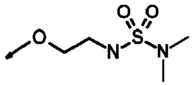 | 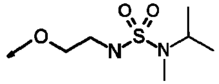 | 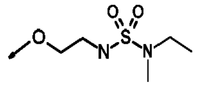 |
| Q-411 | Q-412 | Q-413 | Q-414 | Q-415 |
| 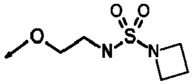 | 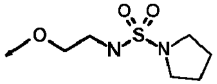 | 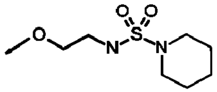 | 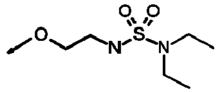 | 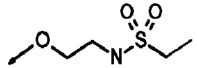 |
| Q-416 | Q-417 | Q-418 | Q-419 | Q-420 |
| | | | | |
| 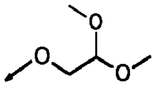 | 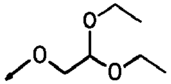 | 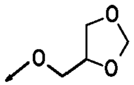 | 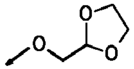 | 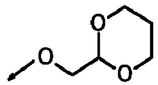 |
| Q-421 | Q-422 | Q-423 | Q-424 | Q-425 |
| | | | | |
| 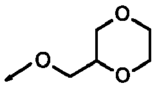 | 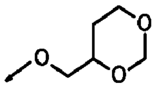 | 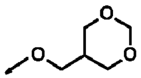 | 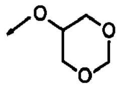 | 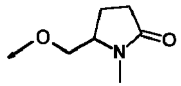 |
| Q-426 | Q-427 | Q-428 | Q-429 | Q-430 |
| | | | | |
| 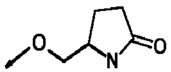 | 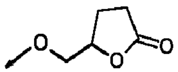 | 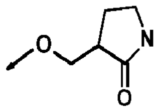 | 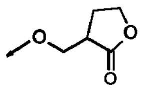 | 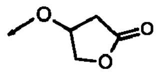 |
| Q-431 | Q-432 | Q-433 | Q-434 | Q-435 |
| | | | | |
| 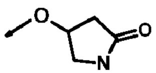 | 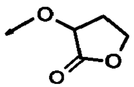 | 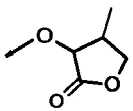 | 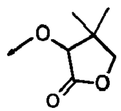 | 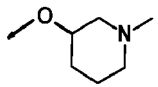 |
| Q-436 | Q-437 | Q-438 | Q-439 | Q-440 |

(continued)

| | | | | |
|---|---|---|---|---|
| 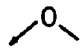 | 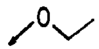 | 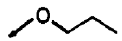 | 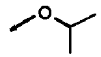 | 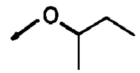 |
| Q-441 | Q-442 | Q-443 | Q-444 | Q-445 |
| | | | | |
| 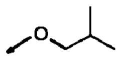 | 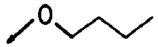 | 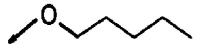 | 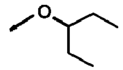 | 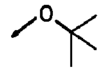 |
| Q-446 | Q-447 | Q-448 | Q-449 | Q-450 |
| | | | | |
| 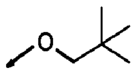 | 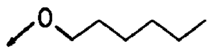 | 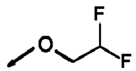 | 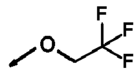 | 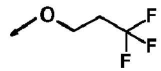 |
| Q-451 | Q-452 | Q-453 | Q-454 | Q-455 |
| | | | | |
| 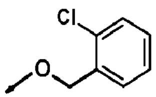 | 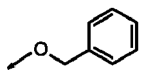 | 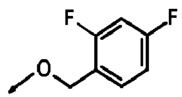 | 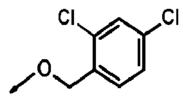 | 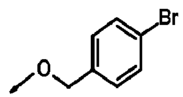 |
| Q-456 | Q-457 | Q-458 | Q-459 | Q-460 |
| 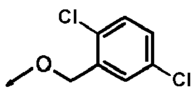 | 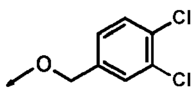 | 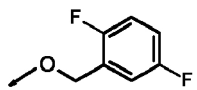 | 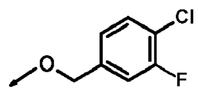 | 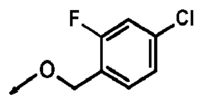 |
| Q-461 | Q-462 | Q-463 | Q-464 | Q-465 |
| | | | | |
| 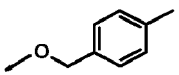 | 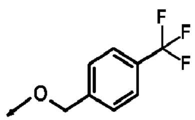 | 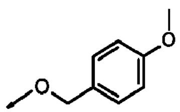 | 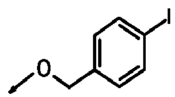 | 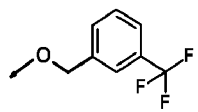 |
| Q-466 | Q-467 | Q-468 | Q-469 | Q-470 |

(continued)

| | | | | |
|---|---|---|---|---|
| 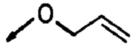 | 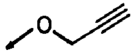 | 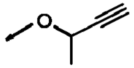 | 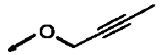 | 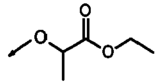 |
| Q-471 | Q-472 | Q-473 | Q-474 | Q-475 |
| | | | | |
| 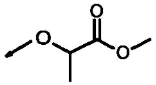 | 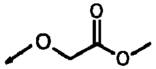 | 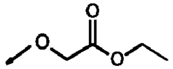 | 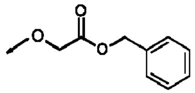 | 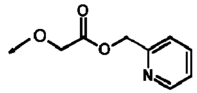 |
| Q-476 | Q-477 | Q-478 | Q-479 | Q-480 |
| | | | | |
| 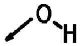 | 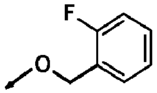 | 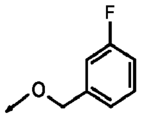 | 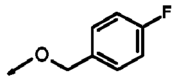 | 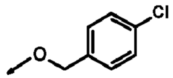 |
| Q-481 | Q-482 | Q-483 | Q-484 | Q-485 |
| | | | | |
| 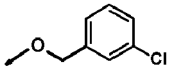 | 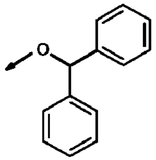 | 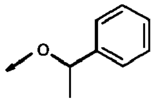 | 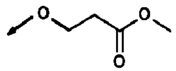 | 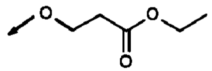 |
| Q-486 | Q-487 | Q-488 | Q-489 | Q-490 |
| | | | | |
| 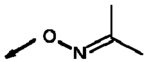 | 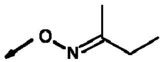 | 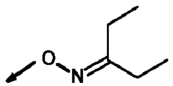 | 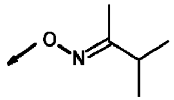 | 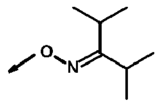 |
| Q-491 | Q-492 | Q-493 | Q-494 | Q-495 |

(continued)

| | | | | |
|---|---|---|---|---|
| 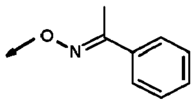 | 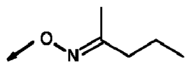 | 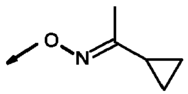 | 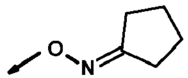 | 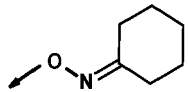 |
| Q-496 | Q-497 | Q-498 | Q-499 | Q-500 |

**3.** Composition according to Claim 1 or 2, wherein compound (A) is one or more active ingredient(s) selected from the group consisting of

methyl 2-{ [(E)-{2-chloro-4-fluoro-5-[3-methyl-2,6-dioxo-4-(trifluoromethyl)-3,6-dihydropyrimidin-1(2H)-yl]benzylidene} amino] oxy }propanoate (A1),
methyl (2R)-2-{[(E)-{2-chloro-4-fluoro-5-[3-methyl-2,6-dioxo-4-(trifluoromethyl)-3,6-dihydropyrimidin-1 (2H)-yl]benzylidene } amino] oxy }propanoate (A2),
methyl (2S)-2-{[(E)-{2-chloro-4-fluoro-5-[3-methyl-2,6-dioxo-4-(trifluoromethyl)-3,6-dihydropyrimidin-1 (2H)-yl]benzylidene } amino] oxy }propanoate (A3),
methyl 2-{ [(Z)-{2-chloro-4-fluoro-5-[3-methyl-2,6-dioxo-4-(trifluoromethyl)-3,6-dihydropyrimidin-1 (2H)-yl]benzylidene } amino] oxy }propanoate (A4),
2-{[(Z)-{2-chloro-4-fluoro-5-[3-methyl-2,6-dioxo-4-(trifluoromethyl)-3,6-dihydropyrimidin-1(2H)-yl]benzylidene}amino]oxy}propanoic acid (A5),
ethyl 2-{[(E)-{2-chloro-4-fluoro-5-[3-methyl-2,6-dioxo-4-(trifluoromethyl)-3,6-dihydropyrimidin-1 (2H)-yl]benzylidene } amino] oxy }propanoate (A6),
ethyl (2R)-2-{[(E)-{2-chloro-4-fluoro-5-[3-methyl-2,6-dioxo-4-(trifluoromethyl)-3,6-dihydropyrimidin-1 (2H)-yl]benzylidene } amino] oxy }propanoate (A7),
ethyl (2S)-2-{[(E)-{2-chloro-4-fluoro-5-[3-methyl-2,6-dioxo-4-(trifluoromethyl)-3,6-dihydropyrimidin-1 (2H)-yl]benzylidene } amino] oxy }propanoate (A8),
2-{[(E)-{2-chloro-4-fluoro-5-[3-methyl-2,6-dioxo-4-(trifluoromethyl)-3,6-dihydropyrimidin-1(2H)-yl] benzylidene} amino] oxy }propanoic acid (A9),
(2R)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoic acid (A10),
(2S)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoic acid (A11),
methyl 2-{ [(E)-{2-chloro-4-fluoro-5-[3-methyl-2,6-dioxo-4-(trifluoromethyl)-3,6-dihydropyrimidin-1(2H)-yl]benzylidene}amino]oxy}-2-methylpropanoate (A12) ,
ethyl 2-{ [(E)-{2-chloro-4-fluoro-5-[3-methyl-2,6-dioxo-4-(trifluoromethyl)-3,6-dihydropyrimidin-1(2H)-yl]benzylidene}amino]oxy}-2-methylpropanoate (A13),
methyl 2-{ [(E)-{2-chloro-4-fluoro-5-[3-methyl-2,6-dioxo-4-(trifluoromethyl)-3,6-dihydropyrimidin-1(2H)-yl]benzylidene}amino]oxy}butanoate (A14),
methyl(2R)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}butanoate (A15),
methyl(2S)-2-{[(E)-{2-chloro-4-fluoro-5-[3-methyl-2,6-dioxo-4-(trifluoromethyl)-3,6-dihydropyrimidin-1(2H)-yl]benzylidene}amino] oxy}butanoate (A16),
2-{[(E)-{2-chloro-4-fluoro-5-[3-methyl-2,6-dioxo-4-(trifluoromethyl)-3,6-dihydropyrimidin-1(2H)-yl]benzylidene}amino]oxy}butanoic acid (A17),
(2R)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}butanoic acid (A18),
(2S)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}butanoic acid (A19),
ethyl 2-{ [(E)-{2-chloro-4-fluoro-5-[3-methyl-2,6-dioxo-4-(trifluoromethyl)-3,6-dihydropyrimidin-1(2H)-yl]benzylidene}amino]oxy}butanoate (A20),
methyl 2-({(E)-[2-chloro-5-(3,5-dimethyl-2,6-dioxo-4-sulfanylidene-1,3,5-triazinan-1-yl)-4-fluorobenzylidene] amino}oxy)propanoate (A21),
methyl (2R)-2-({(E)-[2-chloro-5-(3,5-dimethyl-2,6-dioxo-4-sulfanylidene-1,3,5-triazinan-1-yl)-4-fluorobenzylidene]amino}oxy)propanoate (A22),
methyl (2S)-2-({(E)-[2-chloro-5-(3,5-dimethyl-2,6-dioxo-4-sulfanylidene-1,3,5-triazinan-1-yl)-4-fluorobenzylidene] amino} oxy)propanoate (A23),
2-({(E)-[2-chloro-5-(3,5-dimethyl-2,6-dioxo-4-sulfanylidene-1,3,5-triazinan-1-yl)-4-fluorobenzylidene] amino }oxy)propanoic acid (A24),
(2R)-2-({(E)-[2-chloro-5-(3,5-dimethyl-2,6-dioxo-4-sulfanylidene-1,3,5-triazinan-1-yl)-4-fluorobenzylidene] amino }oxy)propanoic acid (A25),
(2S)-2-({(E)-[2-chloro-5-(3,5-dimethyl-2,6-dioxo-4-sulfanylidene-1,3,5-triazinan-1-yl)-4-fluorobenzylidene] amino }oxy)propanoic acid (A26),
ethyl 2-({(E)-[2-chloro-5-(3,5-dimethyl-2,6-dioxo-4-sulfanylidene-1,3,5-triazinan-1-yl)-4-fluorobenzylidene] amino}oxy)propanoate (A27),
ethyl (2R)-2-({(E)-[2-chloro-5-(3,5-dimethyl-2,6-dioxo-4-sulfanylidene-1,3,5-triazinan-1-yl)-4-fluorobenzylidene] amino}oxy)propanoate (A28),
ethyl (2S)-2-({(E)-[2-chloro-5-(3,5-dimethyl-2,6-dioxo-4-sulfanylidene-1,3,5-triazinan-1-yl)-4-fluorobenzylidene]amino}oxy)propanoate (A29),
methyl 2-{[(E)-{5-[3-amino-2,6-dioxo-4-(trifluoromethyl)-3,6-dihydropyrimidin-1(2H)-yl]-2-chloro-4-fluorobenzylidene}amino]oxy}propanoate (A30),
methyl (2R)-2-{[(E)-{5-[3-amino-2,6-dioxo-4-(trifluoromethyl)-3,6-dihydropyrimidin-1(2H)-yl]-2-chloro-4-fluorobenzylidene}amino]oxy}propanoate (A31),
methyl (2S)-2-{[(E)-{5-[3-amino-2,6-dioxo-4-(trifluoromethyl)-3,6-dihydropyrimidin-1(2H)-yl] -2-chloro-4-fluorobenzylidene}amino]oxy}propanoate (A32),
2-{[(E)-{5-[3-amino-2,6-dioxo-4-(trifluoromethyl)-3,6-dihydropyrimidin-1(2H)-yl]-2-chloro-4-fluorobenzylidene}amino]oxy}propanoic acid (A33),
(2R)-2-{[(E)-{5-[3-amino-2,6-dioxo-4-(trifluoromethyl)-3,6-dihydropyrimidin-1(2H)-yl]-2-chloro-4-fluorobenzylidene}amino]oxy}propanoic acid (A34),
(2S)-2-{[(E)-{5-[3-amino-2,6-dioxo-4-(trifluoromethyl)-3,6-dihydropyrimidin-1(2H)-yl]-2-chloro-4-fluorobenzylidene}amino]oxy}propanoic acid (A35),

**4.** Composition according any one of Claims 1 to 3, wherein compound (A) is one or more active ingredient(s) selected from the group consisting of

methyl 2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoate (A1),
methyl(2R)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoate (A2),
methyl(2S)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoate (A3),
ethyl 2-{ [(E)-{2-chloro-4-fluoro-5-[3-methyl-2,6-dioxo-4-(trifluoromethyl)-3,6-dihydropyrimidin-1(2H)-yl]benzylidene}amino]oxy}propanoate (A6),
ethyl (2R)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoate (A7),
ethyl (2S)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoate (A8),
2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoicacid (A9),
(2R)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoic acid (A10),
(2S)-2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoic acid (A11).

**5.** Composition according to any one of Claims 1 to 4, wherein compound (A) is one or more active ingredient(s) selected from the group consisting of

methyl 2-{[(E)-{2-chloro-4-fluoro-5-[3-methyl-2,6-dioxo-4-(trifluoromethyl)-3,6-dihydropyrimidin-1(2H)-yl]benzylidene}amino]oxy}propanoate (A1),
methyl (2R)-2-{[(E)-{2-chloro-4-fluoro-5-[3-methyl-2,6-dioxo-4-(trifluoromethyl)-3,6-dihydropyrimidin-1 (2H)-yl]benzylidene } amino] oxy }propanoate (A2),
methyl (2S)-2-{[(E)-{2-chloro-4-fluoro-5-[3-methyl-2,6-dioxo-4-(trifluoromethyl)-3,6-dihydropyrimidin-1(2H)-yl]benzylidene }amino]oxy}propanoate (A3).

**6.** Composition according to any one of Claims 1 to 5, comprising compound (A), flumioxazin and pyraflufen-ethyl.

**7.** Composition according to any one of Claims 1 to 6, comprising compounds (A) and (B) in a weight ratio of 50:1 to 1:50, preferably in a weight ratio of 10:1 to 1:10.

**8.** Composition according to any one of Claims 1 to 7, comprising one or more further components from the group comprising other kinds of active crop protection ingredients.

**9.** Composition according to any one of Claims 1 to 8, comprising one or more additives customary in crop protection.

**10.** Method of controlling harmful plants or for regulating the growth of plants, wherein the herbicically active compounds of the composition according to any one of Claims 1 to 9 are applied to the plants, plant parts, plant seeds or the area under cultivation.

**11.** Method according to Claim 10, wherein the herbicidally active compounds of the composition are applied jointly or separately by the pre-emergence method, the post-emergence method or by the pre- and post-emergence method to the plants, plant parts, plant seeds or the area under cultivation.

**12.** Method according to Claim 11, wherein the at least one compound (A) is applied at an application rate of 0.02 to 250 g of a.i./ha.

**13.** Method according to Claim 11, where the at least one compound (B) is applied at an application rate of 0.1 to 120 g a.i./ha.

**14.** Method according to any one of Claims 11 to 13 for controlling harmful plants by treatment before sowing of the crop plants and in plantation crops, and on uncultivated land.

**15.** Method according to any one of Claims 11 to 14, wherein the herbicidally active compounds of the composition are applied in the form of a herbicidal formulation comprising one or more additives customary in crop protection, optionally after dilution with water.

Europäisches Patentamt
European Patent Office
Office européen des brevets

# EUROPEAN SEARCH REPORT

Application Number
EP 22 20 1612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 3 167 434 A1 (QINGDAO KINGAGROOT CHEMICAL COMPOUND CO LTD [CN]) 15 July 2021 (2021-07-15)<br>* compounds 193, 193(R), 194, 194(R), 194(S), 196, 196(R) *<br>* Bridging paragraph; page 21 - page 22 *<br>* page 32, line 8 *<br>* page 166, line 27; table B1 *<br>* claim 8 *<br>* page 32, line 4 *<br>* page 22, lines 2-4 *<br>* page 25, lines 16-19 *<br>----- | 1-15 | INV.<br>A01N43/54<br>A01N43/56<br>A01N43/84<br>A01P13/00 |
| A | WO 2022/095816 A1 (QINGDAO KINGAGROOT CHEMICAL COMPOUND CO LTD [CN]) 12 May 2022 (2022-05-12)<br>* claim 1 *<br>----- | 1-15 | |
| | | | TECHNICAL FIELDS SEARCHED (IPC) |
| | | | A01N<br>A01P |

The present search report has been drawn up for all claims

| Place of search | Date of completion of the search | Examiner |
|---|---|---|
| Munich | 23 March 2023 | Davies, Maxwell |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 20 1612

This annex lists the patent family members relating to the patent documents cited in the above-mentioned European search report. The members are as contained in the European Patent Office EDP file on
The European Patent Office is in no way liable for these particulars which are merely given for the purpose of information.

23-03-2023

| Patent document cited in search report | Publication date | Patent family member(s) | Publication date |
|---|---|---|---|
| CA 3167434 A1 | 15-07-2021 | AU 2020420734 A1 | 18-08-2022 |
| | | BR 112022013644 A2 | 13-09-2022 |
| | | CA 3167434 A1 | 15-07-2021 |
| | | CL 2022001844 A1 | 20-01-2023 |
| | | CN 113105405 A | 13-07-2021 |
| | | CO 2021003873 A2 | 09-08-2021 |
| | | EP 4089078 A1 | 16-11-2022 |
| | | JP 2023510328 A | 13-03-2023 |
| | | KR 20220125795 A | 14-09-2022 |
| | | PE 20221831 A1 | 29-11-2022 |
| | | WO 2021139482 A1 | 15-07-2021 |
| WO 2022095816 A1 | 12-05-2022 | CN 114431236 A | 06-05-2022 |
| | | WO 2022095816 A1 | 12-05-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021139482 A
- WO 9107874 A
- EP 333131 A
- EP 269806 A
- EP 268554 A
- EP 174562 A
- EP 346620 A
- WO 9108202 A
- WO 9507897 A
- WO 2021105101 A
- EP 86750 A
- EP 94349 A
- EP 191736 A
- EP 0492366 A
- WO 200234048 A
- EP 0582198 A
- WO 9745016 A
- WO 9916744 A
- EP 365484 A
- CN 101838227
- WO 2004084631 A
- WO 2005015994 A
- WO 2005016001 A
- WO 2005112630 A
- WO 9838856 A
- WO 9827049 A
- WO 1999000020 A
- WO 2007023719 A
- WO 2007023764 A
- WO 199813361 A
- JP 60087254 A
- WO 2008131861 A
- WO 2008131860 A
- DE 3335514
- EP 30287 A
- DE 2906507
- US 5123951 A
- EP 2248421 A
- WO 2006043635 A
- WO 2003106457 A
- WO 2006003494 A
- WO 2010052161 A
- EP 2647626 A
- WO 2004099160 A
- JP 2010018586 A
- WO 2013144213 A
- WO 2010051926 A
- CN 103232431
- WO 2013050317 A1
- WO 2013162715 A2
- WO 2013162716 A2
- US 20140213448 A1
- CN 101337937 A
- CN 103109816 A
- WO 2012034403 A1
- WO 2011085575 A1
- CN 101337940 A
- CN 101715774 A
- CN 103524422 A
- CN 102391261 A
- US 20140275503 A1
- WO 2007040280 A1
- WO 2007040282 A1
- WO 2015058021 A1
- WO 2015058028 A1
- CN 103265527 A
- WO 2013115391 A1
- WO 2014187846 A1
- WO 2010066780 A1
- WO 2011151146 A1
- WO 2011067272 A
- WO 2013050302 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- EP 309862 A
- EP 0464461 A
- EP 0305398 A

### Non-patent literature cited in the description

- *Weed Research,* 1986, vol. 26, 441-445
- The Pesticide Manual. The British Crop Protection Council and the Royal Soc. of Chemistry, 2006

- e-Pesticide Manual Version 4. 2006
- *CHEMICAL ABSTRACTS,* 41858-19-9
- *CHEMICAL ABSTRACTS,* 219479-18-2
- *CHEMICAL ABSTRACTS,* 95855-00-8
- *CHEMICAL ABSTRACTS,* 205121-04-6
- *CHEMICAL ABSTRACTS,* 31541-57-8
- *CHEMICAL ABSTRACTS,* 96420-72-3
- *CHEMICAL ABSTRACTS,* 133993-74-5
- *CHEMICAL ABSTRACTS,* 54091-06-4
- *CHEMICAL ABSTRACTS,* 1398-61-4
- *CHEMICAL ABSTRACTS,* 9012-76-4
- *CHEMICAL ABSTRACTS,* 885026-50-6
- *CHEMICAL ABSTRACTS,* 637360-23-7
- *CHEMICAL ABSTRACTS,* 872999-66-1
- *CHEMICAL ABSTRACTS,* 1225292-17-0
- *CHEMICAL ABSTRACTS,* 1440516-42-6
- *CHEMICAL ABSTRACTS,* 792914-58-0
- *CHEMICAL ABSTRACTS,* 1204776-60-2
- *CHEMICAL ABSTRACTS,* 1461743-15-6
- *CHEMICAL ABSTRACTS,* 1226889-14-0
- *CHEMICAL ABSTRACTS,* 1449220-44-3
- *CHEMICAL ABSTRACTS,* 1332628-83-7
- *CHEMICAL ABSTRACTS,* 1477923-37-7
- *CHEMICAL ABSTRACTS,* 1105672-77-2
- *CHEMICAL ABSTRACTS,* 1232543-85-9
- *CHEMICAL ABSTRACTS,* 1268277-22-0
- *CHEMICAL ABSTRACTS,* 1233882-22-8
- *CHEMICAL ABSTRACTS,* 1108184-52-6
- *CHEMICAL ABSTRACTS,* 1542271-46-4
- *CHEMICAL ABSTRACTS,* 1370358-69-2
- *CHEMICAL ABSTRACTS,* 1181213-14-8
- *CHEMICAL ABSTRACTS,* 1253850-56-4
- *CHEMICAL ABSTRACTS,* 933798-27-7
- *CHEMICAL ABSTRACTS,* 934001-66-8
- *CHEMICAL ABSTRACTS,* 1477919-27-9
- *CHEMICAL ABSTRACTS,* 1452877-50-7
- *CHEMICAL ABSTRACTS,* 1449021-97-9
- *CHEMICAL ABSTRACTS,* 1638765-58-8
- *CHEMICAL ABSTRACTS,* 1229023-00-0
- *CHEMICAL ABSTRACTS,* 1309959-62-3
- **S.R. COLBY.** Calculating Synergistic and Antagonistic Responses of Herbicide Combinations. *Weeds,* 1967, vol. 15, 20-22
- Gene Transfer to Plants, Springer Lab Manual. Springer Verlag, 1995
- **CHRISTOU.** *Trends in Plant Science,* 1996, vol. 1, 423-431
- **SAMBROOK et al.** Molecular Cloning, A Laboratory Manual. Cold Spring Harbor Laboratory Press, 1989
- **WINNACKER.** Gene und Klone" [Genes and Clones. VCH, 1996
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- **WINNACKER-KÜCHLER.** Chemische Technologie" [Chemical Technology. C. Hanser Verlag, 1986, vol. 7
- **VAN VALKENBURG.** Pesticide Formulations. Marcel Dekker, 1973
- **K. MARTENS.** Spray Drying" Handbook. G. Goodwin Ltd, 1979
- **WATKINS.** Handbook of Insecticide Dust Diluents and Carriers. Darland Books
- **H.V. OLPHEN.** Introduction to Clay Colloid Chemistry. J. Wiley & Sons
- **MARSDEN.** Solvents Guide. Interscience, 1963
- McCutcheon's "Detergents and Emulsifiers Annual. MC Publ. Corp,
- **SISLEY ; WOOD.** Encyclopedia of Surface Active Agents. Chem. Publ. Co. Inc, 1964
- **SCHONFELDT.** Grenzflächenaktive Äthylenoxidaddukte" ["Interface-active Ethylene Oxide Adducts. Wiss. Verlagsgesellschaft, 1976
- **WINNACKER-KÜCHLER.** Chemische Technologie. C. Hanser Verlag, 1986, vol. 7
- **S. R. COLBY.** *Weeds,* 1967, vol. 15, 20-22